(19) Europäisches Patentamt
European Patent Office
Office européen des brevets

(11) EP 1 367 141 A1

(12) EUROPEAN PATENT APPLICATION
published in accordance with Art. 158(3) EPC

(43) Date of publication:
**03.12.2003 Bulletin 2003/49**

(21) Application number: **02700645.1**

(22) Date of filing: **20.02.2002**

(51) Int Cl.[7]: **C22B 1/16**

(86) International application number:
**PCT/JP02/01507**

(87) International publication number:
**WO 02/066688 (29.08.2002 Gazette 2002/35)**

(84) Designated Contracting States:
**AT BE CH CY DE DK ES FI FR GB GR IE IT LI LU MC NL PT SE TR**

(30) Priority: **22.02.2001 JP 2001047336**
**07.09.2001 JP 2001272455**
**07.09.2001 JP 2001272481**

(71) Applicants:
- **NIPPON STEEL CORPORATION Tokyo 100-8071 (JP)**
- **Nippon Shokubai Co., Ltd. Osaka-shi, Osaka 541-0043 (JP)**

(72) Inventors:
- **OKADA, Tsutomu, c/o NIPPON STEEL CORPORATION Futtsu-shi, Chiba 293-8511 (JP)**
- **HOSOTANI, Yohzoh, c/o NIPPON STEEL CORPORATION Futtsu-shi, Chiba 293-8511 (JP)**
- **OKAZAKI, Jun, c/o NIPPON STEEL CORPORATION Futtsu-shi, Chiba 293-8511 (JP)**
- **SHINAGAWA, Kazuyuki, c/o NIPPON STEEL CORPORATION Kitakyushu-shi, Fukuoka 804-8501 (JP)**
- **SUZUKI, Haruhisa, c/o NIPPON STEEL CORPORATION Tokai-shi, Aichi 476-8686 (JP)**
- **KONO, Katsuyuki Shiga-gun, Shiga 520-0532 (JP)**
- **MOTOYAMA, Atsushi Akashi-shi, Hyogo 674-0094 (JP)**
- **NAKAMOTO, Keiichi Takatsuki-shi, Osaka 569-0854 (JP)**
- **MIURA, Satoru Suita-shi, Osaka 564-0024 (JP)**

(74) Representative: **Müller, Frithjof E., Dipl.-Ing.
Müller Hoffmann & Partner
Patentanwälte
Innere Wiener Strasse 17
81667 München (DE)**

# (54) METHOD OF GRANULATION TREATMENT OF RAW MATERIAL FOR IRON MAKING AND GRANULATION TREATMENT AGENT FOR IRON MAKING

(57) Granulation treatment (pseudo-granulation or pelletization) of a composition for granulation treatment is carried out, the composition for granulation treatment being so prepared that an amount of fine particles floating in water will be not less than 2weight% of the solids of the composition for granulation treatment after a predetermined time since the composition for granulation treatment including, in a predetermined ratio, raw materials (raw materials for sinter or pellet materials) for iron and steel making is dispersed in water. This provides a method of carrying out granulation treatment of the raw materials for iron and steel making, which is suitable for use in the granulation treatment of the raw materials for iron and steel making, and the pseudo-granulation or the pelletization.

EP 1 367 141 A1

## Description

TECHINICAL FIELD

The present invention relates to (i) a method of manufacturing sinter which is raw materials for iron and steel making or (ii) a method of manufacturing pellets, and particularly to a method of carrying out a granulation treatment on the raw materials for iron and steel making and a granulation treatment agent for iron and steel making, which are suitably used for granulating the raw material by adjusting the water content thereof so as to pelletize or pseudo-granulate the raw material.

BACKGROUND ART

To manufacture sinter, first of all, raw materials for sinter such as iron ore, Flux, and fuels are mixed so as to be granulated by adjusting the water content using a granulating machine such as a drum mixer, a pelletizer, and an Eirich mixer, so that pseudo-particles are manufactured. Each of the pseudo-particles is generally composed of a core particle 1-3mm in diameter and fine particles not more than 0.5mm in diameter adhering to the core particle. In this case, what are required in the granulation is to improve the pseudo-granulating property which is a property of adhesion of the fine particles to the core particle, to make the pseudo-particles resistant to disintegration in a wetting zone and a drying zone in the sintering process, etc. Converting the raw materials for sinter into the pseudo-particles enables to improve the permeability of a raw material for sinter filling layer (sintering bed) on a sintering machine, and hence the productivity of the sintering machine can be improved.

The sintering machine which is for sintering the raw materials for sinter adopts a down suction method so that the air necessary for the sintering is put into circulation by being sucked from the lower side of the raw materials for sinter, and the fuels are burned from the upper side to the lower side of the raw materials for sinter so that the raw materials for sinter are sintered. For this reason, provided that the raw materials for sinter include a lot of fine particles, the permeability decreases due to the clogging, etc., so that the burning rate of cokes, which are the fuels, is lowered and thus the productivity of the sintering machine is decreased. For this reason, it is necessary to carry out preliminary treatments such as the granulation (pseudo-granulation) of the raw materials for sinter, in order to improve the permeability. As one of the preliminary treatments, for instance, an operation of granulation by adding a small amount of water to the raw materials for sinter so as to stir them have been carried out. However, since this operation of granulation only using water does not sufficiently improve the pseudo-granulating property, it is not possible to adequately reduce the amount of the fine particles in the raw materials for sinter.

For this reason, to improve the pseudo-granulating property, methods of adding various granulation additives as binders to the raw materials for sinter have conventionally been proposed. There are many types of substances to be used as the granulation additives, namely, for instance, bentonite, lignin sulfite salt (pulp spent liquor), starch, sugar, molasses, liquid glass, cement, gelatin, cornstarch, etc. have been considered to be used as bonding agents or thickening agents.

Japanese Laid-Open Patent Application No. 59-50129/1984 (Tokukaisho 59-50129; published on March 23, 1984) discloses a method of preliminary treatment of the raw materials for sinter using water including a dispersant having predetermined concentration and/or a surfactant having predetermined concentration, and as dispersants, the publication discloses acrylic acid polymer, maleic acid polymer, styrenesulfonate polymer, etc. which are of average molecular weight of 2000-20000.

Also, Japanese Laid-Open Patent Application No. 61-61630/1986 (Tokukaisho 61-61630; published on March 29, 1986) discloses a binder for manufacturing sinter, including a water-soluble polymer compound such as a maleic acid polymer which is of average molecular weight of 500-300000.

However, these publications still have the problem of insufficient pseudo-granulating property in the manufacturing of sinter, so that even if the amount of fine particles in the raw materials for sinter can be reduced, the amount of the reduction is not sufficient and also the disintegration of pseudo-particles is unavoidable in conditions such as during the transportation and in a water condensation zone of the sintering bed. For these reasons, there are problems such that a relatively large amount of the binder must be added so that high costs are required, and acquiring the required amount of the binder is difficult, and hence the method and the agent disclosed by these publications have not been put into practical use.

In addition, Japanese Laid-Open Patent Application No. 52-117820/1977 (Tokukaisho 52-117820; published on October 3, 1977) and Japanese Laid-Open Patent Application No. 3-183729 (Tokukaihei 3-183729; published on August 9, 1991) indicate the addition of fine particles such as iron ore, calcium carbonate, etc. However, since these publications cannot avoid the problem of insufficient pseudo-granulating property, they have not been put into practical use as well.

A granulation additive which has been broadly put into practical use is such as, for instance, burnt lime which

is disclosed in "Seitetsu Kenkyu" (1976); issue No. 288; page 9. According to this publication, the effects of the use of burnt lime are as follows: Firstly, it is possible to promote the pseudo-granulation in the mixer, and secondly, in a sintering process after filling the raw materials for sinter made of pseudo-particles to a predetermined height and then forming a sintering bed and then firing the surface layer, the disintegration of the pseudo-particles in the processes of drying and heating can be prevented, so that it is possible to keep the air flow in a sintering layer to be uniform.

In the meantime, in the manufacturing of pellets, after mixing materials such as iron ore, dust, and charcoal, the granulation is carried out by adjusting the water content using a granulating machine such as a pelletizer. The pellets are generally particles each constructed such that particles not more than 1.0mm in diameter are spherically gathered so as to form particles 6.0-50mm in diameter. In this case, what are required in the granulation are to keep the strength of the pellets before the drying to be high, to prevent the powderization of the pellets due to the degradation during the drying process and a transportation process, etc. To improve the strength of the pellets, there has conventionally been a method of manufacturing the pellets, which is arranged in such a manner that, to materials in the state of fine particles, more than 1weight% of bentonite is added as a granulation additive, and after kneading them, the operation of granulation is carried out while spraying an appropriate amount of water, so that the pellets are manufactured. The pellets in this description are to be raw materials for blast furnace, raw materials for sinter, raw materials for converter, etc., therefore the manufacturing method, etc. of the pellets are not limited to any particular ones.

However, in the manufacturing of sinter, the use of binders such as burnt lime and molasses generally costs a lot and this results in the increase of the manufacturing costs. Moreover, even though the granulation using burnt lime has been put into practical use, burnt lime is apt to absorb moisture and generate heat so that careful handling of the same is required. Furthermore, in order to acquire satisfactory effects, it is required to use a relatively large amount of the burnt lime which has currently been used, and this results in the increase of the costs. On this account, the least possible amount of the burnt lime has been used for the operation under present circumstances. Also, even if not less than 2weight% of burnt lime is added, the pseudo-granulating property is not improved so much.

Moreover, in conjunction with the recent depletion of good lump ore, the quality of powder ore has significantly been degraded, so that the granulating property of raw materials for sinter has become worse. On this account, the granulation with the addition of burnt lime has become less effective. Furthermore, binders other than burnt lime do not produce sufficient effects of (i) reducing the amount of fine particles included in the raw materials for sinter, (ii) shortening the sintering time by improving the permeability of the sintering bed, and (iii) keeping the sinter strength of the acquired sinter high. Since the sinter with low sinter strength is apt to produce fine particles on the occasion of crushing after the sintering, the rejection rate of the ore is high and hence the product yield and the productivity are decreased. For this reason, methods of granulation using binders other than burnt lime have not been put into practical use.

Also, even the method using burnt lime does not produce sufficient effect of reducing the amount of fine particles in the raw materials for sinter. Although there have been attempts to use burnt lime and binders other than the same concurrently, there is still no well-known binder other than burnt lime, which can adequately reduce the amount of fine particles in the raw materials for sinter.

Therefore, an inexpensive method of granulation, which can improve the pseudo-granulating property and the productivity of the sintering machine, has been required. Also, an inexpensive granulation treatment agent for iron and steel making, which can improve the pseudo-granulating property and the productivity of the sintering machine, is required, i.e. an inexpensive binder which can be suitably used for granulating the raw materials for sinter has been required.

In the meantime, in the manufacturing of pellets, the use of bentonite causes the necessity to add a large amount of water on the occasion of granulation due to the swelling of the bentonite. Thus, the pellets before drying are soft so as to be apt to deform, and hence gas permeability thereof deteriorates on the occasion of the drying process, so that it takes long time to sufficiently carry out the drying, and the strength of the pellets is decreased. Moreover, since bentonite includes lots of impurities such as silicon, slag in molten pig iron and molten steel increases.

The present invention is done to solve the above-mentioned problems, so that the objective of the present invention is to provide a method of granulation treatment for raw material for iron and steel making and a granulation treatment agent for iron and steel making, which are inexpensive and suitably used for granulating the raw material so as to pelletize or pseudo-granulate the same.

## DISCLOSURE OF THE INVENTION

The inventors of the present invention have diligently worked on in order to achieve the above-mentioned objective. As a result, the inventors of the present invention have found that, on the occasion of granulating raw materials for iron and steel making, i.e. the raw materials including iron ore in the state of fine particles, it is possible to: significantly improve the pseudo-granulating property; increase the strength of pseudo-particles; improve the permeability on the occasion of sintering; and increase the productivity of a sintering machine, by steadily dispersing fine particles in the

water existing on the occasion of granulation, for instance, added water and water content which is introduced by the raw materials.

Moreover, the inventors of the present invention have diligently worked on in order to provide a granulation treatment agent for iron and steel making having granulation effects better than conventional granulation treatment agents for iron and steel making, i.e. has excellent effects of improving the pseudo-granulating property, and a method of carrying out a granulation treatment. As a result, the inventors of the present invention have found that the raw materials are subjected to the granulation treatment using a granulation treatment agent including a predetermined polymer compound as an essential ingredient, so that it is possible to acquire granulation effects significantly better than those of conventional methods.

Furthermore, the inventors of the present invention have found that the ζ potential of fine particles and the granulating property of the fine particles, which are measured in a predetermined condition, have correlation to each other, and then the inventors of the present invention have found that fine particles, whose ζ potential is not more than -55mV according to a ζ potential test by an electrophoresis light scattering method, has good dispersion stability in water so that the pseudo-granulating property of the raw materials for iron and steel making can be significantly improved. Moreover, the inventors of the present invention have found that, when fine particles added to the raw materials and a fine particle adjuvant capable of adjusting the ζ potential of the fine particles are selected so that the ζ potential of the fine particles, measured by a ζ potential test by an electrophoresis light scattering method, may be not more than -55mV, it is possible to acquire good results of granulation on the occasion of actually carrying out the granulation treatment of the raw materials for iron and steel making.

Moreover, the inventors of the present invention have found that, when a granulation agent for iron and steel making, which can acquire a good result at the time of measuring the adhesion in a predetermined condition, is selected, it is possible to acquire a good pseudo-granulating property on the occasion of actually carrying out the granulation. Then the inventors of the present invention have found that, when, as the above-mentioned granulation agent, a granulation agent, which includes a polymer compound and whose cohesive force evaluated value measured by a cohesive force test is not less than 1.2, is adopted, it is possible to: acquire good pseudo-granulating property on the occasion of actually carrying out the granulation; reduce the amount of fine particles included in the raw materials for sinter; keep the strength of the acquired sinter to be high; and improve the productivity of a sintering machine.

Furthermore, as a result of diligent work of the inventors of the present invention, the inventors have found that the granulation treatment of concurrently using a polymer component and fine particles not more than 200µm in average diameter produces particularly good effects of acquiring high pseudo-granulating property and improving the productivity of a sintering machine.

Then the inventors of the present invention have found that meeting at least one of the above-mentioned conditions enables to acquire good pseudo-granulating property and carry out the granulation of the raw materials for iron and steel making so as to pseudo-granulate or pelletize the same.

Namely, in order to attain the foregoing object, a method of carrying out a granulation treatment on raw materials for iron and steel making according to the present invention is characterized by comprising the steps of compounding a composition for granulation treatment containing the raw materials for iron and steel making so that when the composition for granulation treatment is dispersed in water at a predetermined proportion, an amount of fine particles floating in water after a predetermined period of time has elapsed is not less than 2weight% of the solids of the composition used for granulation treatment, and carrying out a granulation treatment on the composition for granulation treatment.

Further, in order to attain the foregoing objective, a method of carrying out a granulation treatment on raw materials for iron and steel making according to the present invention is characterized by comprising the steps of adding a dispersant to a composition for granulation treatment containing the raw materials for iron and steel making so that when the composition for granulation treatment is dispersed in water at a predetermined proportion, an amount of fine particles floating in water after a predetermined period of time has elapsed is not less than 2weight% of the solids of the composition used for granulation treatment, and carrying out a granulation treatment on the composition for granulation treatment.

Further, in order to attain the foregoing objective, a method of carrying out a granulation treatment on raw materials for iron and steel making according to the present invention is characterized by comprising the steps of adding fine particles not more than 200µm in average diameter to a composition for granulation treatment containing the raw materials for iron and steel making so that when the composition for granulation treatment is dispersed in water at a predetermined proportion, an amount of fine particles floating in water after a predetermined period of time has elapsed is not less than 2weight% of the solids of the composition used for granulation treatment, and carrying out a granulation treatment on the composition for granulation treatment.

Further, in order to attain the foregoing object, a method of carrying out a granulation treatment on raw materials for iron and steel making according to the present invention is characterized by comprising the steps of adding fine particles not more than 200µm in average diameter and a dispersant to a composition for granulation treatment

containing the raw materials for iron and steel making so that when the composition for granulation treatment is dispersed in water at a predetermined proportion, an amount of fine particles floating in water after a predetermined period of time has elapsed is not less than 2weight% of the solids of the composition used for granulation treatment, and carrying out a granulation treatment on the composition for granulation treatment.

The method of carrying out the granulation treatment on raw materials for iron and steel making is preferably arranged so that the dispersant is a polymer compound including an acid group and/or its salts. Further, the fine particles are preferably at least one type of fine particles selected from the group consisting of iron ore, Flux for steel, limestone, kaolin clay, bentonite, dust produced in a steel-making plant, fly ash, fumed silica, and anhydrite.

With the above-mentioned method of carrying out the granulation treatment on raw materials for iron and steel making, on the occasion of a granulation treatment (pseudo-granulation or pelletization) on the raw materials for iron and steel making (raw materials for sinter or pellet materials) including iron ore in the form of fine particles, it is possible to achieve excellent effects of adhering fine particles around core particles so as to facilitate the formation of pseudo-particles having good permeability, and to increase the strength of granulated product so as to reduce the disintegration of the pseudo-particles in a sintering bed. This improves the permeability of the sintering layer on the occasion of sintering, and increases the productivity of a sintering machine.

Further, in order to attain the foregoing object, a granulation treatment agent for iron and steel making according to the present invention, which is used for subjecting raw materials for iron and steel making to a granulation treatment, the raw materials including iron ore in a form of fine particles, is characterized by including a water-soluble polymer compound having clay dispersion force not less than 0.5.

Further, in order to attain the foregoing object, a granulation treatment agent for iron and steel making according to the present invention, which is used for subjecting raw materials for iron and steel making to a granulation treatment, the raw materials including iron ore in a form of fine particles is characterized by comprising a polymer compound (I) including a carboxyl group and/or its salts, (II) whose number average molecular weight is within a range of not less than 500 to not more than 20000, and (III) whose polydispersity indicated by an weight average molecular weight/the number average molecular weight is within a range of not less than 1.2 to not more than 12.0.

The polymer compound used for the granulation treatment agent for iron and steel making according to the foregoing arrangement is preferably at least one type of a compound selected from the group consisting of (i) a polyacrylic acid and (ii) a polyacrylic salt which is a part of or whole of a carboxyl group, which is included in the polyacrylic acid, being neutralized by one of substances selected from the group consisting of sodium, potassium, calcium, and ammonia.

The above-mentioned polymer compounds have excellent effects of adhering fine particles around core particles on the occasion of a granulation treatment (pseudo-granulation or pelletization) on the raw materials for iron and steel making (raw materials for sinter or pellet materials) including iron ore in a form of fine particles, thereby increasing the productivity of a sintering machine. Consequently, with the above-mentioned arrangement, it is possible to provide a granulation treatment agent for iron and steel making at low cost.

Further, in order to attain the foregoing object, a method of carrying out a granulation treatment on raw materials for iron and steel making according to the present invention, the raw materials including iron ore in a form of fine particles, is characterized in that the granulation treatment agent is added to the raw materials.

Consequently, it is possible to provide a method of carrying out a granulation treatment that is suitable for carrying out a granulation treatment (pseudo-granulation or pelletization) on the raw materials for iron and steel making (raw materials for sinter or pellet materials) including iron ore in a form of fine particles, so as to obtain sinter.

Further, in order to attain the foregoing object, a granulation treatment agent for iron and steel making according to the present invention, which is used for subjecting raw materials for iron and steel making to a granulation treatment, the raw materials including iron ore in a form of fine particles, is characterized by comprising a polymer compound selected from at least one type of a compound selected from the group consisting of: a polymer compound including an acid group and a polyalkylene glycol chain; a β-naphthalene sulfonate formalin condensate; a melamine sulfonate formalin condensate; a poly-aromatic amino sulfonic acid; and denatured lignin sulfonate.

Further, in order to attain the foregoing object, a granulation treatment agent for iron and steel making according to the present invention, which is used for subjecting raw materials for iron and steel making to a granulation treatment, the raw materials including iron ore in a form of fine particles, is characterized by comprising a polymer compound including an acid group and a polyalkylene glycol chain.

The acid group included in the polymer compound is preferably a carboxyl group and/or its salts. Further, the polyalkylene glycol chain included in the polymer compound preferably includes a structural unit derived from polyethylene glycol.

The above-mentioned polymer compounds also have excellent effects of adhering fine particles around core particles on the occasion of a granulation treatment (pseudo-granulation or pelletization) on the raw materials for iron and steel making (raw materials for sinter or pellet materials) including iron ore in the form of fine particles, thereby increasing the productivity of a sintering machine. Consequently, with the above-mentioned arrangement, it is possible

to provide a granulation treatment agent for iron and steel making at low cost.

Further, in order to attain the foregoing object, a method of carrying out a granulation treatment on raw materials for iron and steel making according to the present invention is characterized in that the granulation treatment agent is added to the raw materials.

Consequently, it is possible to provide a method of carrying out a granulation treatment that is suitable for carrying out a granulation treatment (pseudo-granulation or pelletization) on the raw materials for iron and steel making (raw materials for sinter or pellet materials) including iron ore in the form of fine particles, so as to obtain sinter.

Further, in order to attain the foregoing object, a method of carrying out a granulation treatment on raw materials for iron and steel making according to the present invention is characterized in that fine particles, whose ζ potential is not more than -55mV according to ζ potential test by an electrophoresis light scattering method, is added to the raw materials.

Further, in order to attain the foregoing object, a method of carrying out a granulation treatment on raw materials for iron and steel making according to the present invention is characterized in that fine particles and a fine particle adjuvant for adjusting a ζ potential of the fine particles are selected so as to be added to the raw materials, so that the ζ potential is not more than -55mV according to ζ potential measurement by an electrophoresis light scattering method.

The fine particles, whose ζ potential is not more than -55mV according to the ζ potential test, has excellent dispersion stability in water. Accordingly, with the above-mentioned method, it is possible to obtain a sufficient amount of fine-particle-dispersed water as a binder, and to increase the amount of the fine articles in the fine-particle-dispersed water, without increasing added water. Therefore, according to the present invention, it is possible to improve pseudo-granulating property, so as to dramatically decrease the amount of the fine articles after the granulation in spite of the addition of the fine articles. Consequently, with the above-mentioned method, it is possible to provide a method of carrying out a granulation treatment that is suitable for carrying out a granulation treatment (pseudo-granulation or pelletization) on the raw materials for iron and steel making (raw materials for sinter or pellet materials) including iron ore in a form of fine particles, so as to obtain sinter.

The method of carrying out the granulation treatment on raw materials for iron and steel making is preferably arranged so that the fine particle adjuvant includes a polymer compound including an acid group and/or its salts. Since the polymer compound including an acid group and/or its salts has excellent effects of lowering the ζ potential of the fine particles according to the ζ potential measurement and excellent effects of improving the dispersion stability of the fine particles, it is possible to achieve excellent pseudo-granulation property, with the small amount of polymer compound. Further, the polymer compound dissolves aggregates of the fine particles which are added later to the row materials for iron and steel making, as well as aggregates of fine articles not more than 200μm that are slightly contained in compounded row materials, so as to disperse the fine particles into water. Consequently, with the above-mentioned method, it is possible to further improve the pseudo-granulating property.

Further, the method of carrying out the granulation treatment on raw materials for iron and steel making is preferably arranged so that an amount of the fine particles added to the raw materials is within a range of not less than 0.01weight% to not more than 30weight%. With this method, it is possible to increase the amount of the fine particles in the fine-particle-dispersed water without lowering the permeability or increasing waste such as slag. Consequently, it is possible to provide the method of carrying out the granulation treatment on raw materials for iron and steel making having excellent effects of facilitating pseudo-granulation.

Further, in order to attain the foregoing object, a method of carrying out a granulation treatment according to the present invention is characterized in that a granulation agent for iron and steel making, which includes a polymer compound and whose cohesive force evaluated value acquired by cohesive force test is not less than 1.2, is added to the raw materials.

With the above-mentioned method, a granulation. agent for iron and steel making is selected so that a cohesive force evaluated value acquired by a cohesive force test is not less than 1.2, and the selected granulation agent for iron and steel making is added to the raw materials for iron and steel making so as to carry out the granulation treatment. With this, it is possible to provide a method of carrying out a granulation treatment that is suitable for carrying out a granulation treatment (pseudo-granulation or pelletization) on the raw materials for iron and steel making (raw materials for sinter or pellet materials) including iron ore in a form of fine particles, so as to obtain sinter, with good effects of lowering the amount of the fine articles contained in the raw materials for sinter and improving the productivity of a sintering machine.

Further, in order to attain the foregoing object, a method of carrying out a granulation treatment on raw materials for iron and steel making according to the present invention is characterized in that a polymer compound and fine particles not more than 200μm in average diameter are selected so as to be added to the raw materials, so that a cohesive force evaluated value acquired by a cohesive force test is not less than 1.2.

With the foregoing method, by filling fine particles not more than 200μm in average diameter, and using granulation treatment agent using the polymer compound, essentially, it is possible to prevent the aggregation of the fine

particles in the fine-particle-dispersed water, and to obtain a sufficient amount of fine-particle-dispersed water as a binder without increasing added water. This remarkably improves pseudo-granulating property and the strength of the pseudo-particles after the granulation. Consequently, it is possible to dramatically increase the productivity of the sintering machines and the product yield.

The method of carrying out the granulation treatment on raw materials for iron and steel making is preferably arranged so that the polymer compound is a polymer compound including an acid group and/or its salts.

With the foregoing method, by carrying out the granulation treatment using the polymer compound, it is possible to remarkably increase pseudo-granulating property and the strength of the pseudo-particles after the granulation. Consequently, it is possible to further increase the product yield and the productivity of the sintering machines.

The invention is now described in more detail.

As previously noted, the present invention, if matched with at least one of the methods for the granulation treatment of raw materials for iron and steel making, can achieve a good pseudo-granulating property. Therefore, at least any one of the conditions (features) described in the methods for the granulation treatment of raw materials for iron and steel making needs be satisfied; preferably, two or more of the conditions (features) are satisfied; and most preferably, all of them are satisfied.

The following will describe more specifically the method for the granulation treatment of raw materials for iron and steel making and granulation treatment agents for iron and steel making for use in the methods by means of embodiment, the present invention is not limited to the embodiments below, but may be altered within the meets and bounds of the claims. An embodiment based on a proper combination of technical means disclosed in different embodiments is encompassed in the technical scope of the present invention.

[Embodiment 1]

A method of granulation treatment of raw materials for iron and steel making of the present embodiment is a method of granulation treatment (pseudo-granulation or pelletization) of raw materials for iron and steel making (raw materials for sinter or pelletizing materials) through mixing, adjusting a water content, and the like, wherein a composition for granulation treatment containing the raw materials for iron and steel making is compounded in such a manner that when the composition is dispersed in water at a predetermined proportion, the amount of fine particles floating in water after a predetermined period of time has elapsed is not less than 2weight% of the solids of the composition used for granulation treatment. That is, the composition for granulation treatment refers to a finished composition for granulation treatment which is raw materials for iron and steel making completely compounded containing at least a granulation agent, etc. and which will be subjected to a granulation treatment (hereinafter, a "finished composition for granulation treatment).

The methods described below are concrete examples of the method of granulation treatment of raw materials for iron and steel making of the present embodiment.

A first method of granulation treatment of raw materials for iron and steel making of the present embodiment is a method of granulation treatment (pseudo-granulation or pelletization) of raw materials for iron and steel making (raw materials for sinter or pelletizing materials) through mixing, adjusting a water content, and the like, wherein the granulation treatment is carried out on a composition for granulation treatment containing the raw materials for iron and steel making obtained by adding (compounding) a dispersant to the raw materials for iron and steel making in such a manner that when the composition for granulation treatment containing the raw materials for iron and steel making is dispersed in water at a predetermined proportion, the amount of fine particles floating in water after a predetermined period of time has elapsed is not less than 2weight% of the solids of the composition used for granulation treatment.

A second method of granulation treatment of raw materials for iron and steel making of the present embodiment is a method of granulation treatment (pseudo-granulation or pelletization) of raw materials for iron and steel making (raw materials for sinter or pelletizing materials) through mixing, adjusting a water content, and the like, wherein the granulation treatment is carried out on a composition for granulation treatment containing the raw materials for iron and steel making obtained by adding (compounding) fine particles having an average diameter of 200μm or less to the raw materials for iron and steel making in such a manner that when the composition for granulation treatment containing the raw materials for iron and steel making is dispersed in water at a predetermined proportion, the amount of fine particles floating in water after a predetermined period of time has elapsed is not less than 2weight% of the solids of the composition used for granulation treatment.

A third method of the granulation treatment of raw materials for iron and steel making of the present embodiment is a method of granulation treatment (pseudo-granulation or pelletization) of raw materials for iron and steel making (raw materials for sinter or pelletizing materials) through mixing, adjusting a water content, and the like, wherein the granulation treatment is carried out on a composition for granulation treatment containing the raw materials for iron and steel making obtained by adding (compounding) fine particles having an average diameter of 200μm or less and

a dispersant to the raw materials for iron and steel making in such a manner that when the composition for granulation treatment containing the raw materials for iron and steel making is dispersed in water at a predetermined proportion, the amount of fine particles floating in water after a predetermined period of time-has elapsed is not less than 2weight% of the solids of the composition used for granulation treatment.

In any of the granulation treatments of raw materials for iron and steel making of the present embodiment, the fine particles are useful in enhancing the aggregating force of the water in which the fine particles are dispersed. By dispersing the fine particles in water present on granulation, for example, water added for use in granulation and the water content which is introduced by the raw materials, the water in which the fine particles are dispersed has better aggregating force, a pseudo-granulating property is improved, the strength of pseudo-particles after granulation and the disintegration of pseudo-particles in a sintering bed in sintering are reduced, and the product yield after sintering, etc. is improved.

For these reasons, presumably, the pseudo-granulating property is greatly affected by the amount of fine particles dispersed in the water used for granulation. The inventors have diligently studied and found out that a good pseudo-granulating property is obtainable if a granulation treatment is performed on such a finished composition for granulation treatment that when the finished composition for granulation treatment containing raw materials for iron and steel making is dispersed in water at a predetermined proportion, the amount of fine particles floating (dispersed) in water ("amount of dispersed fine particles") after a predetermined period of time has elapsed is not less than 2weight% of the solids of the finished composition used for granulation treatment. The amount of dispersed fine particles is more preferably 2.5weight% or more, even more preferably 3.0weight% or more, and particularly preferably 3.5weight% or more.

The amount of dispersed fine particles which achieves a pseudo-granulating property measured by performing a dispersion property test on the finished composition for granulation treatment which is the completely compounded raw material for iron and steel making. That is, the method of granulation of raw materials for iron and steel making of the present embodiment is a method of granulation of the foregoing completely compounded raw material for iron and steel making whereby the amount of dispersed fine particles measures 2weight% or more in a dispersion property test of the completely compounded raw material for iron and steel making.

The dispersion property test is a method of measuring the amount of fine particles floating (dispersed) in water (amount of dispersed fine particles) a predetermined period of time after the completely compounded raw material for iron and steel making (finished composition for granulation treatment) is dispersed in water at a predetermined proportion. The pseudo-granulating property would be safely considered good if the amount of dispersed fine particles obtained in this manner is not less than 2weight% of the finished composition for granulation treatment dispersed in water, i.e., the finished composition for granulation treatment used in the dispersion property test.

Specifically, the dispersion property test is carried out as follows.

First, place the completely compounded raw material for iron and steel making (finished composition for granulation treatment), up to 10g in the form of solids, in a 100ml measuring cylinder. Then, add ion-exchanged water so that the total quantity equals 100ml, and stir the mixture well. Stir this for about 10 seconds and allow the resultant dispersion liquid to stand for 10 minutes, during which particles with large diameters and those not stably dispersed precipitate. After letting it stand for 10 minutes, extract the entire dispersion liquid, and dry those particles which have precipitated and thus are remaining deposited so as to harden them in a 110°C drier. Then, measure the dried weight and calculate the weight reduction, so as to determine the weight of the fine particles floating (dispersed) in the dispersion liquid. Subsequently, determine the ratio of the dried weight of the dispersed fine particles (amount of the dispersed fine particles) to the weight of the solids of the collected finished composition for granulation treatment.

In the present embodiment, to achieve a good pseudo-granulating property, the finished composition for granulation treatment is prepared and subjected to a granulation treatment in such a manner so that the ratio, i.e. the amount of dispersed fine particles would be 2weight% or more.

For these reasons, the method of granulation of raw materials for iron and steel making of the present embodiment includes, for example, the step of measuring the amount of the dispersed fine particles through the dispersion property test. Further, the method of granulation of raw materials for iron and steel making of the present embodiment includes the step of adjusting the composition of the finished composition for granulation treatment so that the amount of dispersed fine particles is 2weight% or more.

The amount of dispersed fine particles can be adjusted to 2weight% or more by, for example, method (1) or (2) below, or a combination of them.

(1) Increase the amount of the fine particles themselves ("absolute amount") in the finished composition for granulation treatment by, fro example, adding fine particles to the raw materials for iron and steel making or using (compounding) a raw material for iron and steel making containing a large amount of fine particles. This increases the ratio of the fine particles to the raw materials for iron and steel making and hence the amount of fine particles floating (dispersed) in water.

(2) Add a dispersant or dispersants to the raw materials for iron and steel making by, for example, properly specifying the kind and amount used of the dispersant(s), so that the amount of dispersed fine particles is 2weight% or more.

The composition of the finished composition for granulation treatment may be adjusted by carrying out the dispersion property test for every granulation treatment. To reduce the time taken to carry out the granulation treatment, however, the amount of dispersed fine particles may be increased by (i) determining in advance compounding conditions which achieve the 2weight% or more amount of dispersed fine particles and carry out the compounding of the finished composition for granulation treatment according to the compounding conditions or (ii) increasing the absolute amount of fine particles contained in the finished composition for granulation treatment, that is, the ratio of fine particles to the raw materials for iron and steel making. This allows an option not to carry out the dispersion property test.

When the absolute amount of fine particles contained in the finished composition for granulation treatment, that is, the ratio of fine particles to raw materials for iron and steel making, is to be increased, (a) fine particles may be added, while measuring the amount of dispersed fine particles of the fine particles contained in the raw materials used for iron and steel making, so that the amount of dispersed fine particles is 2weight% or more or (b) such a predetermined or larger amount of fine particles that the amount of dispersed fine particles would be 2weight% or more may be added to raw materials for iron and steel making. Fine particles can be added to the raw materials for iron and steel making by, preferably, adding to the raw materials for iron and steel making 200µm or smaller fine particles alone which are dispersible in water, that is, adding separately from the raw materials for iron and steel making, because this enables easy adjustment the amount of the fine particles contained in the finished composition for granulation treatment, that is, the ratio of the fine particles to the raw materials for iron and steel making.

However, the amount of the fine particles contained in the finished composition for granulation treatment may be adjusted by adding (compounding) a compounded raw material containing a large amount of fine particles. In compounding raw materials for iron and steel making as the aforementioned compounded raw materials, typically, two or more raw materials for iron and steel making are used in combination. Further, in granulating the raw materials for iron and steel making, dust produced in the steel-making plant, such as dust produced in a blast furnace, sintering, and steel converter, may in some cases be used as compounded raw materials. Accordingly, the proportion of the compounded raw materials containing a large amount of fine particles may be increased so as to increase the amount of fine particles contained in the finished composition for granulation treatment and hence the proportion of fine particles dispersed in water, that is, the amount of dispersed fine particles. In such an event, the amount of dispersed fine particles can be increased by add a dispersant together with the fine particles.

Examples of possible arrangements enabling a 2weight% or more amount of dispersed fine particles include:

(I) The original compounded raw materials contain no fine particles other than water. In other words, a 2weight% or more dispersion is achieved with no dispersant used.
(II) The fine particles contained in the original compounded raw materials produce a 2weight% or more dispersion by using a dispersant.
(III) Fine particles are added on top of the fine particles contained in the original compounded raw materials. Water alone can produce a 2weight% or more dispersion.
(IV) Fine particles are added on top of the fine particles contained in the original compounded raw materials. A 2weight% or more dispersion is achieved using a dispersant.

Typical raw materials for iron and steel making contain fine particles which originally adhere to, or are mixed with, the raw materials. For example, iron ore compounded as a raw material for iron and steel making has fine particles of iron ore and clay, such as kaolin clay, adhering thereto. Limestone contains, for example, fine particles of limestone (calcium carbonate). Further, as previously noted, in the granulation of the raw materials for iron and steel making, dust produced in the steel-making plant such as dust produced in a blast furnace, sintering, and steel converter, may in some cases be used as compounded raw materials.

However, these fine particles typically have poor atutodispersion power in water and do not contribute much to the increase in concentration of the dispersed fine particles in added water unless, in the granulation of raw materials for iron and steel making, there are a large amount of fine particles present in added water as a result of adding fine particles of either the same or a different type from the fine particles on top of the raw materials for iron and steel making as in, for example, (III) or (IV) or a dispersant is used as in (II) or (IV). The fine particles proper cannot greatly improve the pseudo-granulating property.

Iron ore is granulated by water to some extent, because 200µm or less fine particles adhering to the surface of the iron ore; Flux, such as limestone, serpentinite, and silica; 200µm or less fine particles in dust, etc. are dispersed in water, and the aggregating force of the fine-particle-dispersed water binds together iron ore to exceed 200µm and form pseudo-particles.

However, in many cases, the water originally contained in raw materials for iron and steel making can only have a small amount of fine particles dispersed therein, and the fine particles themselves form an aggregate holding water therein. For this and other reasons, the amount of the fine-particle-dispersed water is reduced, and in water-only granulation, pseudo-granulation cannot be sufficiently carried out without added water.

Accordingly, in the present embodiment, for example, a dispersant is added to the raw materials for iron and steel making (raw material composition for iron and steel making) so as to meet the foregoing conditions as in (II); or fine particles 200μm or less in diameter on average which can serve as a binder bonding iron ore to fine particles of iron ore are supplementally used, and a dispersant is added to the raw materials for iron and steel making (raw material composition for iron and steel making) as in (IV).

The dispersant's role is to free water from aggregates and increase the amount of particles dispersed in water, by loosing up aggregates of those 200μm or less fine particles originally which are found in small quantities in compounded raw materials and/or, aggregates of those fine particles 200μm or less in diameter on average which are added later to the compounded raw materials (raw materials for iron and steel making) to disperse fine particles in water. Thus, the dispersant serves to increase the binder enhancing pseudo-granulation and improve the aggregating force of the binder itself.

Therefore, according to the method, by the use of a dispersant as previously noted, preferably, by the supplemental use of fine particles 200μm or less in diameter on average together with the use of a dispersant, fine particles are stopped from aggregating and a sufficient amount of fine-particle-dispersed water serving as a binder is ensured without increasing added water. The method improves a pseudo-granulating property; therefore, the amount of fine particles after granulation is dramatically decreased despite of the addition of fine particles.

Further, according to method (IV), since the amount of fine particles in the fine-particle-dispersed water is also increased, the strength of pseudo-particles after granulation is increased, and the disintegration is reduced of pseudo-particles in the sintering bed in sintering. This increases the permeability of the sintering bed and the productivity of a sintering machine. Further, the strength of sinter after sintering, a product yield, etc. also improve; thus, the productivity of the sintering machine can be greatly improved.

That is, as previously noted, examples of fine particles 200μm or less in diameter on average contained in the raw materials for iron and steel making include iron ore fine particles adhering to iron ore used as a raw material for iron and steel making, kaolin clay, limestone (calcium carbonate) fine particles in limestone, and various kinds of dust. If only a small amount of fine particles engages in pseudo-granulation, fine particles of the same or a different type from those fine particles which are contained in these raw materials for iron and steel making can be further added. This increases the amount of fine particles engaging in pseudo-granulation.

Note that there can be a large amount of fine particles present in the finished composition for granulation treatment and also in the fine-particle-dispersed water as a result of, for example, either adding a raw material for iron and steel making having a large amount of fine particles when fine particles are added to the raw materials for iron and steel making as in (III) and (IV) or compounding a raw material for iron and steel making containing a large amount of fine particles as in (I); however, it is preferred if fine particles of the same or a different type from the fine particles with the aforementioned average particle diameter contained in the raw materials for iron and steel making are added to the raw materials for iron and steel making separately from the raw materials for iron and steel making makes, since the method facilitates the adjustment of the amount of fine particles in the finished composition for granulation treatment and enables selective control of those kinds of particles which are more effective and those particles having a more effective granulation degree distribution.

As separately added fine particles, those fine particles which are the same type as the fine particles contained in raw materials for iron and steel making, such as fine particles of iron ore, kaolin clay, fine particles of limestone (calcium carbonate), and various kinds of dust, may be used. Alternatively, those fine particles, such as colloidal silica, fly ash, fumed silica, anhydrite, etc., which are different from the fine particles contained in raw materials for iron and steel making may be used.

The separately added fine particles are not limited in any particular manner as long as the fine particles have the aforementioned average particle diameter. Preferred examples include fine particles of inorganic substances, such as iron ore, Flux for steel, limestone (calcium carbonate), kaolin clay, bentonite, dust produced in a steel-making plant, fumed silica, fly ash, anhydrite, and colloidal silica, because they improve strength in and after the sintering. Particularly preferred among them are calcium carbonate, kaolin clay, and colloidal silica, because they further improve the productivity of a sintering machine.

That is, besides the fine particles found mixed in the compounded raw materials (raw materials for iron and steel making), those separately added later are contained in the finished composition for granulation treatment. Examples of those later added include the aforementioned various kinds of fine particles. Preferred among them is at least one type of fine particles selected from the group consisting of iron ore, Flux for steel, limestone (calcium carbonate), kaolin clay, bentonite, dust of the raw materials for iron and steel making, fumed silica, fly ash, anhydrite, and colloidal silica.

Further, the acceptable average particle diameter of the fine particles is 200µm or less. However, for better granulating-property improving effects, the average particle diameter is preferably 0.01µm or more and 150µm or less, more preferably, 0.02µm or more and 100 cm or less. If the average particle diameter is less than 0.01µm, the fine particles are likely to aggregate. In contrast, if the average particle diameter is more than 200µm, the fine particles are likely to show a poorer ability as a binder and fail to produce a desirably high pseudo-granulating property. When the fine particles are hard to aggregate and show dispersion stability, the smaller the particle diameter, the better the granulating property. However, the particle diameter suitable to dispersion stabilization varies depending on raw materials for iron and steel making; therefore, it is preferred if the average particle diameter of the fine particles are appropriately specified in the aforementioned range according to the kinds of raw materials for iron and steel making.

Further, in the raw material composition for iron and steel making and also in the finished composition for granulation treatment, the amount (ratio) of added fine particles to iron ore is preferably 0.01weight% or more up to 30weight%, more preferably 0.1weight% or more up to 20weight%. If the amount of added fine particles is less than 0.01weight%, the fine particles are likely to produce less than sufficient pseudo-particle disintegration prevention effects in a sintering bed and poor pseudo-granulation enhancing effects, and hardly reduce fine particles. Further, if the amount of added fine particles is more than 30weight%, the fine particles are likely to produce large quantities of waste material, such as slug, conversely increase the amount of fine particles, and reduce permeability, thereby possibly reducing the productivity of the sintering machine.

Further, any dispersant may be used in methods (II) and (IV) as long as it is capable of causing the fine particles to be dispersed in water: examples include not only inorganic compounds, organic compounds, low molecular compounds, and polymer compounds, but are not limited by any particular manner. Preferred example of the dispersant are polymer compounds containing acid groups and/or their salts.

Specific examples of the dispersant include inorganic dispersants, such as trisodium phosphate, sodium tripolyphosphate, sodium hexamethaphosphate, and sodium pyrophosphate; alkyl sulfate salts, such as sodium dodecylsulfate, potassium dodecylsulfate, and ammonium alkyl sulfate; sodium dodecylpolyglycol ether sulfate; sodium sulfolicynoate; alkylsulfonates, such as sulfonated paraffin salts, dodecylbenzenesulfonate sodium, and alkaline metal sulfates of alkali phenolhydroxyethylene; salts of long-chain alkylnaphthalene sulfonic acid; condensates of naphthalene sulfonic acid and formaldehyde; salts of unsaturated fatty acid, such as sodium laurate, triethanolamine oleate, and triethanolamine abietiate; salts of polyoxyalkylether sulfate ester; salts of polyoxyethylene carboxylate ester sulfate ester; salts of polyoxyethylenephenylether sulfate ester; reactive anion emulsifiers having an unsaturated radical, such as salts of succinic acid dialkylester sulfonic acid, and polyoxyethylene alkylarylsulfate salts; polyoxyethylene alkylether; polyoxyethylene alkylarylether; sorbitan aliphatic esters and polyoxyethylene sorbitan aliphatic esters; aliphatic monoglycerides, such as glycerine monolaurate; polyoxyethylene-polyoxypropylene copolymer; condensates of ethylene oxide, aliphatic amine, and an amido or acid; hydroxyethyl cellulose, methyl cellulose, polyethylene glycol, polyvinyl alcohol and their denatured substances; water-soluble nonionic polymer compounds, such as hydroxyethyl (meth)acrylate, water-soluble polymers, hydroxypropyl (meth)acrylate, water-soluble polymers, and polyvinyl pyrrolidone; semisynthetic polymer compounds that contain an acid group and/or its salt, such as carboxyethyl cellulose and sodium ligninsulfonate; and condensed polymer compounds that contain an acid group and/or its salt, such as a condensate of β-naphthalene sulfonate and formalin, a condensate of melanimesulfonate and formalin, and aromatic amino sulfonic acid polymer.

Other examples of the dispersant are polymer compounds that contain other acid groups or their salts. Specific examples include polymer compounds into which an acid group or its salt is introduced by polymerizing (copolymerizing), as a polymerizable constituent (monomer constituent), at least one monomer selected from the group consisting of (1) monomers containing an acid group, e.g., monomers containing a carboxyl group, such as (meth)acrylic acid, maleic acid, maleic anhydride, itaconic acid, fumaric acid, crotonic acid, and acrylamide glycolic acid; monomers containing a sulfo group, such as vinyl sulfonic acid, styrene sulfonic acid, and sulfo ethyl (meth)acrylic acid; monomers containing an acid phosphate ester group, such as 2-(meth)acryloyl oxyethyl acid phosphate, 2-(meth)acryloyl oxypropyl acid phosphate, 2-(meth)acryloyl oxy-3-chloropropyl acid phosphate, and 2-(meth)acryloyl oxyethylphenylphosphate; and carbolic acid monomers, such as vinyl phenol, and (2) salts of these monomers.

Further, when a salt of a monomer containing an acid group is used as the monomer, its neutralizing base is not limited in any particular manner. Examples include alkaline metal ions, such as potassium ions and sodium ions; alkaline earth metallic ions, such as calcium ions; and bases containing a nitrogen, such as ammonium and primary to quaternary amines.

Any kind of the acid groups derived from the listed monomers may be used alone or two or more of them may be contained. Among the acid groups derived from the monomers, a carboxyl group and/or its salts are preferable, and those to which at least one monomer selected from the group consisting of (meth)acrylic acid, maleic acid, and their salts is introduced by polymerizing (copolymerizing), as a polymerizable constituent, the monomer are more preferable.

Further, a monomer having polyalkylene glycol chain may be copolymerized to the aforementioned monomers

containing an acid group as a polymerizable constituent. Specific examples of the monomer having a polyalkylene glycol chain include, but are not limited to, polyalkylene glycol (meth)acrylic acid esters, such as polyethylene glycol monomethacrylic acid ester, methoxypolyethylene glycol monomethacrylic ester, and methoxypolyethylene glycol monoacrylic acid ester; a polyalkylene glycol monoalkenylether monomer prepared by adding ethylene oxide to 3-methyl-3-butane-1-ol; a polyethylene glycol monoethenylether monomer prepared by adding ethylene oxide to allyl alcohol; and a maleic acid polyethylene glycol half-ester prepared by adding polyethylene glycol to maleic anhydride. Any one of the monomers containing a polyalkylene glycol chain may be used alone; alternatively, two or more of them may be used together.

Among these monomers containing a the polyalkylene glycol chain, those having a polyalkylene glycol chain of which the length is 5mol or more and 100mol or less, preferably, 10mol or more and 100mol or less as measured in terms of an ethylene oxide equivalent are easily available, preferable to improve the pseudo-granulating property, and good in terms of polymerizing property.

Further, another copolymerizable monomer may be further copolymerized to the monomers where necessary. In other words, besides the aforementioned monomer constituting the acid group and the polyalkylene glycol chain, the polymer compound used as the dispersant may contain a structural unit derived from another monomer copolymerizable with the monomer (hereinafter, "copolymerizable monomer") where necessary. Specific examples of the copolymerizable monomer includes, but are not limited to, alkylester (meth)acrylates which are esterification products of (meth)acrylic acid and a monovalent alcohol having 1 to 18 carbons, such as methyl (meth)acrylate, ethyl (meth) acrylate, butyl (meth)acrylate, hydroxyethyl (meth)acrylate, (N,N-dimethylaminoethyl) (meth)acrylate, (N,N-diethylaminoethyl) (meth)acrylate, and aminoethyl (meth)acrylate; cycloalkylester (meth)acrylates, such as cyclohexyl (meth) acrylate; ester (meth)acrylates containing a hydroxyl group, such as 2-hydroxyethyl (meth)acrylate, 2-hydroxypropyl (meth)acrylate, and a monoesterification product of (meth)acrylic acid and polypropylene glycol; styrene and its derivatives, such as styrene, vinyl toluene, $\alpha$-methyl styrene, ethylvinyl benzene, and chloromethyl styrene; (meth)acrylamide and its derivatives, such as (meth)acrylamide, N-methyl (meth)acrylamide, N-ethyl (meth)acrylamide, and N,N-dimethyl (meth)acrylamide; vinyl acetate; (meth)acrylonitrile; N-vinyl-2-pyrrolidone; monomers containing a bas, such as dimethylaminoethyl (meth)acrylate, dimethylaminoethyl (meth)acrylamide, dimethylaminopropyl (meth)acrylamide, vinyl pyridine, and vinyl imidazole; crosslinking (meth)acrylamide monomers, such as N-methylol (meth)acrylamide and N-butoxymethyl (meth)acrylamide; silane monomers in which a hydrolytic group is directed bonded to a silicon atom, such as vinyl trimethoxysilane, vinyl triethoxysilane, y-(meth)acryloyl propyltrimethoxysilane, vinyl tris(2-methoxyethoxy)silane, and allyl triethoxysilane; monomers containing an epoxy group, such as glycidyl (meth)acrylate and glycidyl ether (meth)acrylate; monomers containing an oxazoline group, such as 2-isopropenill-2-oxazoline and 2-vinyl-2-oxazoline; monomers containing a aziridine group, such as 2-aziridinylethyl (meth)acrylate and (meth)acryloyl aziridine; monomers containing halogen group, such as vinyl fluoride, vinylidene fluoride, vinyl chloride, and vinylidene chloride; multifunctional (meth)acrylic acid esters having multiple unsaturated radicals in the molecule, such as esterification products of (meth)acrylic acid and polyhydric alcohols, such as ethylene glycol, diethylene glycol, propylene glycol, 1,3-butylene glycol, neopentyl glycol, 1,6-hexanediol, trimethylolpropane, pentaerythritol, and dipentaerythritol; multifunctional (meth)acrylamides having multiple unsaturated radicals in the molecule, such as methylene bis(meth) acrylamide; multifunctional allyl compounds having multiple unsaturated radicals in the molecule, such as diallyl phthalate, diallyl maleate, and diallyl fumarate; and allyl (meth)acrylate; and divinyl benzene. Any of the monomers may be used alone; alternatively, two or more of them may be used together, as required.

Besides these monomers, chain transfer agents may be used to adjust molecular weight. Specific examples of such a chain transfer agent include compounds with a high chain transfer index: namely, compounds containing a merchant base, such as mercaptoethanol, mercaptopropionic acid, t-dodecylmercaptan; carbon tetrachloride; isopropylalcohol; and toluene. Again, any of these chain transfer agents may be used alone, or alternatively two or more of them may be used together. The chain transfer agents may be used in any quantity; preferably, 0.005mol to 0.15mol of they are used per every 1mol of the monomer, that is, the monomer copolymerizable with the monomer containing an acid group and the monomer containing an acid group.

The proportion of acid groups in the polymer compound containing the acid groups or its salt is not limited in any particular manner; however, the proportion is preferably higher than or equal to the minimum limit of 5mol%, and more preferably of 10mol%.

The manufacturing method of the polymer compound having an acid group or its salt, that is, the polymerization method of the monomer constituent, is not limited in any particular manner. Various conventional, publicly available polymerization method may be used including oil-in-water emulsification polymerization method, water-in-oil emulsification polymerization method, suspension polymerization method, disperse polymerization method, precipitation polymerization method, solution polymerization method, aqueous solution polymerization method, and aggregated polymerization method. Among these listed polymerization methods, the aqueous solution polymerization method is preferable in view of polymerization cost (production cost), safety, etc.

The polymerization initiator used in the polymerization only needs to be a compound which produces radical

molecules as it decomposes thermally or through a redox reaction. Further, in aqueous solution polymerization, water-soluble polymerization initiators are preferred. Specific examples of the polymerization initiator include, but are not limited to, persulfates, such as sodium persulfate, potassium persulfate, and ammonium persulfate; water-soluble azo compounds, such as 2,2'-azobis-(2-amidinopropane) dihydrochloride and 4,4'-azobis-(4-cyanopentanoic acid); thermally decomposing initiator, such as hydrogen peroxide; and redox polymerization initiators, such as hydrogen peroxide with ascorbic acid, t-butylhydrobar oxide with rongalit, potassium persulfate with a metal salt, and ammonium persulfate with sodium hydrogen sulfite. Any of these polymerization initiators may be used alone, or alternatively two or more of them may be used together. The polymerization initiator may be appropriately specified according to the composition of the monomer constituent, polymerize conditions, etc.

The reaction temperature, reaction time, and other conditions in polymerization may be appropriately specified according to the monomer constituents (composition of the monomer composition), the type of the polymerization initiator, etc. The reaction temperature is preferably in the range of 0°C to 100°C, and more preferably in the range of 40°C to 95°C. The reaction time is preferably 3 hours to 15 hours approximately. When the aqueous solution polymerization method is used, the monomer constituent can be supplied to the reaction system by, for example, a batch adding method, a split adding method, a constituent dropping method, a power feed method, or a multi-stage dropping method. The supply method is however not limited in any particular manner.

The weight average molecular weight of the polymer compound having an acid group or its salt is preferably 1000 or more and 500000 or less. The upper limit (weight average molecular weight) is more preferably 100000. If the weight average molecular weight is less than 1000, the pseudo-granulating property is likely to deteriorate; if it is more than 500000, the viscosity becomes too high, thereby failing to sufficiently provide the polymer compound to the whole iron ore, This may result in deterioration of pseudo-granulating property.

Any of these dispersants may be used, or two or more may be used as a mixture. Good dispersants among those listed are the polymer compounds having an acid group or its salt, because such the aforementioned dispersion force among fine particles is great. Preferable of them are sodium polyacrylate or ammonium polyacrylate having a weight average molecular weight of not less than 1000 and not more than 100000, because of good fine particles dispersion and low cost.

In the present embodiment, the amount of a dispersant used may be appropriately specified according to type of the dispersant used and the types and combination of the used raw materials for iron and steel making, so as to produce the aforementioned amount of dispersed fine particles, and not limited in any particular manner. However, the amount to the raw materials for iron and steel making is preferably 0.001weight% or more and 1weight% or less, and more preferably 0.005weight% or more and 0.5weight% or less. If the amount of a dispersant used is less than 0.001weight%, the dispersant is not effective, failing to improve pseudo-granulating property. Further, if the dispersant is used at 1weight% or more, the whole part becomes stick, and the granulation possibly fails as a result, which is not desirable.

Therefore, a substance prepared by adding as fine particles either kaolin clay or calcium carbonate, 200µm or less in diameter on average, to the raw material composition for iron and steel making (compounded raw materials for iron and steel making) containing particles of iron ore and further adding as a dispersant sodium polyacrylate having a weight average molecular weight of 1000 or more and 100000 or less is preferable, because of its high granulating effects.

The foregoing description dealt with the method of using a dispersant in fine particles dispersion so as to disperse a predetermined amount or more of fine particles in water for granulation stably. When autodispersion fine particles which can disperse in water with no dispersant up to 20weight% or more as determined by the dispersion property test are added to the raw materials for iron and steel making as the fine particles, the amount of dispersed fine particles can be increased without adding a dispersant, and the pseudo-granulating property can be improved. Therefore, it is preferred if autodispersion fine particles is used as the fine particles in the addition of the fine particles to the raw materials for iron and steel making, because that eliminates the need to use a dispersant as in (III).

Specific examples of such autodispersion fine particles include, but are not limited to, colloidal silica and sop-free emulsion. Any of these autodispersion fine particles may be added alone, or alternatively two or more of them may be added.

The method of adding the fine particles and dispersant to the compounded raw materials (raw materials for iron and steel making) in methods (I) to (IV) is not limited in any particular manner. The fine particles may be added, for example, by compounding them with compounded raw materials in advance; when raw materials mix using, for example, a mixer; during the course of granulation after the spraying of added water; or by spraying added water in which the particles are dispersed.

Further, the dispersant may be added, for example, by spraying before or after mixing raw materials; by spraying during the course of the mixing of raw materials; by spraying during the course of the granulating, separately from the added water; or by mixing the dispersant in added water and spraying the mixture water. There are other methods too: for example, when both fine particles and a dispersant are used, added water mixture in which the fine

particles are dispersed using the dispersant may be sprayed before carrying out granulation.

Further, other components, for example, publicly available, conventional other granulation additives, etc. such as burnt lime and thickening agents, may be added to the compounded raw materials (raw materials for iron and steel making) where necessary, so long as the added components do not inhibit pseudo-granulating property improving effects in the case of use for the granulation of raw materials for iron and steel making containing iron ore fine particles or so as to further improve pseudo-granulating property. In other words, in methods (I) to (IV), in addition to the aforementioned various fine particles and dispersants, other components, for example, publicly available, conventional other granulation additives, etc., such as burnt lime and thickening agent may be used together where necessary.

A granulation treatment method of the present embodiment improves pseudo-granulating property by either adding both fine particles and a dispersant to the raw materials for iron and steel making or adjusting the composition of the composition for granulation as in the foregoing so as to increase the amount of dispersed fine particles. Thus, a granulation treatment method can be offered which is suitable to carry out a granulation treatment (pseudo-granulation or pelletization) on raw materials for iron and steel making (raw materials for sinter or pelletizing materials) containing iron ore fine particles.

The method, in adjusting the water content of the raw materials for iron and steel making, carrying out a granulation treatment, and carrying out pseudo-granulation or pelletization, enables a predetermined amount or more fine particles to be stably dispersed in water for granulation, for example, added water, thereby greatly improving pseudo-granulating property, the strength of pseudo-particles, permeability during the course of sintering, and the productivity (productivity) of the sintering machine.

Further, the present embodiment produces granulated iron ore (pseudo-particles) having a GI index of as high as 76% or more, preferably, 84% or more, The GI index of granulated pseudo-particles refers to a value representing the proportion of fine particles adhering to a core particle. A greater GI index improves the granulating property, permeability during the course of sintering, permeability of sinter, and productivity of the sintering machine.

Further, the present embodiment is applicable to the treatment method which involves (i) mixing, kneading, and granulating part of the raw materials for iron and steel making according to granulation degree distribution, granulating property, composition, etc. of each commercial name of the raw materials for iron and steel making containing Flux, fuel, etc., and (ii) subsequent mixing with other raw materials for iron and steel making and granulating the mixture, where the granulation treatment method of the present embodiment can carry out pseudo-granulation by adding, to the raw materials for iron and steel making, fine particles having the aforementioned average particle diameter and a dispersant. When, for example, part of the raw materials for iron and steel making shows a poor granulating property, pseudo-granulating property can be improved by adding fine particles having the aforementioned average particle diameter and a dispersant to that part which shows a poor granulating property.

In the present embodiment, the raw materials for iron and steel making, the granulating machines, the times and places of adding the components, that is, for example, the fine particles having the aforementioned average particle diameter and the dispersants, etc. may be freely chosen and used in any combination; their combined use is not limited in any particular manner. That is, the granulation treatment method the present embodiment is applicable also to the granulation treatment method which includes multiple treatment steps and in which each treatment method can be combined with any method of adding the fine particles having the aforementioned average particle diameter and the dispersant, where the granulation treatment method of the present embodiment can carry out pseudo-granulation by adding the fine particles having the aforementioned average particle diameter and the dispersant to the raw materials for iron and steel making. The granulation treatment method of the present embodiment is of course also effective to carry out a publicly available pseudo-granulation method (means).

[Embodiment 2]

A method of granulation treatment of raw materials for iron and steel making of the present embodiment through mixing the raw materials for iron and steel making which contains iron ore fine particles, adjusting the water content thereof, and the like, is arranged such that the below-indicated granulation treatment agent for iron and steel making is added to the raw materials for iron and steel making. It is particularly preferable that the method of granulation treatment of raw materials for iron and steel making of the present embodiment include the step of adding the below-indicated granulation treatment agent for iron and steel making to the raw materials containing not more than 0.5 mm of iron ore fine particles.

The granulation treatment agent for iron and steel making of the present embodiment for use in carrying out a granulation treatment on the raw materials for iron and steel making containing iron ore fine particles (raw materials for sinter or pelletizing materials) is a polymer which includes at least either (A) or (B) as an essential component:

(A) a water-soluble polymer compound having clay dispersion force not less than 0.5; and
(B) a polymer compound including a carboxyl group and/or its salts, whose number average molecular weight is

within a range of not less than 500 to not more than 20000, and whose polydispersity indicated by a weight average molecular weight/the number average molecular weight is within a range of not less than 1.2 to not more than 12.0.

In the granulation treatment, the polymer compound (A) and the polymer compound (B) are used for dispersing in water for granulation, the clay adhering to iron ore fine particles and/or the iron ore contained in the raw materials for iron and steel making. In other words, in the present embodiment, the polymer compound (A) and the polymer compound (B) are used as dispersant.

The reason why the polymer compound (A) and the polymer compound (B) show excellent granulation performances in granulating the iron ore is not definite but can be assumed as follows.

That is, the iron ore contains clay, and by adding the polymer compound (A) and/or the polymer compound (B) to the raw materials for iron and steel making, the clay adhering to the iron ore fine particles and/or the iron ore is dispersed in water for granulation. The finely dispersed iron ore fine particles and the clay function as a binder between the iron ore and the iron ore fine particles.

Here, the clay contained in the iron ore is finely dispersed in sub-micron order by adopting the water-soluble polymer compound having clay dispersion force not less than 0.5, and the clay as finely dispersed functions as a binder between the iron ore and the iron ore fine particles so as to join the iron ore particles in the order of not less than micron and the iron ore in the mili order with the iron ore in the order of not less than micron as core particles, thereby preparing the pseudo-particles. As a result, a high granulating property is obtained, and a reduction in iron ore fine particles (improvement in granulating property) can be realized.

Therefore, by adding the polymer compound having a still higher clay dispersion force to the raw materials for iron and steel making, an amount of clay dispersed is increased (bonding power is increased), which in turn improves the granulating property.

In order to realize the above effect, it is characterized in that the polymer compound (A) in accordance with the present embodiment is water soluble, and has clay dispersion force not less than 0.5. In the present embodiment, the polymer compound indicates a compound having a number average molecular weight of not less than 500. Therefore, the polymer compound (A) for use in the present embodiment indicates the water-soluble compound having a number average molecular weight of not less than 500 and a clay dispersion force of not less than 0.5.

As explained above, the higher is the clay dispersion force, the greater is the improvement in the dispersion power of the clay. Therefore, it is preferable that the clay dispersion force be not less than 0.6, more preferably not less than 0.9, and the most preferably not less than 1.1. The water-soluble polymer compound having the clay dispersion force of not less than 0.5 has excellent pseudo-granulating property, and the granulating performance of the iron ore can be significantly improved.

The number average molecular weight of the polymer compound (A) is not particularly limited as long as not less than 500, and it is preferable that its minimum value (number average molecular weight) be 800 more preferably be 1000. On the other hand, it is preferable that the maximum value of the number average molecular weight be 100000, and more preferably be 30000. When adopting the polymer compound (A) having the number average molecular weight of less than 500, the pseudo-granulating performance is liable to be lowered, and the above clay dispersion force cannot be obtained. On the other hand, when adopting the polymer compound (A) having the number average molecular weight greater than 100000, the viscosity becomes too high, and polymer compound (A) cannot be applied sufficiently, which may result in the lower pseudo-granulation performance.

The polymer compound (A) adopted in the present embodiment is not particularly limited as long as the above condition is satisfied. As long as the above condition is satisfied, for the polymer compound (A), any polymer compound, for example, as selected from a) known water-soluble polymer compounds of a variety of kinds, b) a polymer which is made water-soluble using a known water-soluble polymer compound, c) a (co)polymer obtained by polymerizing, copolymerizing known monomer by a known polymerization technique, such as radical polymerization, cation polymerization, anion polymerization, coordination anion polymerization, poly-condensation, etc., may be adopted.

Specifically, examples of the polymer compound (A) include: a compound of at least one kind selected from the group consisting of (i) polyacrylic acid, and (ii) polyacrylic acid salt in which a part of or all the carboxyl group contained therein is neutralized with an element selected from the group consisting of sodium, potassium, calcium, and ammonia.

Here, the above compounds (i) to (iii) include a copolymer containing acrylic acid as an essential component. The copolymer component (copolymerizable monomer) in the case where the polyacrylic acid is the copolymer is not particularly limited. As long as at least a part of the polyacrylic acid is neutralized with a neutralization agent, the ratio of neutralization of the compound (ii) is not particularly specified. By neutralizing at least a part of the polyacrylic acid with a basic neutralization agent, or without treatment (without being neutralized), the polyacrylic acid can be dissolved in water. As a result, the granulation treatment agent for iron and steel making containing the compounds (i) to (iii) as the polymer compound exhibit enough performances (effects) with a small amount of use. Although such polymer compound is not particularly limited, but specific examples of such neutralization agent include: alkali metal hydroxide,

such as sodium hydroxide, potassium hydroxide; basic carbonate, such as sodium carbonate, sodium hydrogen carbonate, ammonium carbonate, and ammonium hydrogen carbonate; and a base containing nitrogen, such as aqueous ammonia, and monoethanolamine.

Further, the compound (ii) is easily obtainable also by, for example, polymerizing an acrylic acid salt or copolymerizing an acrylic acid and an acrylic acid salt. Specific examples of such an acrylic acid. salt include, but are not limited in any particular manner to, alkaline metal salts of acrylic acid, such as sodium acrylic acid and potassium acrylic acid; alkali earth metal salts of acrylic acid, such as calcium acrylic acid; ammonium salts of acrylic acid; and amine salts of acrylic acid.

Further, specific examples of the polymer compound (A) include polymer compounds containing a carboxyl group and/or its salt, having a number average molecular weight of 500 or more and 20000 or less, and having a polydispersity, indicated by weight average molecular weight/number average molecular weight, of 1.2 more than and 12.0 or less. Among the polymer compounds (A), that satisfying the condition (B), in other words, the polymer compound (B) is preferred.

In the present embodiment, polydispersity is defined by an equation based on weight average molecular weight and number average molecular weight:

polydispersity = weight average molecular

weight/number average molecular weight

In the present embodiment, the weight average molecular weight and the number average molecular weight are measured by the method detailed in the Examples later.

The polydispersity of the polymer compound (B) is not limited in any particular manner, provided that it is 1.2 or more and 12.0 or less; however, the minimum value is preferably 1.3, more preferably 1.5, even more preferably 1.7; the maximum value is preferably 10, more preferably 7.0, even more preferably 5.0. If the polydispersity is less than 1.2, the strength of granulated raw materials for iron and steel making tends to decrease. If the polydispersity is more than 12.0, sufficient granulating effects are again unobtainable. The closer to 1 the polydispersity is, the smaller the molecular weight distribution.

Further, the number average molecular weight of the polymer compound (B) is not limited in any particular manner, provided the weight is 500 or more and 20000 or less; however, the minimum value is preferably 800, more preferably 1000, and even more preferably 1200; the maximum value is preferably 10000, more preferably 7000, even more preferably 5000. If the number average molecular weight is less than 500 or more than 20000, sufficient granulating effects cannot be obtained.

The combination of the number average molecular weight and polydispersity of the polymer compound (B) in the present embodiment is not limited in any particular manner, provided that both of them satisfy the foregoing conditions.

The polymer compound (B) used in the present embodiment can be obtained by, for example, (co)polymerizing a monomer containing a carboxyl group alone or that monomer together with another monomer copolymerizable with the monomer in the presence of a publicly available polymerization initiator.

The monomer containing a carboxyl group is listed in Embodiment 1; specific examples include, but are not limited in any particular manner to, (meth)acrylic acid, maleic acid, maleic anhydride, itaconic acid, fumaric acid, crotonic acid, acrylamide glycolic acid and their salts. Any one of the monomers containing a carboxyl group may be used alone; alternatively, two or more of them may be used in any combination where necessary. Among the listed monomers containing a carboxyl group, (meth)acrylic acid is preferred and acrylic acid is particularly preferred.

When a salt of a monomer containing a carboxyl group is used as the monomer containing a carboxyl group, those neutralizing bases listed in Embodiment 1 are used; specific examples of the neutralize bases include, but are not limited in any particular manner to, alkaline metal ions, such as potassium ions and sodium ions; alkaline earth metallic ions, such as calcium ions; bases containing nitrogen, such as ammonium and primary to quaternary amines.

Preferred among the polymer compounds (B) are those prepared by (co)polymerizing an acrylic acid. The polymer compound is preferably at least one type of compound selected from the group consisting of (i) polyacrylic acids and (ii) polyacrylic salts which are each a part or the whole of a carboxyl group, which is included in that polyacrylic acid, being neutralized by one of substances selected from the group consisting of sodium, potassium, calcium, and ammonia.

The polymer compound (B) of the present embodiment may contain, as well as the units derived from the monomer containing a carboxyl group, units derived from another monomer which is copolymerizable with that monomer containing a carboxyl group where necessary. In other words, in the present embodiment, in obtaining the polymer compound (B), any monomer copolymerizable with the monomer containing a carboxyl group, apart from the monomer

containing a carboxyl group, may be copolymerized so long as the proportion of the monomer containing a carboxyl group to all the monomers (monomer constituents) is 45mol% or more. The proportion of the monomer containing a carboxyl group to all the monomers is more preferably 75mol% to 100mol%, most preferably 90mol% to 100mol%. A less than 45mol% proportion of the monomer containing a carboxyl group possibly does not achieve sufficient granulation effects and therefore is not preferable.

Specific examples of the monomer (copolymerizable monomer) constituting the unit derived from the other monomers include those listed in Embodiment 1: namely, monomers containing an acid group and their salts, such as monomers containing a sulfo group, monomers containing an acid phosphate ester group, carbolic acid monomers; and monomers containing a polyalkylene glycol chain.

Any of these copolymerizable monomers may be used alone; alternatively, two or more of them may be used together where necessary. Further, among those monomers containing a polyalkylene glycol chain, those having a polyalkylene glycol chain of which the length is 5mol or more and 100mol or less, preferably, 10mol or more and 100mol or less as measured in terms of an ethylene oxide equivalent are easily available, preferable to improve the pseudo-granulating property, and good in terms of polymerizing property.

Examples of other copolymerizable monomers are listed in Embodiment 1, but are not limited to those listed: namely, alkylester (meth)acrylates; cycloalkylester (meth)acrylates; ester (meth)acrylates containing a hydroxyl group; styrene and its derivatives; (meth)acrylamide and its derivatives; vinyl acetate; (meth)acrylonitrile; N-vinyl-2-pyrrolidone; monomers containing a base; crosslinking (meth)acrylamide monomers; silane monomers in which a hydrolytic group is directed bonded to a silicon atom; monomers containing an epoxy group; monomers containing an oxazoline base; monomers containing an aziridine group; monomers containing a halogen group; multifunctional (meth)acrylic acid esters having multiple unsaturated radicals in the molecule; multifunctional (meth)acrylamide having multiple unsaturated radicals in the molecule; multifunctional allyl compounds having multiple unsaturated radical in the molecule; allyl (meth)acrylate; and divinyl benzene. Again, any of the copolymerizable monomers may be used alone; alternatively, two or more of them may be used together, where necessary.

Besides these copolymerizable monomers, for example, those chain transfer agents listed in Embodiment 1 may be used to adjust molecular weight. Further, any of these chain transfer agents may be used alone, or alternatively, two or more of them may be used together as required. The amount of the chain transfer agent used is not limited in any particular manner. The aforementioned monomer, that is, the monomer containing a carboxyl group, and the range of 0.005mol to 0.15mol per 1mol of a copolymerizable monomer are suitable.

The method of manufacturing the polymer compound (B), that is, the method of polymerizing the monomer constituent, is not limited in any particular manner: for example, any of the various conventional, publicly available polymerization methods listed in Embodiment 1 may be applied. Among them, the aqueous solution polymerization method is preferable in view of polymerization cost (production cost), safety, etc.

The polymerization initiator used in the polymerization method only needs to be a compound which produces radical molecules as it decomposes either thermally or through a redox reaction. Further, in a case where the aqueous solution polymerization method is used, a water-soluble polymerization initiator is preferred. Specific examples of the polymerization initiator include those listed in Embodiment 1, but are not limited in any particular manner. Any of the polymerization initiators may be used alone; alternatively two or more of them may be used together. The amount of the polymerization initiator used may be appropriately specified according to the composition of monomer constituent, polymerize conditions, etc.

The reaction temperature, reaction time, and other conditions in polymerization may be appropriately specified according to the composition of the monomer constituents, that is, the monomer composition, the kind of polymerization initiator, etc. However, the reaction temperature is preferably 0°C to 150°C, more preferably 40°C to 105°C. Further, the reaction time is preferably 3 hours to 15 hours approximately. When the aqueous solution polymerization method is used, the monomer constituent can be supplied to the reaction system by, for example, a batch adding method, a split adding method, a constituent dropping method, a power feed method, or a multi-stage dropping method. The supply method is however not limited in any particular manner. The polymerization may be carried out at normal, reduced, or increased pressure.

In the manufacture of the polymer compound (B), in the case of the aqueous solution polymerization method being used, the concentration of the non-volatile content in the aqueous solution of polymer, including the polymer compound (B), is not limited in any particular manner, but preferably 60weight% or less. An aqueous solution of a polymer with a more than 60weight% non-volatile content has too high viscosity and fails to maintain dispersion stability, thereby possibly aggregating.

The polymer compound (B) used in the present embodiment is obtainable, for example, through addition reaction of either a monomer containing a carboxyl group alone or a monomer containing a carboxyl group together with another monomer copolymerizable with that monomer in the presence of a publicly available polymer compound. The publicly available polymer compound is, for example, polyethylene glycol and polyvinyl pyrrolidone which have a number average molecular weight of 500 to 20000.

Further, the polymer compound (B) used in the present embodiment is obtainable, for example, through any one of treatments of hydrolysis, oxidation, and deoxidation reaction of a publicly available polymer compound. The publicly available polymer compound is, for example, polyacrylamide and methyl polyacrylate which have a number average molecular weight of 500 to 20000.

Further, when the polymer compound (B) is a homopolymer of acrylic acid or a partially or entirely neutralized polymer of acrylic acid, the acid value as measured by colloidal dropping method is preferably 9mmol/g or more. The acid value as measured by colloidal dropping method indicates the amount of carboxylic acid contained in the polymer compound. Further, a low acid value as measured by colloidal dropping method means the polymer compound containing large quantities of impurities derived from a polymerization initiator, by-products produced during the course of the polymerization, and unreacted substances, which leads more addition than in normal cases and serious degradation of granulating property due to the impurities.

The acid value of the polymer compound as measured by colloidal dropping method is more preferably 9.5mmol/g or more, even more preferably 10.5mmol/g or more. It will be detailed in Examples below as to how the acid value is measured by colloidal dropping method.

In the present embodiment, in the granulation treatment (pseudo-granulation or pelletization) of the raw materials for iron and steel making (raw materials for sinter or pelletizing materials) containing iron ore fine particles, a granulation treatment agent for iron and steel making which has as an essential component at least either one of polymer compounds (A) and (B) is used to carry out a granulation treatment on raw materials for iron and steel making containing iron ore fine particles. Thus, excellent effects are achieved in causing the fine particles to adhere to a core particle, and the productivity of the sintering machine is improved.

The amount (proportion) of the polymer compounds (A) and (B) contained in the granulation treatment agent for iron and steel making of the present embodiment may be appropriately specified according to the granulating property (type) of ore (iron ore) of raw materials for sinter, the types of the polymer compounds (A) and (B), the granulating machine used, etc. and are not limited in any particular manner. However, in sinter manufacture, the minimum combined proportion of the polymer compounds (A) and (B) added in the granulation treatment agent for iron and steel making to the raw materials for sinter (iron ore, Flux, fuel, etc.) is set preferably to 0.001weight%, more preferably to 0.005weight%; the maximum combined proportion is set preferably to 2weight%, more preferably to 1weight% (note that either one of the polymer compounds (A) and (B) may be used, or alternatively they are used in a combination). If the combined proportion of the polymer compounds (A) and (B) added to the raw materials for sinter is more than 2weight%, the amount of the granulation treatment agent for iron and steel making added to the raw materials for sinter is too great, the raw materials for sinter possibly form a large lump, causing problems including the failure to sinter the inside of the lump of the raw materials for sinter.

In contrast, if the combined proportion of the polymer compounds (A) and (B) added to the raw materials for sinter is less than 0.001weight%, the polymer compounds (A) and (B) possibly fail to exhibit their desirable capabilities, especially, pseudo-granulating property improving effects when the polymer compounds are used in the granulation of the raw materials for iron and steel making containing iron ore fine particles.

Further, the proportion of the polymer compounds (A) and (B) contained in the granulation treatment agent for iron and steel making in pellet manufacture is not limited in any particular manner. However, the minimum combined proportion of the polymer compounds (A) and (B) added in the granulation treatment agent for iron and steel making to the pelletizing materials (iron ore, dust, charcoal materials, etc.) is set preferably to 0.005weight%, more preferably to 0.01weight%; the maximum combined proportion is set preferably to 5weight%, more preferably to 1weight% (note that either one of the polymer compounds (A) and (B) may be used, or alternatively they may be used in a combination). If the combined proportion of the added polymer compound (A) and polymer compound (B) to the pelletizing materials is more than 5weight%, the amount of the added granulation treatment agent for iron and steel making to the pelletizing materials is too great, causing excess granulation and forming a large lump of the pelletizing materials. This possibly leads to irregularity in particle diameters of the pelletizing materials and other negative effects.

Further, the amount of the added granulation treatment agent for iron and steel making to the raw materials for sinter (iron ore, Flux, fuel, etc.) is not limited in any particular manner; the minimum value is however set preferably to 0.001weight%, more preferably to 0.005 weight%; the maximum value is set preferably to 15weight%, more preferably to 10weight%. Restricting the proportion of the added granulation treatment agent for iron and steel making relative to the raw materials for sinter within 15weight%, the raw materials for sinter are less likely to form a lump, and problems do not arise including the failure to sinter the inside of the lump of the raw materials for sinter. Further, the minimum amount (added proportion) of the added granulation treatment agent for iron and steel making varies depending on the granulating property of the ores of raw materials for sinter, the amount of added water content, the granulating machine used, etc., but is desirably specified to a possible minimum value.

In contrast, the amount of the added granulation treatment agent for iron and steel making relative to the pelletizing materials (iron ore, dust, charcoal materials, etc.) is not limited in any particular manner. However, the minimum amount is preferably 0.01weight%, more preferably 0.05weight%; the maximum amount is preferably

50weight%, more preferably 10weight%. If the treatment agent added exceeding 50weight%, excess granulation happen, causing the pelletizing materials to form a large lump. This possibly leads to irregularity in particle diameter of the pelletizing materials and other negative effects. Further, the minimum amount of the added granulation treatment agent for iron and steel making varies depending on the granulating property of the pelletizing materials, the amount of added water content, the granulating machine used, etc., but is desirably specified to a possible minimum value.

In other words, the granulation treatment agent for iron and steel making may further contain water or another diluent where necessary, depending on the viscosity of the polymer compound used, that is, the type of the polymer compound used, for the purposes of, for example, reducing the viscosity of the granulation treatment agent for iron and steel making and maintaining the dispersion stability. The aqueous solution of a polymer containing the polymer compound (B) obtained by the aforementioned aqueous solution polymerization method or the polymer compound (A) and/or the polymer compound (B) may be used as the granulation treatment agent for iron and steel making of the present embodiment, by separately adding water, etc. to the raw materials for iron and steel making, such as the raw materials for sinter or the pelletizing materials.

Therefore, the amount (proportion) of the added polymer compounds (A) and (B) contained in the granulation treatment agent for iron and steel making of the present embodiment is not limited in any particular manner, and may be appropriately specified according to the granulating property (type) of the ore of the raw materials for sinter (iron ore), the types of the polymer compounds (A) and (B), the granulating machine used, etc.

Further, when the granulation treatment agent for iron and steel making contains water, the amount (proportion) of the polymer compounds (A) and (B) contained in the granulation treatment agent for iron and steel making may be specified so as to satisfy the aforementioned conditions, and is not limited in any particular manner. However, the amount is preferably 0.1weight% or more and 80weight% or less, more preferably 0.2weight% or more and 70weight% or less, even more preferably 0.3weight% or more and 60weight% or less. Note that when the polymer compounds (A) and (B) are used together, the compounding proportion of each polymer compound is not limited in any particular manner.

Further, other components, for example, publicly available, conventional other granulation additives, etc. such as burnt lime, may be used together with the granulation treatment agent for iron and steel making where necessary, so long as the added components do not inhibit the capabilities of the polymer compounds (A) and (B), in particular, pseudo-granulating property improving effects in the case of the polymer compounds being used in the granulation of raw materials for iron and steel making containing iron ore fine particles or so as to further improve pseudo-granulating property.

The polymer compounds (A) and (B) of the present embodiment show excellent pseudo-granulating property improving effects in the granulation of raw materials for iron and steel making even when used in very small quantities, thereby being capable of improving the productivity of the sintering machine. That is, the treatment agent serves as a binder which granulates (pseudo-granulates or pelletize) the raw materials for iron and steel making. Thus, an inexpensive granulation treatment agent for iron and steel making can be offered which can be suitable used in the granulation treatment of raw materials for iron and steel making to obtain sinter.

According to the present embodiment, in the granulation treatment of raw materials for iron and steel making containing iron ore fine particles, the use of, especially, a polymer compound which satisfies the conditions (A), (B), specifically, a water-soluble polymer compound which contains a carboxyl group and/or its salt, has a number average molecular weight of 500 or more and 20000 or less, has polydispersity of 1.2 or more and 12.0 or less as indicated by weight average molecular weight/number average molecular weight, and has a clay dispersion force of 0.5 or more, can enables the granulated iron ore (pseudo-particles) to have an GI index much higher than conventional binders even if the granulation treatment agent for iron and steel making is used at 0.1weight% or less relative to the iron ore.

The GI index, as previously noted, is an index indicating the reduction of fine particle content before and after the granulation, and refers to the proportion of fine particles adhering to a core particle. A greater GI index means a reduced amount of the fine particle content (i.e., improvement of granulating property). Especially, in the near future, high quality iron ore will be hard to find; raw materials available for iron and steel making will have increasingly poor granulating property. The greater the fine particle content (the worse the granulating property), the worse permeability in sintering. This leads to lower productivity and possibly no production at all. Therefore, the provision of a granulation treatment agent for iron and steel making which produces a high GI index is a serious issue in the sinter or pellet manufacture. It will be detailed in Examples below as to how the clay dispersion force and the GI index are measured.

The addition of the granulation treatment agent for iron and steel making to the raw materials for iron and steel making is not limited in any particular manner. However, preferably, the granulation treatment agent for iron and steel making in the form of an aqueous solution is mixed with the added water in the granulating machine, or sprayed to the raw materials for iron and steel making in the course of stirring. These methods can add the treatment agent easily and uniformly and attain the pseudo-granulation without irregular agglomeration, thereby further reducing the fine particles.

Further, the present embodiment is applicable to the treatment method which involves (i) mixing, kneading,

and granulating part of the raw materials for iron and steel making according to granulation degree distribution, granulating property, composition, etc. of each commercial name of the raw materials for iron and steel making containing Flux, fuel, etc., and (ii) subsequent mixing with other raw materials for iron and steel making and granulating the mixture, where pseudo-granulation is achieved by adding the granulation treatment agent for iron and steel making of the present embodiment to the raw materials for iron and steel making. When, for example, part of the raw materials for iron and steel making shows a poor granulating property, pseudo-granulation can be achieved by adding the treatment agent to that part which shows a granulating property. Thus, a small amount of treatment agent can efficiently granulate the raw materials for iron and steel making.

In this manner, as to the granulation treatment agent for iron and steel making of the present embodiment, the raw materials for iron and steel making, the granulating machine, the times and places of adding the agent, etc. may be freely chosen and used in combination; their combined use is not limited in any particular manner. That is, in the granulation treatment method which includes multiple treatment steps and in which each treatment method can be combined with any granulation treatment agent for iron and steel making, pseudo-granulation is also achieved by adding the treatment agent of the present embodiment to the raw materials for iron and steel making. The granulation treatment agent for iron and steel making of the present embodiment is of course also applicable to publicly available pseudo-granulation methods (means).

As in the foregoing, the method of the granulation treatment of raw materials for iron and steel making of the present embodiment is arranged to add the aforementioned granulation treatment agent for iron and steel making of the present embodiment to raw materials for iron and steel making. The arrangement can offer a granulation treatment method which is suited to carry out a granulation treatment (pseudo-granulation or pelletization) on raw materials for iron and steel making (raw materials for sinter or pelletizing materials) containing iron ore fine particles to produce sinter.

Further, as in the foregoing, the method of the granulation treatment of raw materials for iron and steel making of the present embodiment is preferably arranged to add the granulation treatment agent for iron and steel making in the form of an aqueous solution. The arrangement can, in carrying out a granulation treatment (pseudo-granulation or pelletization) on raw materials for iron and steel making (raw materials for sinter or pelletizing materials) containing iron ore fine particles, offer a granulation treatment method which has better fine particle reducing effects and further improves the productivity of the sintering machine.

Further, as in the foregoing, the method of the granulation treatment of raw materials for iron and steel making of the present embodiment is preferably arranged to add the granulation treatment agent for iron and steel making to the raw materials for iron and steel making at 0.001weight% to 50weight%. The arrangement can, in carrying out a granulation treatment (pseudo-granulation or pelletization) on raw materials for iron and steel making (raw materials for sinter or pelletizing materials) containing iron ore fine particles, offer a granulation treatment method which has better fine particle reducing effects and further improves the productivity of the sintering machine.

Further, as in the foregoing, the method of granulation treatment of raw materials for iron and steel making of the present embodiment is preferably arranged to involve multiple treatment steps and combine the granulation treatment agent for iron and steel making and any of the treatment methods. The arrangement can, in carrying out a granulation treatment (pseudo-granulation or pelletization) on raw materials for iron and steel making (raw materials for sinter or pelletizing materials) containing iron ore fine particles, offer a granulation treatment method which has better fine particle reducing effects and further improves in the productivity of the sintering machine.

[Embodiment 3]

A granulation treatment agent for iron and steel making of a present embodiment is a treatment agent for use in granulating raw materials for iron and steel making (raw materials for sinter or pelletizing materials) including fine particles of iron ore, the treatment agent including at least a polymer compound selected from a group constituting of:

(a) a polymer having an acid group and a polyalkylene glycol chain;
(b) β-naphthalene sulfonate formalin condensate;
(c) melamine sulfonate formalin condensate;
(d) poly-aromatic amino sulfonic acid; and
(e) denatured lignin sulfonate.

Moreover, a method of granulation treatment of the present embodiment is a method of granulating raw materials for iron and steel making, for example, including the steps of mixing and adjusting a water content of the raw materials, the method including the step of adding the granulation treatment agent for iron and steel making in the raw materials for iron and steel making.

The polymer compounds (a) to (e), which have a high dispersion power, are less susceptible to influences from a polyvalent metallic ion, compared with a general dispersant.

In granulation of iron ore, the polymer compounds (a) to (e) have a role to disperse, in water for granulation, fine particles of iron ore in sub-micron order.

Iron ore dispersed water obtained in this way functions as a binder like clay, so as to bind the particles of iron ore having an over-micron size and iron ore in millimeter order, thereby producing pseudo-particles. As a result, the fine particles are reduced in quantity. Moreover, the polymer compounds (a) to (e) prevent deterioration of granulation effect by their property that they are less susceptible to the influences from the polyvalent metallic ion, even in a case where a binder, such as burnt lime, to produce a calcium ion of high concentration is used together with the polymer compounds (a) to (e) in combination.

As to the polymer compound (a), that is, the polymer having an acid group and a polyalkylene glycol chain, which is one of the dispersants for use in the present embodiment, the acid group may be introduced by polymerizing (copolymerizing), at least one monomer selected from, for example, a group constituting the acid group including monomers and/or their salts listed in Embodiment 1. However, the introduction of the acid group is not limited to this method.

Moreover, in case the salts of the acid group including monomers are used as the monomers, namely, the acid group including monomers, examples of their neutralized bases are the neutralized bases listed in Embodiment 1. However, their neutralized bases are not limited to those.

Only one or more than two of the acid groups derived from the acid group including monomer may be included. Among the acid groups derived from the acid group including monomer, a carboxyl group and/or its salt is preferable. It is further preferable to introduce the acid group by polymerizing (copolymerizing) at least one monomer selected from the group constituting of (meth)acrylic acid, maleic acid and their salts, as one of polymerizable constituent.

The polyalkylene glycol chain contained in the polymer compound (a) can be introduced by polymerizing (compolymerizing), as one of polymerizable constituent, the monomer including a polyalkylene glycol chain, for example.

A specific example of the monomer to introduce the polyalkylene glycol chain in the polymer compound (a), that is, the monomer to constitute the polyalkylene glycol chain of the polymer compound (a), is a monomer represented by the following general formula (1):

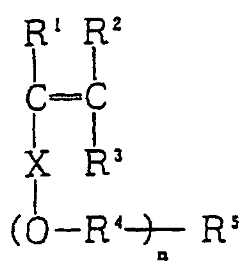

...... (1)

where independently $R^1$, $R^2$ and $R^3$ are a hydrogen atom, an alkyl group having 1 to 3 carbons, a -COOH group or salts thereof, $R^4$ is an alkylene group having 2 to 4 carbons, $R^5$ is a hydrogen atom, a $-CH_3$ group, or a $-CH_2CH_3$ group, X is a $-CH_2-$ group, a $-CH_2CH_2-$ group, a $-CH_2(CH_3)CH-$ group, a >C=O group or a $-CONHCH_2-$ group, and n is a positive integer not less than 5 and not more than 300.

Examples of the monomer represented by general formula (1) include, but are not limited to, polyalkylene glycol listed in Embodiment 1: specifically, polyalkylene glycol (meth)acrylic esters, such as polyethylene glycol mono (meth)acrylate ester, methoxypolyethylene glycol monomethacrylate ester, methoxypolyethylene glycol monoacrylate ester; polyalkylene glycol monoalkenyl ether monomers prepared by adding ethyleneoxide to 3-methyl-3buten-1-ol; polyethylene glycol monoethenyl ether monomers prepared by adding ethyleneoxide to allyl alcohol ; polyethylene glycol maleate half ester prepared by adding polyethylene glycol to maleic anhydride. Those monomers including a polyalkylene glycol chain may be used solely. Alternatively, two or more of the monomers including a polyalkylene glycol chain may be used in combination. Among the monomers including a polyalkylene glycol chain, the monomers whose average number of recurring units, which is represented by n, is not less than 10 and not more than 100, are preferable because such monomers are easily obtained and improve pseudo-granulating property.

Moreover, the introduction of the polyalkylene glycol chain in the polymer compound (a) may be carried out by reacting polyalkylene glycol after polymerization, without copolymerizing the monomer including a polyalkylene

glycol chain, for example, by half-esterification by adding polyalkylene glycol after copolymerization of maleic anhydride.

Namely, the polymer compound (a) of the present embodiment can be obtained by polymerizing (copolymerizing) the polymerizable constituent (monomer constituent) including the previously listed monomer including the acid group and/or its salt and a monomer including a polyalkylene glycol chain, for example, a monomer represented by general formula (1), alternatively by the addition reaction of the monomer including a polyalkylene glycol chain after the polymerization (copolymerization) of the polymerizable constituent (monomer constituent) including the previously-listed monomer including the acid group and/or its salt.

The polyalkylene glycol chain has a tendency to have a higher pseudo-granulating property when it has a higher hydrophilic property. It is preferable that the polyalkylene glycol chain includes a constituent unit derived from polyethylene glycol, such as polypropylene glycol polyethylene glycol block copolymers, the constituent unit represented by general formula (2):

$$-\!\!\left(CH_2-CH_2O\right)_n\!-R^6 \quad \cdots\cdots (2)$$

where $R^6$ is an alkyl group having 1 to 3 carbons, and n is a positive integer not less than 5 and not more than 300. Especially preferable is a polyalkylene glycol chain including a constituent unit derived from polyethylene glycol whose average number of recurring units, which is represented by n, is not less than 10 and not more than 100, because such a polyalkylene glycol chain is easy to obtain and improves the pseudo-granulating property.

In case the polyalkylene glycol chain includes the constituent unit derived from polyethylene glycol, the constituent unit derived from polyethylene glycol accounts for preferably 30mol% or more, more preferably 50mol% or more, further preferably 80mol%, and most preferably 100mol% of the polyalkylene glycol chain. In other words, it is most preferable that the polyalkylene glycol chain is a polyethylene glycol chain.

As described above, the polyalkylene glycol has the average number of the recurring units preferably not less than 5 and not more than 300, and more preferably not less than 10 and not more than 100. If the number of the recurring units is less than 5, it is impossible to attain a sufficient effect of polyalkylene glycol, thereby significantly deteriorating the pseudo-granulating property when burnt lime is used together. On the other hand, if the number of the recurring units is more than 300, property of polyalkylene glycol prevails, thereby giving a pseudo-granulating property equivalent to that of the polyalkylene glycol. This may lead to failure to attain the improvement in the pseudo-granulating property when burnt lime is used.

Moreover, when obtaining the polymer compound (a), another copolymerizable monomer may be further compolyermized with the monomer, if necessary. In other words, if necessary, the polymer compound of the present embodiment may include a structural unit derived from another monomer (copolymerizable monomer) capable of copolymerizing with the monomer, besides the monomer constituting the acid group and the polyalkylene glycol chain.

Examples of the copolymerizable monomer are those listed in Embodiment 1, specifically: (meth)acrylic acid alkylesters; (meth)acrylic acid cycloalkylesters; (meth)arylic acid ester including a hydroxyl group; styrene and its derivatives; (meth)acrylamid and its derivatives; vinyl acetate; (meth)acrylonitrile; n-vinyl-2-pyrrolidone; monomers containing a base; (meth)acrylamid-type monomers capable of being cross linked; silane-type monomers whose hydrolysable group is directly bound to a silicon atom; monomers including an epoxy group; monomers including an oxazoline group; monomers including an aziridine group; monomers including a halogen group; poly-functional (meth)acrylic acid esters including a plurality of unsaturated groups; poly-functional (meth)acryl amid including a plurality of unsaturated groups; poly-functional allyl compounds including a plurality of unsaturated groups; allyl(meth)acrylate; divinylbenzene; and the like. However, the copolymerizable monomer is not limited to those. Those monomers may be used solely or two or more of those monomers may be used in combination.

Further, for molecular weight adjustment, it is possible to use chain transfer agent whose examples are listed in Embodiment 1 besides the monomer. Those chain transfer agents may be used solely or two or more of the chain transfer agent may be used in combination. There is no particular limitation as to how much the chain transfer agent is used. However, adequate amount of the chain transfer agent is in a range between 0.005mol to 0.15mol per one mole of the monomer, that is, the monomer including an acid group and the copolymerizable monomer capable of copolymerizing with the monomer including an acid group.

The percentage of the acid group in the polymer compound (a) is not particularly limited. However, its lower limit is preferably 10mol%, and more preferably 20mol%, while its upper limit is preferably 90mol%, and more preferably 80mol%.

Meanwhile, the percentage of the polyalkylene glycol chain in the polymer compound (a) is not particularly limited. However, its lower limit is preferably 10mol% and more preferably 20mol%, while its upper limit is preferably 90mol%, and more preferably 80mol%.

Moreover, in case the polymer compound (a) includes a structural unit derived from the copolymerizable monomer, the percentage of the structural unit derived from the copolymerizable monomer in the polymer compound (a) is not particularly limited, while the percentage is preferably less than 50mol%, and more preferably less than 30mol%.

As described above, it is possible to easily obtain the polymer compound (a) by polymerizing (copolymerizing) the monomer constituent constituting the acid group and the polyalkylene glycol chain, for example, a monomer constituent (monomer composition) including at least the monomers constituting the acid group and the polyalkylene glycol chain (which are derived from respectively different monomers).

There is no particular limitation in how polymer compound is manufactured, that is, the monomer constituent may be polymerized by any polymerization method. For example, the various conventional and well-known polymerization methods listed in Embodiment 1 may be applied. Among those polymerization methods, the aqueous solution polymerization method is preferable in terms of reduction of polymerization cost (production cost), safety, etc.

The polymerization method may use any polymerization initiator, provided that the polymerization initiator can be decomposed by heat or oxidation-reduction reaction, so as to produce a radical molecule.

In case the aqueous solution polymerization method is applied, a water-soluble polymerization initiator is preferred. Specific examples of the polymerization initiator are the polymerization initiators listed in Embodiment 1. However, the polymerization initiators are not limited to those. The polymerization may be used solely, or two or more polymerization initiators may be used in combination. Moreover, an amount of the polymerization initiator may be arbitrarily set according to the composition of the monomer constituent and polymerization conditions.

The polymerization conditions such as reaction temperature and reaction time may be arbitrarily set according to the composition of the monomer constituent, that is, composition of monomer composition, and the type of the polymerization starter, and the like. However, the reaction temperature is preferably in a range between 0°C and 100°C, and more preferably in a range between 40°C and 95°C. Furthermore, a suitable reaction time is in a range between 3 hours and 15 hours, approximately. In case the aqueous solution polymerization method is applied, for example the batch adding method, the split adding method, the constituent dropping method, the power feed method, and the multi-stage dropping method may be applied as a feeding method to a reaction system of the monomer constituent, even there is no particular limitation as to the feeding method.

In manufacturing the polymer compound (a), the percentage of non-volatile constituent in which the polymer compound (a) is included, is an aqueous solution of polymer is not particularly limited. But it is preferable that the percentage is not more than 60weight%. An aqueous solution of polymer in which the percentage of non-volatile constituent is more than 60weight% gives too high viscosity and a low dispersion stability, thereby causing aggregation.

Moreover, it is preferable that the polymer compound (a) preferably has a weight average molecular weight not less than 1000 and not more than 500000. Moreover, it is more preferable that its lower limit (weight average molecular weight) is 2000, and its upper limit (weight average molecular weight) is 100000. If the weight average molecular weight is less than 1000, the pseudo-granulating property tends to be deteriorated. On the other hand, if the weight average molecular weight is more than 500000, the viscosity becomes too high, thereby failing to provide the polymer compound (a) sufficiently to the overall iron ore. This may result in deterioration of pseudo-granulating property.

The polymer compound (a) is solved in water or swollen by being , at least partially, neutralized by using a basic neutralizer. Alternatively, the polymer compound (a), as it is, is solved in water or swollen (without the neutralization). By doing this, a sufficient ability (effect) of the treatment agent of the present embodiment, in which the polymer compound (a) is used can be attained with a little amount of the treatment agent. Examples of the neutralizer are, specifically: alkaline metallic hydroxides such as sodium hydroxide and potassium hydroxide; basic carbonates such as sodium carbonate, sodium hydrogen carbonate, ammonium carbonate, and ammonium hydrogen carbonate; and bases including a nitrogen, such as aqueous ammonia, monoethanol amine; and the like. However, the neutralizer is not limited to those.

In this manner, the polymer compound (a) used in the treatment agent of the present embodiment is obtained. Even if a very small amount of the polymer compound (a) is used in granulating the raw material for iron and steel making, the polymer compound (a) is excellently effective in improving the pseudo-granulating property and improves productivity of a sintering machine. Namely, the treatment agent including the polymer compound (a) functions as the binder to granulate (to pseudo-granulate or to pellet) the raw materials for iron and steel making. In this way, it is possible to provide inexpensively the treatment agent suitable for the granulation treatment of the raw materials for iron and steel making, in order to obtain sinter.

Furthermore, the polymer compound (b), which is one of the dispersants for use in the present embodiment, that is, the β-naphthalene sulfonate formalin condensate is prepared by reacting, with concentrated sulfuric acid, naphthalene oil obtained by fraction of coal tar, so as to obtained sulfonated naphthalene oil, and then condensing the

sulfonated naphthalene oil with formaldehyde. For example, the polymer compound (b) has a structure represented by the following general formula (3):

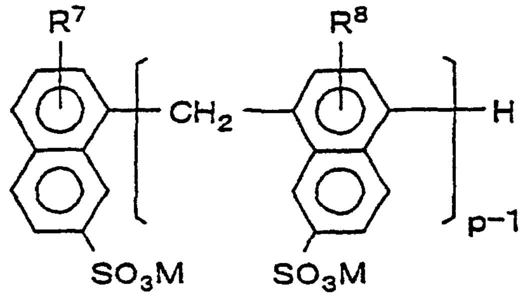

··· (3)

where independently $R^7$ and $R^8$ are a hydrogen atom, a $-CH_3$ group, or a $-CH_2CH_3$ group, M is an alkaline metallic ion, an alkaline earth metallic ion or a base including a nitrogen, and p is a positive integer ranging from 1 to 10000.

Note that, in many cases, the naphthalene oil used here is a mixture of naphthalene, thionaphthene, methylnaphthalene and the like. As the β-naphthalene sulfonate formalin condensate, it is possible to use a conventional and well-known β-naphthalene sulfonate formalin condensate, for example, a commercially-available β-naphthalene sulfonate formalin condensate. There is no particular limitation as to manufacturing conditions or the like, with respect to β-naphthalene sulfonate formalin condensate.

The melamine sulfonate formalin condensate, which is the polymer compound (c), is a water-soluble polymer compound prepared by condensation reaction of melamine in formaldehyde aqueous solution, and then sulfonation of the thus condensed melamine with sodium sulfite. For example, the polymer compound (c) has a structural unit represented by the following general formula (4):

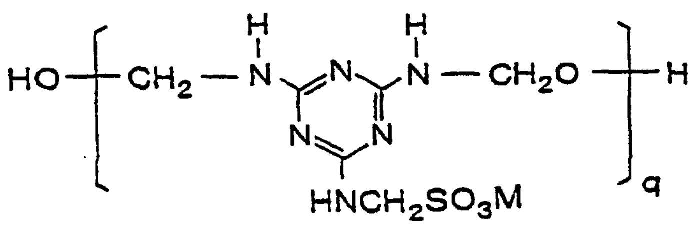

··· (4)

where M is an alkaline metallic ion, alkaline earth metallic ion or a base including a nitrogen, and q is a positive integer ranging from 1 to 10000. Again, it is possible to use a conventional and well-known melamine sulfonate formalin condensate, for example, a commercially available melamine sulfonate formalin condensate, and there is no particular limitation as to manufacturing conditions and the like as to the melamine sulfonate formalin condensate.

The poly-aromatic amino sulfonic acid, which is the polymer compound (d), is a water-soluble polymer compound prepared by condensing aminobenzene sulfonate and phenol with formaldehyde, the aminobezene sulfonate being prepared by sulfonation of aniline. For example, the polymer compound (d) has a structural unit represented by the following general formula (5):

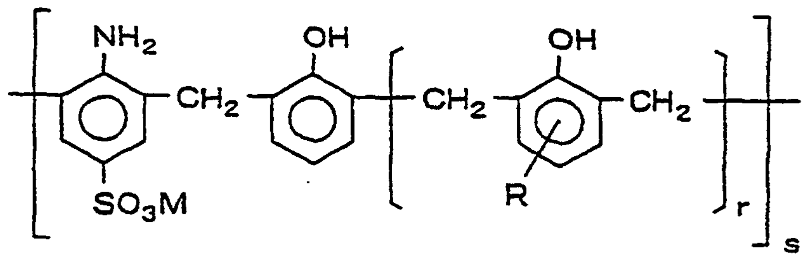

··· (5)

where M is an alkaline metallic ion, an alkaline earth metallic ion or a base including a nitrogen, and r and s are, independently, positive integers ranging from 1 to 10000. Again, it is possible to use a conventional and well-known poly-aromatic amino sulfonic acid, for example, a commercially available poly-aromatic amino sulfonic acid, and there is no particular limitation as to manufacturing conditions and the like as to the poly-aromatic amino sulfonic acid.

Further, the denatured lignin sulfonate, which is the polymer compound (e), is a polymer prepared by denaturing lignin sulfonate that is obtained by adding concentrated sulfuric acid to pulp waste solution, and conjugating thus denatured lignin sulfonate with β-naphthalene sulfonate and the like. For example, the polymer compound (e) has a structural unit represented by the following general formula (6):

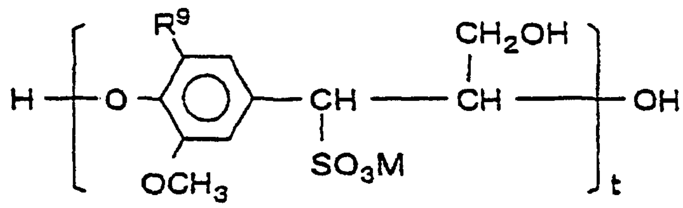

··· (6)

where $R^9$ is a group derived from β-naphthalene sulfonate formalin condensate or a -COOH group, M is a metallic ion, an alkaline earth metallic ion or a base including a nitrogen, and t is a positive integer ranging from 1 to 10000. Again, it is possible to use a conventional and well-known denatured lignin sulfonate, for example, a commercially available denatured lignin sulfonate, and there is no particular limitation as to manufacturing conditions and the like as to the denatured lignin sulfonate. The denatured lignin sulfonate has a better dispersion property than simple lignin sulfonate.

In general formulas (3) to (6), among substituent represented by M, examples of the alkaline metallic ion are, specifically, ions of alkaline metals such as potassium and sodium. Moreover, examples of alkaline earth metallic ion are for example, ions of alkaline earth metals such as calcium. Moreover, examples of base including a nitrogen are primary to quaternary amines.

It is preferable that those polymer compounds (b) to (e) have a weight average molecular weight not less than 1000 and not more than 500000. Moreover, its lower limit (weight average molecular weight) is preferably 2000, while its upper limit is preferably 100000. If the weight average molecular weight is less than 1000, the pseudo-granulating property tends to be deteriorated. If the weight average molecular weight exceeds 500000, the viscosity becomes too high, thereby failing to provide the polymer compound (b) to (e) sufficiently to the overall iron ore. This may result in deterioration of pseudo-granulating property.

Those polymer compounds (b) to (e) are characterized by including a sulfonate group. Because of the sulfonate group, the polymer compounds (b) to (e) are dispersant less susceptible to the influence of the polyvalent metals. The polymer compounds (b) to (e) have a dispersion stabilizing system different from that of the polymer compound (a). Namely, the polymer compounds (b) to (e) are stabilized by electrical repulsion between sulfonate ions.

On the other hand, the polymer compound including the acid group and the polyalkylene glycol chain, which is the polymer compound (a), is stabilized by a steric structure of the polyethylene glycol. Studies by the present assignees and others showed that the difference between the dispersion stabilizing system gave a higher pseudo-granulating property to the polymer compound (a), compared with the polymer compounds (b) to (e). Because of this, the polymer compound (a) is suitable as a binder for granulating iron ore.

Contents (percentage) of the polymer compounds (a) to (e) in the granulation treatment agent for iron and

steel making of the present embodiment may be arbitrarily set according to granulation property (type) of ore of raw materials for sinter (iron ore), types of the polymer compounds (a) to (e), a type of the granulating machine to be used. Thus, the granulation treatment agent may have any content (percentage) of the polymer compounds (a) to (e). However, in manufacturing sinter, it is preferable that a total percentage of the polymer compounds (a) to (e) to be added in the granulation treatment agent with respect to the raw materials for sinter (iron ore, Flux, fuel, and the like) (where the polymer compounds (a) to (e) may be used solely or two or more of the polymer compounds (a) to (e) may be used together in combination) is preferably so set as to have a lower limit preferably of 0.001weight%, and more preferably of 0.005weight%, and an upper limit preferably of 2weight%, and more preferably of 1%wt. If the total percentage of the polymer compounds (a) to (e) exceeds 2weight% with respect to the raw materials for sinter, the amount of the treatment agent with respect to the raw materials for sinter becomes too much, thereby producing large lumps of the raw materials for sinter, and failing to sinter interior of the lumps of the raw materials for sinter.

On the other hand, if the total percentage of the polymer compounds (a) to (e) is less than 0.001weight% with respect to the raw materials for sinter, the polymer compounds (a) to (e) may not be sufficiently functioned, especially, to improve the pseudo-granulating property in case the polymer compounds are used in granulating the raw materials for iron and steel making including particles of iron ore.

Moreover, in manufacturing pellets, the granulation treatment agent for iron and steel making of the present embodiment may have any percentage of the polymer compounds (a) to (e). However, it is preferable that a total percentage of the polymer compounds (a) to (e) to be added in the granulation treatment agent with respect to pellet materials (iron ore, dust, charcoal materials, and the like) (where the polymer compounds (a) to (e) may be used solely or two or more of the polymer compounds (a) to (e) may be used together in combination) is so set to have a lower limit preferably of 0.005weight%, and more preferably of 0.01weight%, and an upper limit preferably of 5weight%, and more preferably of 1weight%. If the total percentage of the polymer compounds (a) to (e) with respect to the pellet materials exceeds 5weight%, the amount of the granulation treatment agent for iron and steel making becomes too much with respect to the pellet materials, thereby causing excess granulation, which causes large lumps of pellet materials. This may cause adverse effects such as largely uneven particle diameters of the pellet materials.

An amount of the granulation treatment agent for iron and steel making to be added in the raw materials for sinter (iron ore, Flux, fuel, and the like) is not particularly limited. However, the amount of the granulation treatment agent for iron and steel making to be added in the raw materials for sinter is preferably so set as to have a lower limit preferably of 0.001weight% and more preferably of 0.005weight%, and an upper limit preferably of 10.0weight% and more preferably of 8.0weight%. Not particularly limited is an amount of the granulation treatment agent for iron and steel making to be added in the pellet materials (iron ore, dust, charcoal materials, and the like). However, the amount of the granulation treatment agent for iron and steel making has a lower limit preferably of 0.01weight%, and further preferably of 0.05weight%, and an upper limit preferably of 50weight%, and further preferably of 30weight%. If the amount of the granulation treatment agent for iron and steel making exceeds 50weight%, this results in excess granulation, thereby producing large lumps of pellet materials. Moreover, the lower limit of the amount of the granulation treatment agent for iron and steel making depends on granulation property of the pellet materials, an amount of added water, and the granulating machine to use. It is desirable to arrange such that the granulation treatment agent as little as possible is used.

In other words, if necessary, the granulation treatment agent for iron and steel making may further include a diluent such as water, in order to limit the viscosity of the polymer compound to be used, that is, the viscosity of the treatment agent depending on the type of the polymer compound to be used. The aqueous solution of the polymer including the polymer compound (a) obtained by the aqueous solution polymerization method or the polymer compounds (a) to (e) may be used as the granulation treatment agent for iron and steel making of the present embodiment, with addition of water or the like to the raw materials for sinter or the pellet materials.

Therefore, the contents (percentage) of the polymer compounds (a) to (e) included in the granulation treatment agent for iron and steel making of the present embodiment may be arbitrarily set depending on granulation property (type) of ore (iron ore) of the raw materials for sinter, the type of the polymer compounds (a) to (e), and the type of the granulating machine to be used, and there is no particular limitation as to the contents of the polymer compounds (a) to (e). In case water or the like is added to the raw materials for iron and steel making, 50weight% or more is preferable, 80weight% or more is more preferable, and 100weight% is especially preferable. In other words, it is especially preferable that the granulation treatment agent for iron and steel making is composed of a polymer compound selected from at least one type a compound selected from the group of the polymer compounds (a) to (e).

Moreover, if case the granulation treatment agent for iron and steel making contains water, the content (percentage) of the polymer compounds (a) to (e) in the granulation treatment agent for iron and steel making may be set arbitrarily, and is only required to satisfy the aforementioned conditions. Thus, there is no particular limitation as to the content (percentage) of the polymer compounds (a) to (e) in the granulation treatment agent for iron and steel making. However, the content (percentage) is preferably not less than 0.1weight% and not more than 80weight%, more preferably not less than 0.5weight% and not more than 70weight%, and especially preferably not less than 1weight% and

not more than 60weight%.

In addition, compositional ratio between the polymer compounds is not particularly limited, where two or more of the polymer compounds (a) to (e) are used together in combination.

Further, other constituent, for example, the other granulation additives such as burnt lime, or the like, which are conventional and well known, may be added, in necessary, to further improve the pseudo-granulating properties, as long as the addition of the other granulation additives hinders the properties of the polymer compounds (a) to (e), especially the property to improve the pseudo-granulating property when the polymer compounds are used in granulation of the raw materials for iron and steel making including particles of iron ore.

Because the polymer compounds (a) to (e) are not susceptible to the influence from the polyvalent metallic ions, the polymer compounds (a) to (e) unlikely deteriorate the granulation effect, and can sufficiently reduce the amount of the fine particle included in the raw materials for sinter, even if the polymer compounds (a) to (e) are used together with burnt lime. Because burnt lime is expensive and should be handled with care, therefore, it is preferable to carry out, in absence of burnt lime, the granulation treatment of the raw materials for iron and steel making by using the granulation treatment agent for iron and steel making of the present embodiment. It is preferable not to add burnt lime or, even if burnt lime is added, the content of the burnt lime is not more than 0.1weight% with respect to the iron ore. Moreover, conventionally, it is the general proactive to use burnt lime for granulating the iron ore. Even if a binder other than burnt lime is used, burnt lime is also used together in combination. However, for the improvement of the pseudo-granulating property in granulating the raw material for iron and steel making, it is more effective that the granulation treatment agent for iron and steel making includes no burnt lime, or is not used together with burnt lime. For this reason, if the granulation treatment agent for iron and steel making includes burnt lime, it is preferable that percentage of burnt lime in the granulation treatment agent for iron and steel making is set to be not more than 0.1weight% with respect to iron ore when the granulation treatment agent for iron and steel making is added. In addition, unknown is a binder other than burnt lime, which is highly effective to reduce the amount of the fine particles in the raw materials for sinter even if it is used together with burnt lime.

Even in a very small amount, the polymer compounds (a) to (e) of the present embodiment are excellent in improving the pseudo-granulating property can improve the productivity of the sintering machine when granulating the raw materials for iron and steel making. In the other words, the treatment agent functions as a binder for granulating (pseudo-granulating or pelletizing) the raw materials for iron and steel making. In this way, it is possible to provide inexpensively the treatment agent suitable for use in the granulation treatment of the raw materials for iron and steel making in order to obtain the sinter.

Especially, the granulation treatment agent for iron and steel making gives the granulated iron ore a GI index of 55% or more, even if the amount of the treatment agent is not more than 0.1weight% with respect to the iron ore.

There is no particular limitation in adding methods of the treatment agent to the raw materials for iron and steel making. However, especially preferable is a method of preparing a aqueous solution of the treatment agent and mixing the treatment agent into the water to be added of the granulating machine, or a method of preparing a aqueous solution of the treatment agent and spraying the aqueous solution onto the raw materials for iron and steel making, which is being stirred. By applying those methods, it is possible to add the treatment agent simply and evenly, and attain the pseudo-granulation without irregular agglomeration, thereby further reducing the fine particles.

Moreover, by adding the granulation treatment agent for iron and steel making of the present embodiment in the raw materials for iron and steel making, it is possible to perform the pseudo-granulation in a treatment method of mixing, kneading, and granulating part of the raw materials for iron and steel making, and then mixing the part in the rest of the raw materials so to granulate the rest of the raw materials, depending on granulation degree distribution, granulation property, composition or the like of the brands of the raw materials including the Flux, fuel, and the like. For example, the part of the raw materials for iron and steel making has a difficulty to be granulated, the addition of the granulation treatment agent for iron and steel making makes it possible to pseudo-granulate the raw materials for iron and steel making having the difficulty to be granulated. Therefore, it is possible to perform the granulation effectively with a small amount of the treatment agent.

As descried above, it is possible to arbitrarily select combinations of the raw materials for iron and steel making, the granulating machine, and the timing for the addition, when the granulation treatment agent for iron and steel making of the present embodiment is used. Therefore, there is no particular limitation in the combinations. Namely, even in the method of granulation treatment in which a plurality of treatment methods are included, and the respective treatment methods are combined with the granulation treatment agent for iron and steel making, the pseudo-granulation can be attained by the addition of the granulation treatment agent for iron and steel making of the present embodiment into the raw materials for iron and steel making. Of course, it is possible to use, to the well-known pseudo-granulation method (means), the granulation treatment agent for iron and steel making of the present embodiment.

As described above, a method of carrying out a granulation treatment on raw materials for iron and steel making of the present embodiment is so arranged that the granulation treatment agent of the present embodiment, that is, the granulation treatment agent for iron and steel making is added to the raw materials. This provides the

method of granulation treatment suitable for the granulation treatment (pseudo-granulation or pelletization) of the raw materials for iron and steel making (raw materials for sinter or pellet materials) including fine particles of iron ore, in order to obtain the sinter.

Moreover, as described above, a method of carrying out a granulation treatment on raw materials for iron and steel making of the present embodiment is preferably arranged such that the granulation treatment agent of the present embodiment in a form of an aqueous solution is added. This provides the method of granulation treatment, which has a more excellent effect to reduce the amount of the fine particles in the granulation treatment (pseudo-granulation or pelletization) of the raw materials for iron and steel making (raw materials for sinter or pellet materials) including the fine particles of the iron ore, and with which the productivity of the sintering machine is improved.

Further, as described above, a method of carrying out a granulation treatment on raw materials for iron and steel making of the present embodiment is so arranged that the granulation treatment agent of the present embodiment, is preferably arranged such that the granulation treatment agent for iron and steel making to be added is in a range between 0.001weight% and 50weight% with respect to the raw materials for iron and steel making. This provides the method of granulation treatment, which has a more excellent effect to reduce the amount of the fine particles in the granulation treatment (pseudo-granulation or pelletization) of the raw materials for iron and steel making (raw materials for sinter or pellet materials) including the fine particle of iron ore, , and with which the productivity of the sintering machine is improved.

Furthermore, as described above, a method of carrying out a granulation treatment on raw materials for iron and steel making of the present embodiment is preferably arranged so as to include a plurality of treatment steps, wherein the granulation treatment agent is combined with the respective treatment methods. This provides the method of granulation treatment, which has a more excellent effect to reduce the amount of the fine particles in the granulation treatment (pseudo-granulation or pelletization) of the raw materials for iron and steel making (raw materials for sinter or pellet materials) including the fine particle of iron ore, and with which the productivity of the sintering machine is improved.

[Embodiment 4]

A method of carrying out a granulation treatment on raw materials for iron and steel making in accordance with the present embodiment, which is a method of carrying out a granulation treatment by subjecting the raw materials (raw materials for sinter or pellet materials) to mixing, adjustment of the water content, etc., is arranged in such a manner that the granulation treatment is carried out by adding fine particles to the raw materials which already include iron ore in the form of fine particles, and especially in the present embodiment, the fine particles added to the raw materials have $\zeta$ potential not less than -55mV according to $\zeta$ potential test (discussed later) by an electrophoresis light scattering method.

Also, a method of carrying out a granulation treatment on raw materials for iron and steel making in accordance with the present embodiment, which is a method of carrying out a granulation treatment by subjecting the raw materials (raw materials for sinter or pellet materials) to mixing, adjustment of the water content, etc., is arranged in such a manner that fine particles and a fine particle adjuvant for adjusting a $\zeta$ potential of the fine particles are selected so as to be added to the raw materials, so that the $\zeta$ potential is not less than -55mV according to $\zeta$ potential test (discussed later) by an electrophoresis light scattering method.

The fine particles used in the granulation treatment on raw materials for iron and steel making in accordance with the present embodiment, i.e. the fine particles added to the raw materials are fine particles not more than 200µm in average diameter.

The function of the fine particles in the granulation treatment is, although not really clear, to enhance the aggregating force of the water in which the fine particles are dispersed. The fine particles are dispersed in water which exists on the occasion of granulation of the raw materials, for instance, additional water used for the granulation and the water content which is introduced by the raw materials, and this increases the aggregating force of the water in which the fine particles are dispersed, so that the pseudo-granulating property and the strength of the pseudo-particles after the granulation are improved and also the disintegration of pseudo-particles in a sintering bed on the occasion of sintering is restrained, and consequently the product yield, etc. after the sintering can be improved.

The raw materials usually include fine particles which are originally adhered to and mixed in the raw materials. For instance, to iron ore which is used as the raw materials, fine particles of the iron ore and clay such as kaolin clay are adhered. Also, to limestone, fine particles of the limestone (calcium carbonate) are included. Moreover, as described above, in some cases, the dust which is produced in a steel-making plant, for instance, dust produced in a blast furnace, a sintering furnace, a converter, etc., is used as the compounded raw materials, on the occasion of granulating the raw materials for iron and steel making.

However, these fine particles generally have low atutodispersion power in water and hence it is not possible to significantly improve the pseudo-granulating property. Using water, the granulation of iron ores can be carried out

to some extent. This is because (i) fine particles not more than 200μm in diameter, which are adhered to the surface of the iron ores, and (ii) fine particles not more than 200μm in diameter included in dust and Flux such as limestone, serpentinate, and silica stone, etc. are slightly dispersed in the water, and the aggregating force of this fine-particle-dispersed water causes iron ores not less than 200μm in diameter to be bound, so that pseudo-particles are constructed. However, since the fine particles originally included in the raw materials are adhered to large particles or aggregated each other, the amount of the fine particles which are capable of dispersing in the water is small. Also, since the pseudo-particles often form aggregates and water is captured in these aggregates, the amount of the fine-particle-dispersed water becomes small as a result. For these reasons, it is not possible to adequately carry out the pseudo-granulation by granulating only using water.

In contrast, the fine particles, whose absolute value of the ζ potential measured by the ζ potential test (discussed later) using the electrophoresis light scattering method is large, excels in dispersion stability in water, so that the amount of particles dispersed in the water can be increased.

In the present embodiment, the ζ potential of fine particles is a part of the potential difference at an interface between a solid body and a liquid body, the part effectively working for a electro-kinetic phenomenon. This part can be measured as, for instance, a potential figured out from the electro-kinetic phenomena such as electrophoresis, electroendosmosis, flow potential, and sedimentation potential. That is to say, when relative motion occurs between a solid body and a liquid body, the potential difference between the solid layer and the liquid body, which determines the electro-kinetic phenomenon, is the ζ potential (electro-kinetic potential).

In the present embodiment, the ζ potential of fine particles is measured in accordance with a method which will be comprehensively described in the following example.

In the present embodiment, if the absolute value of the ζ potential of fine particles, which is measured by the ζ potential test (discussed later) using the electrophoresis light scattering method, is large, it is considered that the absolute value of the ζ potential of fine particles on the occasion of actually carrying out the granulation using the granulation agent for iron and steel making is large.

In the present embodiment, there is a tendency such that, the larger the absolute value of the ζ potential on the occasion of granulating fine particles is, the better the granulating property becomes. The above-mentioned ζ potential has the best dispersion property, because its electric repulsion is 0 when 0V. For this reason, the larger the absolute value of the ζ potential is, the better the dispersion property is.

Thus, when the absolute value of the ζ potential is large, electric repulsion between the particles is strong. On this account, the fine particles having large absolute value of the ζ potential hardly aggregate so as to steadily exist as dispersing elements. However, inventors of the present invention have found that the pseudo-granulating property is not sufficiently improved even if fine particles whose surfaces bear positive charges. Thus, it is preferable that the fine particles used in the present embodiment has surfaces bearing negative charges, and the ζ potential of the fine particles preferably has a larger negative value.

As a result of committed research, the inventors of the present invention has found that the fine particles, whose ζ potential measured by the ζ potential test (discussed later) using the electrophoresis light scattering method is not more than -55mV, excel in the dispersion stability and effectively function as binders for the granulation of raw materials for iron and steel making. On this account, in the method of carrying out the granulation treatment on the raw materials for iron and steel making in accordance with the present invention, the fine particles whose ζ potential measured by the ζ potential test (discussed later) using the electrophoresis light scattering method is not more than -55mV are utilized as binders for granulation of the raw materials for iron and steel making.

However, there are few particles found in nature, whose absolute value of the ζ potential is large. For this reason, the present embodiment is arranged in such a manner that (i) fine particles, which are adjusted in advance so that the ζ potential measured by the ζ potential test (discussed later) using the electrophoresis light scattering method is not more than -55mV, is added or (ii) fine particles and a fine particle adjuvant for adjusting the ζ potential of the fine particles are concurrently used, so that the ζ potential of the fine particles, which are binders for the granulation of raw materials for iron and steel making, is adjusted and the granulation treatment is carried out.

For instance, in the present embodiment, the fine particles and the fine particle adjuvant for adjusting the ζ potential of the fine particles are selected so as to be added to the raw materials, so that the ζ potential is not less than -55mV according to the ζ potential test (discussed later) by the electrophoresis light scattering method, and hence the pseudo-granulating property of the raw materials is significantly improved.

Therefore, the granulation treatment agent for iron and steel making used in the present embodiment may be the fine particles whose ζ potential is not less than -55mV according to the ζ potential test (discussed later) by the electrophoresis light scattering method, or may be a combination of fine particles and the fine particle adjuvant for adjusting the ζpotential of the fine particles to be not more than -55mv. Also, when the fine particles and the fine particle adjuvant are concurrently used, the fine particles and the fine particle adjuvant may be separately added on the occasion of granulation, or, for instance, fine particles, which have been subjected in advance to a surface treatment such as mixing the fine particles and the fine particle adjuvant under water, may be added to the raw materials.

The effect of the fine particle adjuvant is, for instance, to adhere to the fine particles so as to improve a surface potential (ζ potential) of the fine particles. This enables to adjust the surface potential of the fine particles on the occasion of granulation.

The above-mentioned fine particles, i.e. the fine particles separately added to the raw materials for iron and steel making may be identical with particles included in the raw materials, such as iron ore in the form of fine particles, kaolin clay, limestone (calcium carbonate) in the form of fine particles, iron powder, iron ore in the form of fine particles such as pellet feed, and various kinds of dust. Alternatively, the above-mentioned fine particles may be fine particles not included the raw materials for iron and steel making, such as colloidal silica, fly ash, fumed silica, and anhydride.

That is to say, although not particularly limited to any type as long as having not more than 200μm in average diameter, examples of the fine particles used in the present embodiment are such as iron ore, Flux for iron and steel making, limestone (calcium carbonate), iron powder, iron ore in the form of fine particles such as pellet feed, kaolin clay, bentonite, dust which is produced in a steel-making plant (dust of the raw materials of iron making), fumed silica, fly ash, anhydride, and colloidal silica. Among these substances, calcium carbonate, iron powder, and kaolin clay are particularly preferable, since they excel the pseudo-granulating property and hence the productivity of the sintering machine is further improved.

Moreover, although it is satisfactory that the average particle diameter of the fine particles is not more than 200μm, for improving the granulating property and the adherence, the average particle diameter is preferably within the range of not less than 0.01μm to not more than 150μm, and more preferably within the range of not less than 0.02μm to not more than 100μm. The pseudo-granulating property tends to degrade when the average particle diameter is less than 0.01μm. Also, it is not possible to acquire good pseudo-granulating property when the average particle diameter is not less than 200μm, and hence this arrangement is not favorable. Since the particle diameter suitable for the dispersion stability varies in accordance with the types of the raw materials for iron and steel making, it is preferable that the average particle diameter is determined within the above-mentioned range, in accordance with the types of the raw materials for iron and steel making.

The ζ potential of the fine particles can be adjusted by adding, for instance, polymer compounds including an acid group or a basic group. For instance, provided that a fine particle adjuvant including polymer compounds including an acid group and/or its salts is added to the fine particles, the polymer compounds adhere to the surfaces of the fine particles so that the ζ potential of the surfaces of the fine particles decreases. For instance, provided that poly(sodium acrylate) is added to the fine particles, the poly(sodium acrylate) adheres to the surfaces of the fine particles and this causes the decrease of the ζ potential of the fine particles having the surfaces to which the poly(sodium acrylate) are adhered, and the absolute value of the ζ potential becomes larger.

Thus, the present embodiment is arranged in such a manner that the fine particles and the fine particle adjuvant for adjusting the ζ potential of the fine particles to be not more than -55mV are concurrently used, so that the surface potential of the fine particles on the occasion of actual granulation is adjusted.

The fine particle adjuvant is not limited to any particular type as long as the same can reduce the ζ potential of the fine particles measured by the ζ potential test (discussed later), i.e. can adjust the ζ potential of the surfaces of the fine particles to have a larger negative value. However, inclusion of polymer compounds including an acid group and/or its salts as an essential ingredient is preferable, since the above-mentioned effects becomes greater. The polymer compounds including the acid group and/or its salts decompose not only the aggregates of fine particles added to the raw materials afterwards but also the aggregates of fine particles not more than 200μm in diameter, which are originally included in the compounded raw materials, so that the water content in the aggregates are freed by dispersing the fine particles in the water. Moreover, since the amount of particles dispersed in the water can be increased, it is possible to increase the number of binders for the granulation of raw materials for iron and steel making.

Thus, the fine particle adjuvant preferably includes polymer compounds, especially polymer compounds including an acid group and/or its salts, as essential ingredients. Polymer compounds in accordance with the present embodiment are organic/inorganic polymer compounds whose weight average molecular weight is not less than 1000, and the lower limit of the weight average molecular weight is preferably 4000, more preferably 7000, and most preferably 10000. Provided that the weight average molecular weight is less than 1000, the pseudo-particles to be acquired may have low strength, so that the pseudo-particles are disintegrated during the transportation using a belt conveyor, etc., and as a result it may be impossible to carry out adequate granulation. In contrast, although the upper limit of the weight average molecular weight is not specifically limited, too heavy weight average molecular weight causes the viscosity to be too high, so that the polymer compound is not mixed with the fine particles uniformly and the pseudo-granulating property could be deteriorated. On this account, the upper limit of the weight average molecular weight of the above-mentioned polymer compounds are preferably 1000000, more preferably 500000, and most preferably 100000.

The polymer compounds are not limited to any particular type as long as the same can reduce the ζ potential of the fine particles measured by the ζ potential test (discussed later), i.e. can adjust the ζ potential to have a larger negative value. More specifically, for instance, what are preferably used for the polymer compounds are polymer compounds into which an acid group or its salt is introduced by polymerizing (copolymerizing), as a polymerizable constituent (monomer constituent), at least one monomer selected from the group consisting of monomers containing an acid group and these salts exemplified in Embodiment 1.

When using the salts of the monomer containing the acid group, an example of the neutralized base thereof is the neutralized base exemplified in Embodiment 1, although not particularly limited to this.

As to the acid group derived from the monomer, only one type of the acid group may be included, or may be more than one type of the acid groups may be included. Among the acid groups derived from the monomer, a carboxyl group and/or its salts is preferable, and what is further preferable is an acid group introduced by polymerizing (copolymerizing), as a polymerizable constituent, at least one monomer selected from the group consisting of (meth)acrylic acid, maleic acid, and these salts.

Also, an example of the monomer (copolymerizable monomer), which can be copolymerized with the monomer containing an acid group, is a monomer including a polyalkylene glycol chain as exemplified in Embodiment 1, although not particularly limited to this. One type or more than one types of the monomer(s) including the polyalkylene glycol chain may be used.

Among the monomers including the polyalkylene glycol chain, a monomer, which can be easily acquired, is preferably for improving the pseudo-granulating property, and has good polymerizing property, is the monomer including a polyalkylene glycol chain whose chain length is not less than 5mol and not more than 100mol, preferably not less than 20mol and not more than 100mol, when converted to ethylene oxide.

Other specific examples of the monomer (copolymerizable monomer), which can be copolymerized with the monomer containing an acid group, include, but are not limited to, alkylester (meth)acrylate; cycloalkylester (meth) acrylate; ester (meth)acrylate- containing a hydroxyl group; styrene and its derivatives; (meth)acrylamide and its derivatives; vinyl acetate; (meth)acrylonitrile; N-vinyl-2-pyrrolidone; monomers containing a base; crosslinking (meth) acrylamide monomers; silane monomers in which a hydrolytic group is directed bonded to a silicon atom; monomers containing an epoxy group; monomers containing an oxazoline group; monomers containing a aziridine group; monomers containing halogen group; multifunctional (meth)acrylic acid esters having multiple unsaturated radicals in the molecule; multifunctional (meth)acrylamides having multiple unsaturated radicals in the molecule; multifunctional allyl compounds having multiple unsaturated radicals in the molecule; allyl (meth)acrylate; divinyl benzene, as exemplified in Embodiment 1. Any of the monomers may be used alone; alternatively, two or more of them may be used together, as required.

Moreover, in addition to the above-mentioned monomers, it is possible to use, for instance, chain transfer agents as exemplified in Embodiment 1, in order to adjust the molecular weight. Any of the chain transfer agents may be used alone; alternatively, two or more of them may be used together, as required. The amount of the chain transfer agent to be used is not specifically limited, but it is preferable that the amount is within the range of 0.005-0.15mol with respect to 1mol of a monomer containing an acid group or a monomer copolymerizable with the monomer containing an acid group.

On the occasion of polymerizing the polymer compound including an acid group and/or its salts, the lower limit of the percentage (mixing rate of raw materials) of the monomer including an acid group and/or its salts in the whole monomers in the raw materials is, preferably 5mol%, more preferably 60mol%, further preferably 80mol%, and most preferably 90mol%.

The manufacturing method of the polymer compound including an acid group or its salts, i.e. the method of polymerization of the monomer component is not specifically limited, and hence, for instance, it is possible to use conventional and well-known polymerization methods as exemplified in Embodiment 1. Among those methods, the aqueous solution polymerization method is preferable in view of polymerization cost (production cost), safety, etc.

The polymerization initiator used in the polymerization only needs to a compound which produces radical molecules as it decomposes thermally or in a redox reaction. Further, in aqueous solution polymerization, water-soluble polymerization initiators are preferred. Specific examples of the polymerization initiator include, but are not limited to, the polymerization initiators exemplified in Embodiment 1. Any of these polymerization initiators may be used alone, or alternatively two or more of them may be used together The amount of the polymerization initiator to be used may be appropriately specified according to the composition of the monomer constituent, polymerize conditions, etc.

Although the polymerization conditions such as reaction temperature and reaction time are appropriately arranged in accordance with the composition of the monomer composition and the type of the polymerization initiator, the reaction temperature is preferably within the range of 0-150°C, and more preferably within the range of 40-120°C. The reaction time is preferably around 1-15 hours.

Specific examples of the methods of feeding the monomer component to the reaction system on the occasion of adopting the aqueous solution polymerization include, but are not limited to, a batch adding method, a split adding method, a dropping method, a power feed method, and a multi-stage dropping method.

The concentration of nonvolatile matter including the above-mentioned polymer compounds, included in an aqueous solution of a polymer acquired on the occasion of adopting the aqueous solution polymerization, is preferably

not more than 70weight%, although not specifically limited. The aqueous solution of a polymer in which the concentration of the nonvolatile matter is more than 70weight% could cause the aggregation, since the viscosity is too high so that the dispersion stability is lost.

Any of the above-mentioned polymer compounds may be used alone; alternatively, two or more of them may be used together, as required. Among those polymer compounds, a polymer compound including carboxyl group and/or its salts is preferably chosen, since this polymer compound can reduce the ζ potential of fine particles measured by the ζ potential test (discussed later) and effectively improve the dispersion stability of the fine particles, and the pseudo-granulating property can be improved with a small amount of this polymer compound.

Among the above-mentioned polymer compounds, what is particularly preferable is a polymer compound which includes a carboxyl group and/or its salts and whose weight average molecular weight is within the range of not less than 1000 to not more than 1000000 (hereinafter, this polymer compound will be referred to as a polymer compound (P) for the sake of simplicity). The polymer compound (P) can be acquired by, for instance, using the above-mentioned method, (co)polymerizing (i) a monomer including a carboxyl group alone or (ii) the monomer including a carboxyl group with other monomers which are polymerizable with the monomer. Alternatively, the polymer compound (P) can be acquired by subjecting, (i) a monomer including a carboxyl group alone or (ii) the monomer including a carboxyl group and other monomers copolymerizable with the monomer, to the addition reaction in the presence of a well-known polymer compound. The well-known polymer compound is such as polyethylene glycol and polyvinylpyrrolidone, whose weight average molecular weight is in the range of not less than 1000 to not more than 1000000.

Also, the polymer compound (P) can be acquired by carrying out any one of hydrolysis, oxidation, and reduction, with respect to a well-known polymer compound. The well-known polymer compound used in this case is, for instance, such as a polyacrylamide and methyl polyacrylate, whose weight average molecular weight is within the range of not less than 1000 to not more than 1000000.

Among the above-mentioned polymer compounds (P), poly(sodium acrylate) and polyacrylic ammonium are the most preferable to be used, since these substances are cheap and also can reduce the ζ potential of the fine particles measured by the ζ potential test (discussed later) and improve the dispersion stability of the fine particles in a most effective manner.

As described above, according to the present embodiment, to the raw materials for iron and steel making, either (i) fine particles whose ζ potential is not more than -55mV according to ζ potential test (discussed later) or (ii) fine particles and a fine particle adjuvant being combined so that the ζ potential of the fine particles is not more than -55mV when the fine particle adjuvant is used, is added, so that it is possible to secure an enough amount of fine-particle-dispersed water to be binders without increasing the amount of added water, and also it is possible to increase the amount of fine particles in the fine-particle-dispersed water. On this account, since the present embodiment enables to improve the pseudo-granulating property, the amount of fine particles after the granulation significantly increases, even if the fine particles are added.

The ζ potential of fine particles added as granulation binders of the raw materials for iron and steel making in the present embodiment, i.e. the ζ potential of fine particles measured by the ζ potential test (discussed later), is not more than -55V, preferably not more than -60mV, and further preferably not more than -65mV.

Moreover, when fine particles and a fine particle adjuvant are combined so as to be used with respect to the raw materials for iron and steel making, the combination of the fine particles and the fine particle adjuvant is selected so as to keep the ζ potential of fine particles measured by the ζ potential test (discussed later) to be not more than -55mV. Also in this case, the ζ potential of fine particles is preferably not more than -60mV, and more preferably not more than -65mV.

In the present embodiment, the amount (rate) of the fine particles to be added to the raw materials for iron and steel making is appropriately arranged in accordance with the type and combination of the raw materials so as not to be specifically limited. However, the amount (rate) with respect to the raw materials is preferably within the range of not less than 0.01weight% to not more than 30weight%, more preferably within the range of not less than 0.1weight% to not more than 20weight%. When the amount to be added is less than 0.01weight%, it is not possible to adequately increase the amount of the fine particles, which are to be binders, in the fine-particle-dispersed water, so that the pseudo-granulation is not adequately promoted and the amount of the fine particles is not really reduced. Moreover, it becomes difficult to prevent the disintegration of pseudo-particles in the sintering bed. In contrast, when the amount is more than 30weight%, wastes such as a large amount of slag are increased and also the amount of the fine particles are even increased, and this causes the degradation of permeability so that the productivity of the sintering machine could be decreased.

Moreover, the amount of the polymer compound used in the present embodiment is appropriately arranged in accordance with the types of the polymer compound and the fine particles to be used, and hence not specifically limited. However, the amount is preferably not more than 2weight% with respect to the raw materials for iron and steel making, and more preferably not more than 0.5weight%. When the polymer compound more than 2weight% is used with respect to the raw materials for iron and steel making, the entirety becomes in the state of slurry or aggregated,

and as a result permeability of the resultant particles (aggregates) deteriorates.

Moreover, the lower limit of the amount of the above-mentioned polymer compound is preferably 0.001weight% with respect to the raw materials for iron and steel making. When the amount of the polymer compound is less than 0.001weight%, the pseudo-granulating property is hardly improved. Although the amount of the polymer compound to be used varies in accordance with conditions such as the granulating property of raw materials to be used, the amount of water to be added, the type of a granulating machine to be used, etc., it is preferable that the amount of the polymer compound is arranged so as to be minimized.

Moreover, to the raw materials for iron and steel making, the polymer compound and other substances such as, for instance, conventional and well-known granulation additives such as burnt lime and a thickening agent may be concurrently added as the need arises, as long as the improvement of the pseudo-granulating property, on the occasion of granulation of the raw materials for iron and steel making including iron ore in the state of fine particles, is not obstructed, or in order to further improve the pseudo-granulating property.

Although the percentage (amount) of the polymer compound in the fine particle adjuvant is not specifically limited, it is preferable that the amount to be used is within the above-mentioned range with respect to the raw materials for iron and steel making.

Incidentally, the ratio of the added water to the raw materials for iron and steel making is as follows: the total amount of the water added on the occasion of granulation and the water content which is introduced by the raw materials is eventually, (i) with respect to the raw materials for sinter, within the range of not less than 4weight% to not more than 15weight%, and more preferably within the range of not less than 5weight% to not more than 12weight%, and (ii) with respect to the pellet materials, within the range of not less than 5weight% to not more than 50weight%, and more preferably within the range of not less than 7weight% to not more than 30weight%.

Thus, the lower limit of the amount of the polymer compound included in the fine particle adjuvant is preferably 0.01weight% and more preferably 0.08weight%, when the polymer compound is acquired in the state of an aqueous solution of a polymer. In the meantime, the upper limit of the amount of the above-mentioned polymer compound is preferably 70weight% and more preferably 60weight%. Also, the lower limit of the water content in the fine particle adjuvant is preferably 30weight%, and more preferably 40weight%. In contrast, the upper limit is preferably 99.99weight%, and more preferably 99.92weight%.

When the fine particle adjuvant is added, the amount of the polymer compound with respect to the fine particles is preferably in the range of not less than 0.003weight% to 1000weight%, and more preferably not less than 0.1weight% to not more than 100weight%.

In the present embodiment, although not specifically limited, a method of adding the above-mentioned fine particles and the fine particle adjuvant (a polymer compound and other fine particle adjuvants to be used as the need arises) to the raw materials for iron and steel making is, for instance, such as: a method of compounding the fine particles in the raw materials in advance; a method of adding the fine particles on the occasion of mixing the materials using a mixer, etc.; a method of adding the fine particles on the occasion of carrying out the granulation by splaying added water; and a method of dispersing the fine particles in the added water so as to splay the same, etc.

Also, examples of a method of adding the fine particle adjuvant such as a polymer compound includes: a method of splaying the fine particle adjuvant before or after mixing the materials; a method of splaying the fine particle adjuvant on the occasion of mixing the materials; a method of splaying the fine particle adjuvant separately with the added water, on the occasion of granulation; and a method of splaying the fine particle adjuvant by mixing the same with the added water, etc. Alternatively, there are other methods such that the fine particles which are dispersed in the added water using the fine particle adjuvant is splayed so that the granulation is carried out, etc. The fine particles and the fine particle adjuvant may be added altogether, or may be added separately.

As described above, the method of carrying out the granulation treatment on raw materials for iron and steel making in accordance with the present embodiment is arranged in such a manner that, the granulation treatment is carried out either by adding (i) as binders for granulating the raw materials for iron and steel making, fine particles, whose $\zeta$ potential measured by the $\zeta$ potential test (discussed later) is not more than -55mV, or (ii) fine particles and a fine particle adjuvant which can reduce the $\zeta$ potential of the fine particles to be not more than -55mV are combined and at the same time added altogether or separately to the raw materials for iron and steel making.

According to this method, on the occasion of carrying out the granulation by adjusting the water content of the raw materials for iron and steel making so as to carry out the pseudo-granulation or pelletization, it is possible to steadily disperse the added fine particles in the water for granulation, for instance in the added water, and hence the pseudo-granulating property can be significantly improved.

On this account, with the present embodiment, it is possible to provide a method of carrying out a granulation treatment which is suitable for carrying out the granulation treatment (pseudo-granulation or pelletization) with respect to the raw materials for iron and steel making (raw materials for sinter or pellet materials), which includes iron ore in the state of fine particles.

Further, the present embodiment produces granulated iron ore (pseudo-particles) having a GI index of as

high as 85% or more, preferably, 88% or more, The GI index of granulated pseudo-particles refers to a value representing the proportion of fine particles adhering to a core particle. A greater GI index improves the granulating property, permeability during the course of sintering, permeability of sinter, and productivity of the sintering machine.

Further, the present embodiment is applicable to the treatment method which involves (i) mixing, kneading, and granulating part of the raw materials for iron and steel making according to granulation degree distribution, granulating property, composition, etc. of each commercial name of the raw materials for iron and steel making containing Flux, fuel, etc., and (ii) subsequent mixing with other raw materials for iron and steel making and granulating the mixture, where the granulation treatment method of the present embodiment can carry out pseudo-granulation by adding, to the raw materials for iron and steel making, fine particles or the fine particles and a fine particle adjuvant. When, for example, some of the raw materials for iron and steel making shows a poor granulating property, pseudo-granulating property can be improved by adding the fine particles or the fine particles and the fine particle adjuvant to those raw materials for iron and steel making showing a poor granulating property.

In the present embodiment, the raw materials for iron and steel making, the granulating machines, the timing and places of adding the components, that is, for example, the fine particles and the fine particle adjuvant may be freely chosen and used in any combination; their combined use is not limited in any particular manner. That is, the granulation treatment method of the present embodiment is applicable also to the granulation treatment method which includes multiple treatment steps and in which each treatment method can be combined with any method of combining the fine particles and the fine particle adjuvant, where the granulation treatment method of the present embodiment can carry out pseudo-granulation by adding the fine particles and the fine particle adjuvant to the raw materials for iron and steel making. The granulation treatment method of the present embodiment is of course also effective to carry out a publicly available pseudo-granulation method (means).

[Embodiment 5]

A method of carrying out a granulation treatment on raw materials for iron and steel making according to the present embodiment is a method in which raw materials for iron and steel making (sinter raw material or pellet material) containing fine particles of iron ore are subjected to a granulation treatment (turned into pseudo-particles or pellets) through the processes of, for example, mixing the raw material or adjusting the water content thereof, wherein the granulation treatment is carried out by adding such a granulating agent that would give a cohesive force evaluated value, which is determined by a cohesive force test using an iron ore (described later), of not less than 1.2, to the raw material for iron and steel making. The granulating agent for iron and steel making used in the present embodiment contains a polymer compound as an essential component. It is preferable that the granulating agent for iron and steel making further contains fine particles with an average particle diameter of not more than 200μm.

A method of carrying out a granulation treatment on raw materials for iron and steel making according to the present embodiment is a method in which raw materials for iron and steel making (sinter raw material or pellet material) containing fine particles of iron ore are subjected to a granulation treatment (turned into pseudo-particles or pellets) through the processes of, for example, mixing the raw material or adjusting the water content thereof, wherein the granulation treatment is carried out by selecting such a polymer compound and fine particles of a not more than 200μm average particle diameter that would give a cohesive force evaluated value, which is determined by a cohesive force test using an iron ore (described later), of not less than 1.2, and by adding such a polymer compound and fine particles to the raw material for iron and steel making.

The polymer compound, which is essential in the present embodiment, has a weight average molecular weight of not less than 1000. Specific examples of such a polymer compound include, but are not particularly limited to, water-soluble nonionic polymer compounds such as hydroxyethyl cellulose, methyl cellulose, polyethylene glycol, polyvinyl alcohol and denatured polyvinyl alcohol, water-soluble polymers that contain hydroxyethyl(meth)acrylate, water-soluble polymers that contain hydroxypropyl(meth)acrylate, and polyvinyl pyrrolidone; semisynthetic polymer compounds that contain an acid group and/or its salt, such as carboxyethyl cellulose and sodium ligninsulfonate; and condensed polymer compounds that contain an acid group and/or its salt, such as a condensate of β-naphthalenesulfonate and formalin, a condensate of melaminesulfonate and formalin, and polyaromatic amino sulfonic acid.

The polymer compound may also contain other types of acid groups and/or their salts. Specifically, for example, the polymer compound may contain an acid group and/or its salt that is introduced by polymerizing (co-polymerizing) at least one kind of monomer that is selected from the group consisting of acid group-containing monomers and their salts, as exemplified in Embodiment 1, as a polymerizable constituent (monomer constituent).

Note that, when the monomer is a salt of the acid group-containing monomer, any of the neutralized bases as exemplified in Embodiment 1 may be used without any limitation.

The monomer-derived acid groups as exemplified above may be used either individually or in a combination of two or more kinds. Among these monomer-derived acid groups, the carboxyl group and/or its salt are preferable. It is more preferable to use monomer-derived acid groups that are introduced by polymerizing (co-polymerizing) at least

one kind of monomer that is selected from the group consisting of (meth)acrylic acid, maleic acid, and their salts as a polymerizable constituent.

The acid group-containing monomer may be copolymerized with another monomer, as a polymerizable constituent, which is co-polymerizable therewith. One example of monomer that is co-polymerizable with the acid group-containing monomer is the polyalkyleneglycol-chain-containing monomer as exemplified in Embodiment 1. The polyalkyleneglycol-chain-containing monomer may be used either individually or in a combination of two or more kinds.

The polyalkyleneglycol-chain-containing monomers that are readily available are those containing the polyalkylene glycol chain with a chain length of not less than 5 molar equivalent to not more than 100 molar equivalent, or more preferably not less than 10 molar equivalent to not more than 100 molar equivalent, versus ethylene oxide. Such polyalkyleneglycol-chain-containing monomers are preferable in improving the pseudo-granulating property and in view of ease of polymerization.

The monomer that is co-polymerizable with the acid group-containing monomer may contain a structural unit that derives from various types of monomers (co-polymerizable monomers). Specific examples of such co-polymerizable monomers include, but are not particularly limited to, alkylester (meth)acrylates; cycloalkylester (meth)acrylates; ester (meth)acrylate containing a hydroxyl group; styrene and its derivatives; (meth)acrylamide and its derivatives; vinyl acetate; (meth)acrylonitrile; N-vinyl-2-pyrrolidone; monomers containing a base; crosslinking (meth)acrylamide monomers; silane monomers in which a hydrolytic group is directed bonded to a silicon atom; monomers containing an epoxy group; monomers containing an oxazoline group; monomers containing a aziridine group; monomers containing halogen group; multifunctional (meth)acrylic acid esters having multiple unsaturated radicals in the molecule; multifunctional (meth)acrylamides having multiple unsaturated radicals in the molecule; multifunctional allyl compounds having multiple unsaturated radicals in the molecule; allyl (meth)acrylate; and divinyl benzene, as also exemplified in Embodiment 1. These monomers may be used either individually or in a combination of two or more kinds, as required.

In addition to these monomers, for example, chain transfer agents as exemplified in Embodiment 1 may be used to adjust the molecular weight. These chain transfer agents may be used either individually or in a combination of two or more kinds, as required. An amount of chain transfer agent used is not particularly limited but a suitable amount is 0.005 moles to 0.15 moles with respect to 1 mole of the monomers, i.e., the acid group-containing monomer and the monomer that is co-polymerizable therewith.

The proportion of acid group in the polymer compound that contain the acid group or its salt is not particularly limited but a lower limit of not less than 5 mol% is preferable and a lower limit of not less than 10 mol% is more preferable.

A producing method of the polymer compound that contains an acid group or its salt, i.e., a polymerization method of the monomer constituent is not particularly limited. For example, various conventional polymerization methods as exemplified in Embodiment may be adopted. Among these methods, an aqueous polymerization method is preferable in view of lower polymerization cost (production cost) and safety it offers.

The polymerization initiator used in this polymerization method may be any compound as long as it decomposes and generates radicals in response to heat or in a redox reaction. Further, in the aqueous polymerization method, a water-soluble polymerization initiating agent is preferably used. Specifically, any of the polymerization initiating agents as exemplified in Embodiment 1 may be used without limiting to these agents. These polymerization initiating agents may be used either individually or in a combination of two or more kinds. Note that, an amount of polymerization initiating agent used is suitably adjusted according to such factors as a composition of the monomer constituent or polymerization conditions.

Polymerization conditions, such as reaction temperature or reaction time are suitably adjusted according to such factors as the monomer constituent, i.e., the constitution of the monomer composition, and the type of polymerization initiator. However, a reaction temperature of 0° to 150°C is preferable, and 40°C to 120°C is more preferable. A reaction time is preferably 1 to 15 hours. Examples of methods that can be used to supply the monomer constituent to the reaction system in the aqueous polymerization method include, but are not particularly limited to, a batch adding method, a split adding method, a constituent dropping method, a power feed method, and a multi-stage dropping method.

The polymer compounds may be used either individually or in a combination of two or more kinds. Among the foregoing polymer compounds, those containing an acid groups and/or its salt are suitably used. The weight average molecular weight of such polymer compounds containing an acid group and/or its salt is preferably not less than 1000 to not more than 1000000, and the upper limit thereof is preferably 2000000. With a weight average molecular weight less than 1000, the pseudo-granulating property tends to decrease. With a weight average molecular weight exceeding 1000000, the viscosity becomes too high to enable the polymer compound to be uniformly dispersed in the iron ore, with the result that the pseudo-granulating property may decrease. Among the foregoing polymer compounds, those containing a carboxyl group and/or its salt are particularly preferable. Most preferable are sodium polyacrylate or ammonium polyacrylate with a weight average molecular weight of not less than 1000 and not more than 200000, because these compounds are highly dispersive for fine particles and are inexpensive.

The raw material for iron and steel making generally contains fine particles already adhering thereto or mixed

therewith. For example, fine particles of iron ore or clay such as kaolin clay adhere to the iron ore that is compounded as the raw material for iron and steel making. Limestone contains fine particles of limestone (calcium carbonate) and the like. Further, in granulating the raw material for iron and steel making, dust produced in a steel-making plant, for example, dust generated in a blast furnace, sintering, or a revolving furnace may be used as the compound material.

However, the autodispersion power of such particles in water is weak and the pseudo-granulating property cannot be improved by itself. Granulation of iron ore proceeds to some degree with water. This is enabled by the formation of pseudo-particles that are produced by particles of not more than 200μm adhering to the surface of the iron ore, or by Flux such as limestone, serpentinite or silica stone, or by fine particles of not more than 200μm contained in dust, etc., which are dispersed in water and bind to iron ore larger than 200μm by the aggregating force of the aqueous dispersion. However, the amount of fine particles originally contained in the raw material for iron and steel making is small and only a small amount of fine particles are dispersed in water. In addition, the fine particles themselves often form an aggregate. This causes water to be trapped within the aggregate and as a result the amount of aqueous dispersion of fine particles is reduced. That is, formation of pseudo-particles is not sufficient with water alone. Further, in the pseudo-particles that are granulated only with water, the adherence of fine particles around the core particle is small and this is insufficient to reduce the amount of fine particles that are contained in the raw material for sinter. That is, the effect of reducing the sintering time by improving permeability of the sintering bed is small. Further, the pseudo-particles with weak adherence to the fine particles around the core particles may disintegrate during transport or when being inserted onto the sintering strand. In this case, fine particles are generated to cause permeability of the sintering bed to become poor and the strength of the sinter to become weak. For example, fine particles easily generate during crushing after sintering. As a result, the rejection rate of the sinter increases, the product yield decreases, and the productivity suffers.

The polymer compound, by breaking the aggregate of fine particles in the aqueous dispersion of fine particles, can liberate water trapped in the aggregate and increase the number of particles dispersed in water. Thus, the polymer compound serves to increase the binder that acts on the pseudo-particles and to improve aggregating force of the binder itself, so as to improve adhesion of the fine particles around the core particle. That is, the polymer compound is able to improve the pseudo-particle property, to increase the strength of the pseudo-particles after granulation, and to relieve disintegration of the pseudo-particles in the sintering bed during sintering. As a result, it is possible to improve permeability of the sintering bad and the product yield. It is also possible to improve strength of the sinter after sintering and to improve product yield, etc., thereby greatly improving the productivity of the sintering machine.

After extensive research, the inventors of the present invention have found that it was possible to obtain a desirable pseudo-granulating property in the process of actual granulation, to reduce the amount of fine particles contained in the sinter raw material, and to improve strength of the sinter and thereby improve productivity of the sintering machine, by using such a granulating agent for iron and steel making with a cohesive force evaluated value of not less than 1.2 in the granulation treatment of the raw material for iron and steel making, the cohesive force evaluated value being obtained in a cohesive force test using a granulating agent for iron and steel making containing the polymer compound, or using the polymer compound with fine particles, in which a measured adherence ($g/cm^2$) of the iron ore under specific conditions is divided by a measured adherence ($g/cm^2$) of the iron ore that is measured under the same conditions but using water instead of the granulating agent for iron and steel making. The cohesive force evaluated value is preferably not less than 1.3, or more preferably not less than 1.4.

In the present embodiment, the adherence ($g/cm^2$) of the iron ore in the cohesive force test is the magnitude of the force that binds surfaces of the iron ore together in the presence of the granulating agent or water alone. It is represented by the force per unit area required to separate adhered surfaces of the iron ore from each other.

The present embodiment assumes that the larger the cohesive force evaluated value in the cohesive force test, the stronger the adherence of the fine particles of iron ore with respect to the iron ore making up the core particle, i.e., the force per unit area required to separate the fine particles from the core particle of the iron core.

As mentioned earlier, the cohesive force evaluated value is determined by dividing the adherence ($g/cm^2$) of the iron ore using the granulating agent for iron and steel making by the adherence ($g/cm^2$) of the iron ore that is measured under the same conditions with the use of water alone. The adherence of the iron ore is measured according to the methods of Examples to be described later. In the present invention, the measurement of iron ore adherence was carried out using the adherence measuring device EB-3300CH (the product of Shimadzu Corporation) or the powder head tester PTHN-BBA (the product of Sankyo Pio-Tech. Co., Ltd.).

Further, after extensive research, the inventors of the present invention have found that aggregation of fine particles in the aqueous dispersion of fine particles can be prevented and a sufficient amount of aqueous dispersion of fine particles to be a binder can be ensured without increasing the amount of water added. It was found as a result that the adherence could be further improved compared with the case where the fine particles are not used, i.e., when, for example, only the polymer compound is used as the solids (active constituent) of the granulating agent for iron and steel making.

Thus, when using the polymer component in combination with the fine particles with an average particle

diameter of not more than 200μm, the polymer compound acts to break the aggregate of fine particles with an average particle diameter of not more than 200μm originally adhering to and mixed with the compound raw material (raw material for iron and steel making) and/or the aggregate of fine particles with an average particle diameter of not more than 200μm that was later added to the compound raw material, so as to disperse the fine particles in water. Thus, the polymer compound serves to liberate trapped water in the aggregate and to increase the number of particles dispersed in water, thereby increasing the binder that acts on the pseudo-particles and improving aggregating force of the binder itself.

Hence, by carrying out the granulation treatment using the polymer compound in combination with the fine particles with an average particle diameter of not more than 200μm, the number of fine particles in the aqueous dispersion of fine particles can be increased and the strength of the pseudo-particles after granulation can be further improved, so that even less number of pseudo-particles disintegrate in the sintering bed during sintering. As a result, permeability of the sintering bed improves and productivity of the sintering machine improves. Further, it becomes possible to improve strength and product yield, etc., of the sinter after sintering, thereby greatly improving productivity of the sintering machine. Further, the foregoing method, with the improved pseudo-granulating property, generates significantly less number of fine particles after granulation, despite that fine particles are added.

The fine particles additionally added to the raw material for iron and steel making may be of the same kind as that contained therein, for example, such as fine particles of iron ore, kaolin clay, fine particles of limestone (calcium carbonate), iron powder, fine particles of iron ore such as pellet feed, and various types of dust. Also, the fine particles additionally added to the raw material for iron and steel making may be of a different kind from those contained in the raw material for iron and steel making, for example, such as colloidal silica, fly ash, fumed silica, and anhydrite.

Namely, the type of additionally added fine particles is not particularly limited as long as the foregoing average particle diameter is satisfied. For example, at least one kind selected from the group consisting of iron ore, Flux for steel, limestone (calcium carbonate), kaolin clay, bentonite, iron powder, fine particles of iron ore such as palette feed, dust produced in a steel-making plant, fumed silica, fly ash, anhydrite, and colloidal silica can be used. Among these, iron ore, Flux for steel, limestone (calcium carbonate), kaolin clay, bentonite, iron powder, fine particles of iron ore such as palette feed, dust produced in a steel-making plant, fumed silica, fly ash, and inorganic fine particles such as anhydrite are preferable because they improve strength during and after sintering. Calcium carbonate and kaolin clay are particularly preferable because they further improve productivity of the sintering machine.

The average particle diameter of the fine particles, which is not more than 200μm, is preferably in a range of from not less than 0.01μm to not more than 100μm, or more preferably from not less than 21μm to not more than 75μm, because the granulating property and adhesion can be improved more desirably. An average particle diameter less than 0.01μm helps the fine particles to aggregate more easily. On the other hand, an average particle diameter exceeding 200μm is not preferable because the ability as the binder becomes poor and a high pseudo-granulating property cannot be obtained in this case. A suitable particle size for dispersion stability varies depending on the type of raw material for iron and steel making. It is therefore preferable that an average particle diameter of the fine particles be suitably adjusted within the foregoing ranges depending on the type of raw material for iron and steel making used.

In the present embodiment, the amount of polymer compound used is not particularly limited and is suitably adjusted according to the type of polymer compound used and the type and/or combination of raw materials for iron and steel making. However, an amount in a range of from not less than 0.001weight% to not more than 2weight% is preferable, and a range of from 0.005weight% to 0.5weight% is more preferable, with respect to the raw material for iron and steel making. With an amount of polymer compound less than 0.001weight%, the effect of addition in the polymer compound and therefore the foregoing adhesion cannot be obtained, with the result that the pseudo-granulating property does not improve. An amount of polymer compound exceeding 2weight% is not preferable because it causes the whole to turn into a slurry or a lump, with the result that permeability of the resulting particles (lump) becomes poor.

Preferably, such a design is chosen that the amount of polymer compound used is as small as possible, though it varies depending on such factors as a granulating property of the raw material for iron and steel making used, an amount of water added, and the type of granulating machine used.

An amount (proportion) of fine particles additionally added to the raw material for iron and steel making is not particularly limited and it is suitably adjusted according to the type of polymer compound and the type and/or combination of raw material for iron and steel making used. However, a range of from not less than 0.01weight% to not more than 30weight% is preferable, and a range of from not less than 0.1weight% to not more than 20weight% is more preferable, with respect to the iron ore. With an added amount less than 0.01weight%, the effect of preventing pseudo-particles from disintegrating in the sintering bed may not be obtained and the effect of improving adhesion and promoting pseudo-granulation becomes small, with the result that only a small amount of fine particles is reduced. An added amount exceeding 30weight% significantly increases waste such as slag, conversely increases the fine particles, and lowers permeability, with the result that productivity of the sintering machine may become poor.

Note that, the proportion of water added to the raw material for iron and steel making is such that the final

combined amount of water that is added during granulation and of water introduced into the raw material is from not less than 4weight% to not more than 15weight%, or more preferably from not less than 5weight% to not more than 12weight%, with respect to the sinter raw material, and from not less than 5weight% to not more than 50weight%, or more preferably from not less than 7weight% to not more than 30weight%, with respect to the palette material.

The lower content limit of the polymer compound in the granulating agent for raw material is preferably 0.01weight%, or more preferably 0.08weight%, when the polymer compound is obtained in the form of an aqueous solution of polymer. The upper content limit of the polymer compound is preferably 70weight%, or more preferably 60weight%. As to the content of water in the granulating agent for iron and steel making, the lower limit is preferably 30weight%, or more preferably 40weight%. The upper limit of water content is preferably 99.99weight%, or more preferably 99.92weight%.

The proportion of fine particles used, when it is added, with respect to 1 part by weight of the polymer compound is preferably in a range of from not less than 0.01 part by weight to not more than 30000 part by weight, or more preferably not less than 0.2 part by weight to not more than 4000 parts by weight.

After extensive research, the inventors of the present invention have found that it was possible to effectively improve granulation and adhesion, to improve the strength of the pseudo-particles after granulation, and to relieve disintegration of the pseudo-particles in the sintering bed during sintering and thereby greatly improve productivity and product yield of the sintering machine, for example, by the method in which kaolin clay or calcium carbonate with an average particle diameter of not more than 200μm is added as the fine particles to the composition raw material for iron and steel making that contains iron ore, and sodium polyacrylate with an weight average molecular weight in the range of not less than 1000 and not more than 200000 is added as the granulating agent for iron and steel making to the composition raw material for iron and steel making.

In the present embodiment, the method of adding the fine particles or polymer compound to the raw material for iron and steel making is not particularly limited. For example, the fine particles may be compounded in advance in the raw material for iron and steel making, may be added when mixing the raw material using a mixer, etc., may be added when dispersing the added water and carrying out granulation, or may be scattered by dispersing it in added water.

The polymer compound may be added, for example, by scattering it before or after adding the raw material, by scattering it when mixing the raw material, by scattering it in a separate system from the added water when granulating, or by scattering it by mixing with the added water. When using the fine particles and the polymer compound together, the fine particles dispersed in added water using the polymer compound may be scattered for granulating. The polymer compound and the fine particles may be added together or separately.

Further, other components, for example, publicly available, conventional other granulation additives, etc. such as burnt lime and thickening agents, may be added to the raw materials for iron and steel making where necessary as a granulating agent for iron and steel making, in addition to the polymer compound, so long as the added components do not inhibit pseudo-granulating property improving effects in the case of use for the granulation of raw materials for iron and steel making containing iron ore fine particles or so as to further improve pseudo-granulating property.

As described, in the method of carrying out a granulation treatment on raw materials for iron and steel making according to the present embodiment, granulation is carried out by adding the granulating agent for iron and steel making, which contains a polymer component as an essential constituent, to the raw material for iron and steel making, so as to improve a pseudo-granulating property and thereby increase strength of pseudo-particles after granulating, wherein the composition of the granulating agent for iron and steel making is so adjusted and so selected that the cohesive force evaluated value in the cohesive force test is not less than 1.2. Specifically, in the method of carrying out a granulation treatment according to the present embodiment, the polymer compound, or more preferably the polymer compound and fine particles are added as essential constituents to the raw material for iron and steel making, wherein the types and/or combinations of the polymer compound and the fine particles are so adjusted that the cohesive force evaluated value in the cohesive force test is not less than 1.2.

The method, in adjusting the water content of the raw materials for iron and steel making, carrying out a granulation treatment, and carrying out pseudo-granulation or pelletization, enables a predetermined amount or more fine particles to be stably dispersed in water for granulation, for example, added water, thereby greatly improving pseudo-granulating property, the strength of pseudo-particles, permeability during the course of sintering, and the productivity (production rate) of the sintering machine.

Thus, according to the present embodiment, a granulation treatment method can be offered which is suitable to carry out a granulation treatment (pseudo-granulation or pelletization) on raw materials for iron and steel making (raw materials for sinter or pelletizing materials) containing iron ore fine particles.

Further, the present embodiment, by carrying out the granulation treatment under the foregoing conditions, produces granulated iron ore (pseudo-particles) having a GI index of as high as 75% or more, preferably, 80% or more. The GI index of granulated pseudo-particles refers to a value representing the proportion of fine particles adhering to a core particle. A greater GI index improves the granulating property, permeability of sintered bed, and productivity of

the sintering machine.

Further, the present embodiment is applicable to the treatment method which involves (i) mixing, kneading, and granulating part of the raw materials for iron and steel making according to granulation degree distribution, granulating property, composition, etc. of each commercial name of the raw materials for iron and steel making containing Flux, fuel, etc., and (ii) subsequent mixing with other raw materials for iron and steel making and granulating the mixture, where the granulation treatment method of the present embodiment can carry out pseudo-granulation by adding, to the raw materials for iron and steel making, the polymer compound, or the polymer compound and the fine particles. When, for example, some of the raw materials for iron and steel making shows a poor granulating property, the cohesive force evaluated value and pseudo-granulating property can be improved by adding the polymer compound, or the polymer compound and the fine particles, to those raw materials for iron and steel making showing a poor granulating property.

In the present embodiment, the raw materials for iron and steel making, the granulating machines, the constituents, the times and places of adding the components, that is, for example, the polymer compound or the fine particles having the aforementioned average particle diameter may be freely chosen and used in any combination; their combined use is not limited in any particular manner. That is, the granulation treatment method of the present embodiment is applicable also to the granulation treatment method which includes multiple treatment steps and in which each treatment method can be combined with any method of adding the polymer compound and the fine particles, where the granulation treatment method of the present embodiment can carry out pseudo-granulation by adding the polymer compound and the fine particles to the raw materials for iron and steel making. The granulation treatment method of the present embodiment is of course also effective to carry out a publicly available pseudo-granulation method (means).

The invention being thus described, it will be obvious that the same way may be varied in many ways. Such variations are not to be regarded as a departure from the spirit and scope of the invention, and all such modifications as would be obvious to one skilled in the art are intended to be included within the scope of the claims.

BEST MODE FOR CARRYING OUT THE INVENTION

The present invention is explained in more detail below referring to examples. However, the present invention is not limited to those. Measurements were performed as to (a) an average particle diameter and GI index of the pseudo-particle described in Examples and Comparative Examples, (b) a fine particle weight, sinter strength, productivity, product yield, and clay dispersion force with respect to raw materials for iron and steel making, (c) an average particle diameter and a ζ potential of a fine particle, and (d) a number average molecular weight, a weight average molecular weight, polydispersity, and an acid number of a polymer compound. These values were measured in accordance with the following manner. Further, a cohesive force evaluated value was calculated in accordance with the following cohesive force test. Note that, "part" described in Examples and Comparative Examples means "weight part", and "%" described in Examples and Comparative Examples means "weight%".

(Average particle diameter and GI index of the pseudo-particle)

After pseudo-particles obtained by carrying out the granulation treatment had been dried at 80°C for one hour, the pseudo-particles were classified using a sieve, so that a grain size (pseudo grain size) and an average particle diameter were calculated. The GI index of the granulated pseudo-particles is one of evaluations disclosed on page 9 of Seitetsukenkyu (publication number 288, published in 1976), and means a ratio of fine particles adhering around the core particle. Note that, the measurement of the GI index was performed in accordance with a manner described on page 9 of Seitetsukenkyu (publication number 288, published in 1796).

In the following measurements performed in Examples and Comparative Examples, the measurement of the GI index was performed as to the pseudo-particles each of which was not more than 0.25mm in particle diameter after the granulation. If other values are mentioned, the value 0.25mm is replaced with them.

Further, the GI index (pseudo-particle index) of the pseudo-particles each of which was not more than 0.25mm in particle diameter after granulation was calculated in accordance with the following expression. GI index of the pseudo-particles each of which was not more than 0.25mm in particle diameter = (a ratio of a raw materials each of which was less than 0.25mm in particle diameter before granulation - a ratio of the raw materials each of which was less than 0.25mm in particle diameter after granulation) / (the ratio of the raw materials each of which was less than 0.25mm in particle diameter before granulation) × 100

However, in Examples 26 to 29 and Comparative Examples 9 to 11, the GI index was calculated as to pseudo-particles each of which was not more than 0.5mm in particle diameter after granulation. That is, GI index of the pseudo-particles each of which was not more than 0.5mm in particle diameter = (a ratio of raw materials each of which was less than 0.5mm in particle diameter before granulation - a ratio of the raw materials each of which was less than

0.5mm in particle diameter after granulation) / (the ratio of the raw materials each of which was less than 0.5mm in particle diameter before granulation) × 100

Further, sintered materials and pellet materials described in the following Examples and Comparative Examples were used under an absolutely dry condition.

(Product yield, sinter strength, productivity)

The product yield were evaluated by measuring a ratio of particles each of which was not less than 5mm in particle diameter when a 50kg sintered cake was made to fall from 2m height to an iron plate five times, in a sintering pot test.

The sinter strength was measured in accordance with the following strength measuring process (SI: Shatter Index). The sinter strength was evaluated as follows: a 10kg sintered cake having been subjected to the product yield evaluation (particles each of which was not less than 5mm in particle diameter) was picked so that granulation degree distribution was not varied, and a ratio of particles each of which was 5 to 10mm in particle diameter when the sintered cake was made to fall from 2m height four times was measured.

The productivity was calculated in accordance with the following expression.

Productivity (t/day/m2) =

total weight (t) of particles each of which was not less than

5mm in particle diameter after the product yield evaluation

/ sintering time (day) / a surface area (m2) of a sintering

device (pot)

(Number average molecular weight, weight average molecular weight, and polydispersity)

The weight average molecular weight of a polymer contained in aqueous solution of a polymer described in Embodiments 1 and 3, Examples 1 to 19, 26 to 29, and Comparative Examples 1 to 4, 9 to 11 was measured in terms of polyethyleneglycol based on GPC (Gel Permeation Chromatography) was used.

Further, the number average molecular weight and the weight average molecular weight of the polymer compound described in Embodiments 2, 4, 5, and Examples 20 to 25, 30 to 39, and Comparative Examples 5 to 8, 12 to 17 were measured in accordance with the GPC (Gel Permeation Chromatography). The measuring condition was as follows.

Pump: "L-7110" (made by Hitachi, Ltd.)

Carrier liquid: ultra pure water was added to 34.5g of desoudium hydrogen phosphate dodecahydrate and 46.2g of sodium dihydrogen phosphate dihydrate so as to prepare 500g of aqueous solution in total.

Current speed: 0.5ml/min

Column: water system GPC column "GF-7MHQ" (made by Showa Denko K.K.)

Detector: ultraviolet ray (UV) detector "L-7400" (made by Hitachi, Ltd.), 214nm in wave length

Molecular weight standard sample: sodium polyacrylate (made by Sowa Science Corporation)

An analysis sample was diluted with the carrier liquid so that the polymer compound is 0.1weight as measured in the form of solids.

Further, the polydispersity of the polymer compound was calculated, based on the weight average molecular weight and the number average molecular weight measured in accordance with the measuring condition, by using the following expression.

(polydispersity) = (weight average molecular weight)

/ (number average molecular weight)

However, only in both (1) a case where the polymer compound did not dissolve in the carrier, and (2) a case where the molecular weight drastically changed over time due to disaqueous solution in the carrier, the measurement was performed under the following condition.

Carrier liquid: pure water was added to 27.22g of sodium acetate trihydrate so as to prepare 2000g aqueous solution. After the sodium acetate trihydrate had dissolved in the pure water, 670g of acetonitrile was added to the aqueous solution, and they were uniformed.
Column: "TOSOH TSK-GEL α-2500, α-3000" (made by TOSOH CORP.)
Note that, other conditions were the same as in the foregoing measuring condition.

(Clay dispersion force)

The clay dispersion force was measured in accordance with the following manner. First, (1) ion exchange water was added to 67.56g glycine, 52.6g sodium chloride, and 60ml of 1mol/L sodium hydrate aqueous solution so as to prepare 600g glycine buffer liquid.
Next, pure water was added to the glycine buffer liquid prepared by using (2) 0.0817g calcium chloride dihydrate and the liquid prepared in the foregoing manner (1) so as to prepare 1000g dispersion liquid. Further, 0.1% aqueous solution of a polymer as measured in the form of solids was prepared.
(3) 0.3g of "JIS test powders 1, Class 11" (trade name: Kanto loamy powder, super fines, sold by The Association of Powder Process Industry & Engineering, Japan) was put into a typical glass test tube of approximately 30ml, and not only the dispersion liquid (2) but also 3g of the foregoing 0.1% aqueous solution of a polymer that functioned as materials for granulation treatment was added to the test powder. Then, the calcium concentration in the test tube was 50ppm in terms of calcium carbonate. (4) After the foregoing test tube had been sealed with a typical test tube cap made of rubber, the test tube was intensely shaken for 20 seconds so that the clay dispersed, and the test tube was turned upside down in an alternately repeated manner, so that the clay dispersed in the dispersion liquid to which the aqueous solution of a polymer had been added. After the test tube was left as it was in a place receiving no sunlight for 20 hours, 5ml supernatant liquid of the dispersion liquid in the test tube was picked with a hole pipette.
(5) The liquid (supernatant liquid) was put into 1cm of a quartz cell, and its absorbance (ABS) at 380nm wave length was measured by using a UV spectral device, so that the measured value was used as the clay dispersion force.

(Acid value)

The acid value was calculated in accordance with colloidal dropping method. First, 0.1g of measuring samples (as measured in the form of solids) were put in a sample tube of 50ml, and were diluted with ion exchange water so that a total weight of them was 20g. Note that, when the 0.1g measuring samples were diluted, 0.1g of samples as measured in the form of solids that had been subjected to pretreatment by using sodium hydrate so that pH ranges from 6 to 9 were added.
Next, 0.5g of the diluted liquid was picked so as to be diluted with approximately 100ml of ion exchange water. Then, pH of the diluted liquid was adjusted to be 11 by using 0.1N sodium hydrate aqueous solution.
Next, an excessive amount such as 5ml of N/200 methylglycol chitosan aqueous solution was added to the diluted liquid whose pH had been adjusted, and was sufficiently stirred. Further, 6 drops of toluidine blue pH indicator was added to the resultant, and colloidal back titration was performed by using N/400 polyvinyl potassium sulfate (PVSK) aqueous solution while sufficiently stirring the resultant. An end point was a point at which blue changes into violet. Further, a similar operation was performed as to 100ml of ion exchange water as a blank experiment, and its acid value was calculated in accordance with the following expression. Note that, a ratio of the solids was calculated in accordance with an amount of the foregoing materials used to react them.

$$\text{Acid value (mmol/g)}$$

$$= (f \times N \times (a-b))/$$

$$(\text{sample amount (g)} \times \text{solids (\%)})/100)$$

f: factor of PVSK
N: normality of PVSK (N/400)
a: titer of PVSK in the blank experiment (ml)
b: titer of PVSK of the measuring sample (ml)

(ζ potential)

The ζ potential of the fine particles was measured in accordance with the following ζ potential measuring test.

In a case where a fine particle adjuvant was used, a mixture obtained by mixing (a) 12 parts distilled liquid of 2% fine particle adjuvant as measured in the form of solids and (b) 12 parts fine particles for 12 hours was added and mixed so that it was possible to obtain proper measuring concentration in the distilled liquid of 0.3% fine particle adjuvant as measured in the form of solids. The resultant was used as a sample for ζ potential measuring test. Note that, in a case where the solids concentration of the fine particle adjuvant was less than 2%, after being concentrated, the fine particle adjuvant was diluted to a predetermined concentration with distilled water so as to be used for the measurement.
In a case where the fine particle adjuvant was not used, the fine particles were added to Tetraborane pH Standard Aqueous solution (pH = 9.18) and mixed with each other so that it was possible to obtain proper measuring concentration. The resultant was used as a sample for ζ potential measuring test.
Further, in a case where the fine particles were not added, that is, in a case where the ζ potential of the fine particles originally contained in raw materials for sinter was to be measured, 1g of the raw materials for sinter were added to Tetraborane pH Standard Aqueous solution (pH = 9.18), and were intensely stirred. After 10 minutes, supernatant liquid of the resultant was picked, and the supernatant liquid was added to Tetraborane pH Standard Aqueous solution (pH = 9.18) and mixed with each other so that it was possible to obtain proper measuring concentration. The sample obtained in this manner was used as a sample for ζ potential measuring test.
Note that, although a measured value of the ζ potential was not varied, a ζ potential measuring device automatically selected the concentration with fewer errors according to the sensitivity of the ζ potential measuring device, and determined the concentration in each sample, that is, an amount of additional components in each sample.
In the foregoing measurement, as the ζ potential measuring device, an electrophoresis light scattering light meter ELS-800 (made by Otsuka electronics Co. Ltd.) was used. Further, as a cell, EL-8201 1 (made by Otsuka electronics Co. Ltd.) was used, and a measuring temperature was 25°C, and a scattering angle was 20°, and an electrophoresis voltage was 90V. Further, as described above, in a case where the fine particle adjuvant was used as test dissolvent, dissolvent obtained by diluting 0.3% fine particle adjuvant as measured in the form of solids with distilled water was used. In a case where the fine particle adjuvant was not used, Tetraborane pH Standard Aqueous solution (pH = 9.18) was used. Thus, pH of the foregoing test dissolvent (sample) ranges from 8 to 9.5.

(Average particle diameter of the fine particle)

Ion exchange water was used as solvent, and was measured by using a scattering mode particle distribution measuring device LA-910W (made by HORIBA, Ltd.).

(Cohesive force test)

A Roberiver iron ore fines were classified into ores of (1) not more than 0.063mm, (2) more than 0.063mm to not more than 0.125mm, (3) more than 0.125mm to not more than 0.25mm, (4) more than 0.25mm to not more than 0.5mm, and (5) more than 0.5mm to not more than 1mm by using a sieve. The classified ironstones (Roberiver) were blended with each other so that an amount of each ore was 20 parts, and 5% water relative to the blended resultant was added so as to be uniformly mixed with each other. The mixed resultant was used as a sample, and its (g/cm$^2$) was measured by using a commercial cohesive force measuring device (cohesive force measuring device EB-3300CH made by Shimadzu Corp.)
Next, the classified ironstones (1) to (5) were blended with each other so that an amount of each ore was 20 parts, and 0.05% polymer compounds (solids) were added to the blended resultant, and in a case where the fine particles were added to the blended resultant, 2% fine particles and 5% water in total were added to the blended resultant so as to be uniformly mixed with each other. Thereafter, its cohesive force (g/cm$^2$) was measured in the same manner.
The cohesive force evaluated value of the present invention was calculated in accordance with the following expression.

Cohesive force evaluated value = cohesive force (g/cm$^2$) measured after adding granulation materials for iron and steel making / cohesive force (g/cm$^2$) measured after adding only water

[Example 1]

Raw material for sinters (raw materials for iron and steel making) having compositions shown in Table 1 were prepared.

TABLE 1

| COMPOSITION OF RAW MATERIALS FOR SINTER | MIXING RATE OF RAW MATERIALS (%) |
|---|---|
| MT. NEWMAN FINES | 20.5 |
| ROBERIVER FINES | 16.5 |
| CARAJAS FINES | 13.0 |
| HAMERSLEY FINES | 11.5 |
| KUDREMK FINES | 10.0 |
| RIODOCE FINES | 3.5 |
| SINTERED FINE | 5.0 |
| SERPENTINITE | 2.0 |
| QUARTZ | 1.0 |
| LIMESTONE | 17.0 |
| TOTAL OF NEW MATERIALS FOR SINTER | 100.0 |
| RETURN FINE | 15.0 (EXTERNALLY ACCOMPANIED) |
| COKE BREEZE | 4.0 (EXTERNALLY ACCOMPANIED) |

1400 parts heavy calcium carbonate of 2µm in average particle diameter were added to 70000 parts of the raw materials for sinter as the fine particles, and the resultant was put into a drum mixer so as to be subjected to preliminary stir performed at a speed of 24min-1 for a minute. This brought about a composition for the granulation treatment that contains the raw material for sinter. Thereafter, while stirring the composition at the same rotation speed, 5250 parts sodium polyacrylate aqueous solution of 6000 weight average molecular weight, that had been prepared so that nonvolatile materials had been 0.4% in advance, were sprayed (added) to the composition (raw materials for sinter) as the dispersant for approximately 1.5 minutes by using a spray. A ratio of sodium polyacrylate acid to the raw materials for sinter was 0.03%. After being sprayed, the composition (final composition for granulation treatment) to which the dispersant had been added was stirred for three minutes at the same rotation speed, so that the granulation treatment (pseudo-granulation) was carried out. A condition under which the fine particles and the dispersant were blended with each other is shown in Table 2.

Further, moisture content of the obtained pseudo-particles was measured, and the pseudo-particles were classified using a sieve after the pseudo-particles had been dried at 80°C for one hour, so that the average particle diameter and the GI index of the pseudo-particles were calculated. Further, an amount of dispersing fine particles was calculated by performing the dispersion property test. The result is shown in Table 3.

[Example 2]

Example 2 is different from Example 1 in that 1400 parts light calcium carbonate of 0.15µm in average particle diameter were used as the fine particles instead of the heavy calcium carbonate of 2µm in average particle diameter. Other than this, the same operation as in Example 1 was performed so as to carry out the granulation treatment. A condition under which the fine particles and the dispersant were blended with each other is shown in Table 2.

The moisture content of the obtained pseudo-particles was measured, and the pseudo-particles were classified using a sieve as in Example 1, so that the average particle diameter and the GI index of the pseudo-particles were calculated. Further, an amount of dispersing fine particles was calculated by performing the dispersion property test. The result is shown in Table 3.

[Example 3]

Example 3 is different from Example 1 in that 1400 parts light calcium carbonate of 20µm in average particle

diameter were used as the fine particles instead of the heavy calcium carbonate of 2μm in average particle diameter. Other than this, the same operation as in Example 1 was performed so as to carry out the granulation treatment. A condition under which the fine-particles and the dispersant were blended with each other is shown in Table 2.

The moisture content of the obtained pseudo-particles was measured, and the pseudo-particles were classified by using a sieve as in Example 1, so that the average particle diameter and the GI index of the pseudo-particles were calculated. Further, an amount of dispersing fine particles was calculated by performing the dispersion property test. The result is shown in Table 3.

[Example 4]

Example 4 is different from Example 1 in that 350 parts light calcium carbonate of 3μm in average particle diameter was used as the fine particles instead of the heavy calcium carbonate of 2μm in average particle diameter. Other than this, the same operation as in Example 1 was performed so as to carry out the granulation treatment. A condition under which the fine-particles and the dispersant were blended with each other is shown in Table 2.

The moisture content of the obtained pseudo-particles was measured, and the pseudo-particles were classified using a sieve as in Example 1, so that the average particle diameter and the GI index of the pseudo-particles were calculated. Further, an amount of dispersing fine particles was calculated by performing the dispersion property test. The result is shown in Table 3.

[Example 5]

Example 5 is different from Example 1 in that 1400 parts "JIS test powders 1, Class 11" (trade name; Kanto loamy powder, super fines, sold by The Association of Powder Process Industry & Engineering, Japan) of 2μm in average particle diameter were used as the fine particles instead of the heavy calcium carbonate of 2μm in average particle diameter. Other than this, the same operation as in Example 1 was performed so as to carry out the granulation treatment. A condition under which the fine-particles and the dispersant were blended with each other is shown in Table 2.

The moisture content of the obtained pseudo-particles was measured, and the pseudo-particles were classified using a sieve as in Example 1, so that the average particle diameter and the GI index of the pseudo-particles were calculated. Further, an amount of dispersing fine particles was calculated by performing the dispersion property test. The result is shown in Table 3.

[Example 6]

Example 6 is different from Example 1 in that 1400 parts converter wet dust of 200μm in average particle diameter were used as the fine particles instead of the heavy calcium carbonate of 2μm in average particle diameter. Other than this, the same operation as in Example 1 was performed so as to carry out the granulation treatment. A condition under which the fine-particles and the dispersant were blended with each other is shown in Table 2.

The moisture content of the obtained pseudo-particles was measured, and the pseudo-particles were classified using a sieve as in Example 1, so that the average particle diameter and the GI index of the pseudo-particles were calculated. Further, an amount of dispersing fine particles was calculated by performing the dispersion property test. The result is shown in Table 3.

[Example 7]

Example 7 is different from Example 1 in that 1400 parts Kaolin clay (trade name "KAOFINE" made by Thiele Kaolin Company) of 2μm in average particle diameter was used as the fine particles instead of the heavy calcium carbonate of 2μm in average particle diameter. Other than this, the same operation as in Example 1 was performed so as to carry out the granulation treatment. A condition under which the fine particles and the dispersant were blended with each other is shown in Table 2.

The moisture content of the obtained pseudo-particles was measured, and the pseudo-particles were classified using a sieve as in Example 1, so that the average particle diameter and the GI index of the pseudo-particles were calculated. Further, an amount of dispersing fine particles was calculated by performing the dispersion property test. The result is shown in Table 3.

[Example 8]

Example 8 is different from Example 1 in that 1400 parts bentonite (trade name "Kunigel V1" made by KUN-

IMINE INDUSTRIES LTD.) of 2μm in average particle diameter were used as the fine particles instead of the heavy calcium carbonate of 2μm in average particle diameter. Other than this, the same operation as in Example 1 was performed so as to carry out the granulation treatment. A condition under which the fine-particles and the dispersant were blended with each other is shown in Table 2.

The moisture content of the obtained pseudo-particles was measured, and the pseudo-particles were classified using a sieve as in Example 1, so that the average particle diameter and the GI index of the pseudo-particles were calculated. Further, an amount of dispersing fine particles was calculated by performing the dispersion property test. The result is shown in Table 3.

[Example 9]

Example 9 is different from Example 1 in that 1400 parts ironstone (Carajas) of 92μm in average particle diameter were used as the fine particles instead of the heavy calcium carbonate of 2μm in average particle diameter. Other than this, the same operation as in Example 1 was performed so as to carry out the granulation treatment. A condition under which the fine particles and the dispersant were blended with each other is shown in Table 2.

The moisture content of the obtained pseudo-particles was measured, and the pseudo-particles were classified using a sieve as in Example 1, so that the average particle diameter and the GI index of the pseudo-particles were calculated. Further, an amount of dispersing fine particles was calculated by performing the dispersion property test. The result is shown in Table 3.

[Example 10]

1291 parts ion exchange water and 1812 parts polyalkylene glycol monoalkenyl ether monomer (monomer containing a polyalkylene glycol chain) obtained by adding an average of 50 mol of ethylene oxide to 3-methyl-3-butene-1-ol, and 188 parts maleic anhydride (acid group-containing monomer) were put into a glass reaction vessel having a thermometer, a stirring device, a dripping funnel, a nitrogen conduit, and a reflux condenser, so that reaction mixture was obtained. Next, the reaction mixture was heated to 60°C.

Next, 50 parts of 15% aqueous solution of "NC-32W" (trade name; made by Nippoh Chemicals Co., Ltd, 87% concentration of 2,2'-Azobis-2methylpropioneamidine hydrochrolide) was added to the reaction mixture as polymerizing initiator, and was stirred for 7 hours. After being further heated to 80°C, the resultant was stirred for one hour so as to complete the polymerization reaction.

Thereafter, the reaction mixture was neutralized with 30% sodium hydrate aqueous solution. This brought about aqueous solution of a polymer (a) in which weight average molecular weight was 26200 and concentration of nonvolatile solids was 55.1%.

Next, 5433.5 parts water was added to 66.5 parts of the obtained aqueous solution of a polymer (a) and was sufficiently stirred. This brought about 5500 parts aqueous solution of a polymer (1) as the dispersant.

1400 parts heavy calcium carbonate of 2μm in average particle diameter were added to 70000 parts raw materials for sinter of Table 1 as the fine particles, and the resultant was put into a drum mixer, and was subjected to preliminary stir at a rotation speed of $24 min^{-1}$ for a minute. This brought about a composition for the granulation treatment that contains the raw material for sinter. Thereafter, while stirring the composition at the same rotation speed, 5250 parts of the aqueous solution of a polymer (1) were sprayed (added) to the composition (raw materials for sinter) for approximately 1.5 minutes using an atomist spray. A ratio of the solids of the aqueous solution of a polymer (1), namely the polymer, to the raw material for sinter was 0.05%. After being sprayed, the composition (final composition for granulation treatment) to which the dispersant had been added was stirred for three minutes at the same rotation speed, so that the granulation treatment was performed. A condition under which the fine particles and the dispersant were blended with each other is shown in Table 2.

The moisture content of the obtained pseudo-particles was measured, and the pseudo-particles were classified using a sieve as in Example 1, so that the average particle diameter and the GI index of the pseudo-particles were calculated. Further, an amount of dispersing fine particles was calculated by performing the dispersion property test. The result is shown in Table 3.

[Example 11]

1510 parts ion exchange water were put into a glass reaction vessel having a thermometer, a stirring device, a dripping funnel, a nitrogen conduit, and a reflux condenser, so as to be heated to 65°C.

Next, 31.7 parts of 30% hydrogen peroxide aqueous solution was put into the glass reaction vessel as a polymerizing initiator. Thereafter, 791.7 parts acrylic acid which functioned as the acid group-containing monomer, 258.3 parts methyl acrylate which functioned as copolymerizable monomer, and 15 parts ion exchange water were

mixed in the reaction vessel in advance. The mix of them was dropped while being stirred for three hours. Further, at the same time, 12.3 parts L-ascorbic acid which functioned as polymerizing initiator, 37.1 parts mercaptopropionic acid which functioned as chain transfer agent, and 200.6 parts ion exchange water were mixed in the reaction vessel in advance. The mix was dropped for 3 hours and 30 minutes. The reaction mixture was further stirred at 65°C for one hour, so that the polymerization reaction was completed.

Thereafter, the reaction mixture was neutralized with 30% sodium hydrate aqueous solution. This brought about aqueous solution of a polymer (b) in which weight average molecular weight was 32600 and concentration of nonvolatile solids was 31.3%.

Next, 5460 parts water were added to 117.1 parts of the obtained aqueous solution of a polymer (b) and were sufficiently stirred. This brought about 5500 parts aqueous solution of a polymer (2) as the dispersant.

1400 parts heavy calcium carbonate of 2μm in average particle diameter were added to 70000 parts raw material for sinter of Table 1 as the fine particles, and the resultant was put into a drum mixer, and was subjected to preliminary stir at a rotation speed of $24min^{-1}$ for a minute. This brought about a composition for the granulation treatment that contains the raw materials for sinter. Thereafter, while stirring the composition at the same rotation speed, 5250 parts of the aqueous solution of a polymer (2) were sprayed (added) to the composition (raw materials for sinter) for approximately 1.5 minutes by using a spray. A ratio of the solids of the aqueous solution of a polymer (2), namely the polymer, to the raw materials for sinter was 0.05%. After being sprayed, the composition (final composition for granulation treatment) to which the dispersant had been added was stirred for three minutes at the same rotation speed, so that the granulation treatment was performed. A condition under which the fine particles and the dispersant were blended with each other is shown in Table 2.

The moisture content of the obtained pseudo-particles was measured, and the pseudo-particles were classified using a sieve as in Example 1, so that the average particle diameter and the GI index of the pseudo-particles were calculated. Further, an amount of dispersing fine particles was calculated by performing the dispersion property test. The result is shown in Table 3.

[Example 12]

1400 parts light calcium carbonate of 3μm in average particle diameter were added to 70000 parts raw materials for sinter of Table 1 as the fine particles, and the resultant was put into a drum mixer, and was subjected to preliminary stir at a rotation speed of $24min^{-1}$ for a minute. This brought about a composition for the granulation treatment that contains the raw materials for sinter. Thereafter, while stirring the composition at the same rotation speed, 5250 parts of 1.3% sodium ligninsulfonate aqueous solution were sprayed (added) to the composition (raw materials for sinter) for approximately 1.5 minutes using a spray. A ratio of sodium ligninsulfonate to the raw material for sinter was 0.1%. After being sprayed, the composition (final composition for granulation treatment) to which the dispersant had been added was stirred for three minutes at the same rotation speed, so that the granulation treatment was performed. A condition under which the fine particles and the dispersant were blended with each other is shown in Table 2.

The moisture content of the obtained pseudo-particles was measured, and the pseudo-particles were classified using a sieve as in Example 1, so that the average particle diameter and the GI index of the pseudo-particles were calculated. Further, an amount of dispersing fine particles was calculated by performing the dispersion property test. The result is shown in Table 3.

[Example 13]

Example 13 is different from Example 12 in that 5250 parts of 1.3% trisodium tripolyphosphate was used as the dispersant instead of 1.3% sodium ligninsulfonate aqueous solution. Other than this, the same operation as in Example 12 was performed so as to carry out the granulation treatment. A condition under which the fine-particles and the dispersant were blended with each other is shown in Table 2.

The moisture content of the obtained pseudo-particles was measured, and the pseudo-particles were classified using a sieve as in Example 1, so that the average particle diameter and the GI index of the pseudo-particles were calculated. Further, an amount of dispersing fine particles was calculated by performing the dispersion property test. The result is shown in Table 3.

[Example 14]

Example 14 is different from Example 1 in that the heavy calcium carbonate was not added. Other than this, the same operation as in Example 1 was performed so as to perform the granulation treatment. A condition under which the fine-particles and the dispersant were blended with each other is shown in Table 2.

The moisture content of the obtained pseudo-particles was measured, and the pseudo-particles were classified using a sieve as in Example 1, so that the average particle diameter and the GI index of the pseudo-particles were calculated. Further, an amount of dispersing fine particles was calculated by performing the dispersion property test. The result is shown in Table 3.

[Example 15]

5250 parts ion exchange water were used instead of sodium polyacrylic aqueous solution. Other than this, the same operation as in Example 1 was performed so as to carry out the granulation treatment. A condition under which the fine-particles and the dispersant were blended with each other is shown in Table 2.

The moisture content of the obtained pseudo-particles was measured, and the pseudo-particles were classified using a sieve as in Example 1, so that the average particle diameter and the GI index of the pseudo-particles were calculated. Further, an amount of dispersing fine particles was calculated by performing the dispersion property test. The result is shown in Table 3.

[Comparative Example 1 (conventional example)]

70000 parts raw materials for sinter shown in Table 1 were put into a drum mixer, and were subjected to preliminary stir at a rotation speed of $24min^{-1}$ for a minute. This brought about a composition for the granulation treatment that contains the raw materials for sinter. Thereafter, while stirring the composition at the same rotation speed, 5250 parts water were sprayed (added) to the composition (raw materials for sinter) for approximately 1.5 minutes using a spray. After being sprayed, the composition (final composition for granulation treatment) to which the dispersant had been added was stirred for three minutes at the same rotation speed, so that the granulation treatment (pseudo-granulation) was performed.

The moisture content of the obtained pseudo-particles was measured, and the pseudo-particles were classified using a sieve as in Example 1, so that the average particle diameter and the GI index of the pseudo-particles were calculated. Further, an amount of dispersing fine particles was calculated by performing the dispersion property test. The result is shown in Table 3.

[Comparative Example 2 (conventional example)]

70000 parts raw materials for sinter shown in Table 1 were put into a drum mixer, and 840 burnt lime of 45μm in average particle diameter were added as the fine particles, and the resultant was subjected to preliminary stir at a rotation speed of $24min^{-1}$ for a minute. This brought about a composition for the granulation treatment that contains the raw material for sinter. Thereafter, while stirring the composition at the same rotation speed, 5600 parts water were sprayed (added) to the composition (raw material for sinter) for approximately 1.5 minutes by using a spray. After being sprayed, the resultant was further stirred for three minutes at the same rotation speed, so that the granulation operation was performed. A condition under which the burnt lime was blended is shown in Table 2.

The moisture content of the obtained pseudo-particles was measured, and the pseudo-particles were classified using a sieve as in Example 1, so that the average particle diameter and the GI index of the pseudo-particles were calculated. Further, an amount of dispersing fine particles was calculated by performing the dispersion property test. The result is shown in Table 3.

[Example 16]

70000 parts raw materials for sinter shown in Table 1 were put into a drum mixer, and were subjected to preliminary stir at a rotation speed of 24 $min^{-1}$ for a minute. This brought about a composition for the granulation treatment that contains the raw materials for sinter. Thereafter, while stirring the composition at the same rotation speed, 6300 parts "Snawtex C" (trade name; made by Nissan Chemical Industries, Ltd., 20% of nonvolatile material) of colloidal silica which is self dispersion type fine particles were sprayed (added) to the composition (raw material for sinter) for approximately 1.5 minutes using a spray. After being sprayed, the resultant was further stirred for three minutes at the same rotation speed, so that the granulation treatment (pseudo granulation) was performed. A condition under which the fine particles and the dispersant were blended with each other is shown in Table 2.

The moisture content of the obtained pseudo-particles was measured, and the pseudo-particles were classified using a sieve as in Example 1, so that the average particle diameter and the GI index of the pseudo-particles were calculated. Further, an amount of dispersing fine particles was calculated by performing the dispersion property test. The result is shown in Table 3.

[Example 17]

70000 parts raw materials for sinter shown in Table 1 were put into a drum mixer, and were subjected to preliminary stir at a rotation speed of $24min^{-1}$ for a minute. This brought about a composition for the granulation treatment that contains the raw materials for sinter. Thereafter, while stirring the composition at the same rotation speed, 6300 parts "Snawtex C" (trade name: made by Nissan Chemical Industries, Ltd., 20% of nonvolatile material) of colloidal silica which is self dispersion type fine particles and 47 parts polyacrylicsodium of Example 1 that had been adjusted so as to contain 45% solids were mixed in advance. The mix was sprayed (added) to the composition (raw materials for sinter) for approximately 1.5 minutes using a spray. After being sprayed, the resultant was further stirred for three minutes at the same rotation speed, so that the granulation treatment (pseudo granulation) was performed. A condition under which the fine particles and the dispersant were blended with each other is shown in Table 2.

The moisture content of the obtained pseudo-particles was measured, and the pseudo-particles were classified using a sieve as in Example 1, so that the average particle diameter and the GI index of the pseudo-particles were calculated. Further, an amount of dispersing fine particles was calculated by performing the dispersion property test. The result is shown in Table 3.

## TABLE 2

| | FINE PARTICLE | AVERAGE PARTICLE DIAMETER OF FINE PARTICLE (μm) | AMOUNT OF ADDED FINE PARTICLE (%) | DISPERSANT | AMOUNT OF DISPERSANT (%) |
|---|---|---|---|---|---|
| EXAMPLE 1 | HEAVY CALCIUM CARBONATE | 2 | 2 | SODIUM POLYACRULIC ACID | 0.03 |
| EXAMPLE 2 | LIGHT CALCIUM CABONATE | 0.15 | 2 | SODIUM POLYACRULIC ACID | 0.03 |
| EXAMPLE 3 | HEAVY CALCIUM CARBONATE | 20 | 2 | SODIUM POLYACRULIC ACID | 0.03 |
| EXAMPLE 4 | LIGHT CALCIUM CABONATE | 3 | 0.50 | SODIUM POLYACRULIC ACID | 0.03 |
| EXAMPLE 5 | JIS TEST POWDERS 1, CLASS 11 | 2 | 2 | SODIUM POLYACRULIC ACID | 0.03 |
| EXAMPLE 6 | CONVERTER DUST | 200 | 2 | SODIUM POLYACRULIC ACID | 0.03 |
| EXAMPLE 7 | KAOLIN CLAY | 1.5 | 2 | SODIUM POLYACRULIC ACID | 0.03 |
| EXAMPLE 8 | BENINITE | 2 | 2 | SODIUM POLYACRULIC ACID | 0.03 |
| EXAMPLE 9 | IRONSTONE | 92 | 2 | POLYMER AQUEOUS SOLUTION (1) | 0.05 |
| EXAMPLE 10 | HEAVY CALCIUM CARBONATE | 2 | 2 | POLYMER AQUEOUS SOLUTION (2) | 0.05 |
| EXAMPLE 11 | HEAVY CALCIUM CARBONATE | 2 | 2 | SODIUM LIGNINSULFONIC ACID | 0.10 |
| EXAMPLE 12 | LIGHT CALCIUM CABONATE | 3 | 2 | 3 SODIUM TRIPOLYPHOSPHATE | 0.10 |
| EXAMPLE 13 | LIGHT CALCIUM CABONATE | 3 | 2 | SODIUM POLYACRYLIC ACID | 0.03 |
| EXAMPLE 14 | — | — | — | — | — |
| EXAMPLE 15 | HEAVY CALCIUM CARBONATE | 2 | 2 | — | — |
| EXAMPLE 16 | COLLOIDAL SILICA | 0.04 | 1.80 | SODIUM POLYACRYLIC ACID | 0.03 |
| EXAMPLE 17 | COLLOIDAL SILICA | 0.04 | 1.80 | | |
| COMPARATIVE EXAMPLE 1 (CONVENTIONAL EXAMPLE) | — | — | — | — | — |
| COMPARATIVE EXAMPLE 1 (CONVENTIONAL EXAMPLE) | BURNT LIME | 45 | 1.2 | — | — |

**TABLE 3**

| | WATER CONTENT (%) | AMOUNT OF DISPERSING FINE PARTICLES (%) | AVERAGE PARTICLE DIAMETER OF PSEUDO-PARTICLES (μm) | GI INDEX OF PSEUDO-PARTICLES |
|---|---|---|---|---|
| EXAMPLE 1 | 7.0 | 3.9 | 3.82 | 97.5 |
| EXAMPLE 2 | 6.9 | 3.5 | 3.65 | 96.0 |
| EXAMPLE 3 | 7.0 | 3.3 | 3.51 | 95.7 |
| EXAMPLE 4 | 7.1 | 3.6 | 3.74 | 96.2 |
| EXAMPLE 5 | 7.0 | 4.0 | 3.83 | 97.8 |
| EXAMPLE 6 | 6.8 | 3.2 | 3.40 | 95.2 |
| EXAMPLE 7 | 7.0 | 4.0 | 3.88 | 97.6 |
| EXAMPLE 8 | 7.0 | 3.3 | 3.61 | 95.1 |
| EXAMPLE 9 | 6.9 | 3.1 | 3.56 | 95.0 |
| EXAMPLE 10 | 6.9 | 2.5 | 3.22 | 89.0 |
| EXAMPLE 11 | 7.0 | 4.1 | 4.02 | 97.9 |
| EXAMPLE 12 | 6.8 | 3.0 | 3.37 | 95.7 |
| EXAMPLE 13 | 7.1 | 3.2 | 3.86 | 97.7 |
| EXAMPLE 14 | 6.9 | 3.3 | 3.29 | 92.8 |
| EXAMPLE 15 | 7.1 | 2.3 | 2.80 | 84.5 |
| EXAMPLE 16 | 7.0 | 3.8 | 3.80 | 97.0 |
| EXAMPLE 17 | 7.1 | 4.3 | 4.07 | 98.5 |
| COMPARATIVE EXAMPLE 1 (CONVENTIONAL EXAMPLE) | 7.0 | 1.6 | 2.61 | 75.7 |
| COMPARATIVE EXAMPLE 1 (CONVENTIONAL EXAMPLE) | 7.0 | 1.7 | 2.43 | 73.7 |

The results in Table 3 shows that: according to the present invention, it is possible to increase the average particle diameter and the GI index of the pseudo-particles by adding the fine particles and the dispersant. Thus, it is found that the method according to the present invention for granulating raw materials for iron and steel making exhibits great effect in pseudo-granulating the raw material for sinter.

[Example 18]

The pseudo-particles obtained in Example 1 was sintered by performing a pot test of 50kg scale so as to obtain the sinter. A condition of the test was such that: the sintering pot was 300mm in diameter, 600mm in height, and 550mm in a layer thickness, and its suctioning negative pressure was 9.8Pa (constant). The productivity, the product yield, and the sinter strength of the obtained sinter were measured. The results were shown in Table 4.

[Example 19]

The pseudo-particles obtained in Example 14 was sintered by performing a pot test of 50kg scale so as to obtain the sinter. A condition of the test was such that: the sintering pot was 300mm in diameter, 600mm in height, and 550mm in a layer thickness, and its suctioning negative pressure was 9.8Pa (constant). The productivity, the product yield, and the sinter strength of the obtained sinter were measured. The results were shown in Table 4.

[Comparative Example 3 (conventional example)]

The pseudo-particles obtained in Example 1 was sintered by performing a pot test of 50kg scale so as to obtain the sinter. A condition of the test was such that: the sintering pot was 300mm in diameter, 600mm in height, and 550mm in a layer thickness, and its suctioning negative pressure was 9.8Pa (constant). The productivity, the product yield, and the sinter strength of the obtained sinter were measured. The results were shown in Table 4.

[Comparative Example 4 (conventional example)]

The pseudo-particles obtained in Example 2 was sintered by performing a pot test of 50kg scale so as to obtain the sinter. A condition of the test was such that: the sintering pot was 300mm in diameter, 600mm in height, and 550mm in a layer thickness, and its suctioning negative pressure was 9.8Pa (constant). The productivity, the product yield, and the sinter strength of the obtained sinter were measured. The results were shown in Table 4.

TABLE 4

| | GRANULATION ADDITIVE (FINE PARTICLES/ ADDITIVE) | SINTERING TIME (min) | PRODUCTIVITY (t/day/$m^2$) | PRODUCT YIELD (%) | SHATTER INDEX (%) |
|---|---|---|---|---|---|
| EXAMPLE 18 | HEAVY CALCIUM CARBONATE/ SODIUM POLYACRYLATE | 32.7 | 30.2 | 80.0 | 83.0 |
| EXAMPLE 19 | SODIUM POLYACRYLATE | 31.9 | 28.1 | 74.9 | 81.4 |
| COMPARATIVE EXAMPLE 3 | ONLY WATER | 35.4 | 24.0 | 72.7 | 81.3 |
| COMPARATIVE EXAMPLE 4 | BURNT LIME | 32.8 | 26.7 | 76.4 | 81.8 |

The results of Table 4 show that: according to the present invention, it is possible to increase the average particle diameter and the GI index of the pseudo-particles by adding the fine particles and the dispersant. The sinter of a low sinter strength is likely to cause fine particles, so that the return fine of the ore is high and hence the product yield and the productivity are decreased. However, the foregoing results show that: according to the present invention, it is possible to solve such problems.

[Example 20]

805.5 parts ion exchange water and 40.1 parts of 45% sodium hypophosphite monohydrate aqueous solution which functioned as chain transfer agent were put into a separable flask (made by SUS316), having a stirring device and a condenser, whose capacity was 5L, and were heated to the boiling point (100°C) of the system while being stirred.

Next, 2126.1 parts of 80% acrylic acid aqueous solution which functioned as carboxyl group containing monomer, 112.4 parts of 15% sodium persulfate aqueous solution which functioned as the polymerizing initiator, and 160.2 parts of 45% sodium hypophosphite monohydrate aqueous solution were dropped in the separable flask. The 80% acrylic acid aqueous solution, the 15% sodium persulfate aqueous solution, and the 45% sodium hypophosphite monohydrate aqueous solution were separately dropped through respective dropping holes. It took 180 minutes for the 80% acrylic acid aqueous solution to finish dropping. It took 185 minutes for the 15% sodium persulfate aqueous solution to finish dropping. It took 180 minutes for the 45% sodium hypophosphite monohydrate aqueous solution to finish dropping. While dropping, the reaction temperature was kept being the boiling point of the system. After dropping, the temperature was kept for five minutes. Thereafter, it took 60 minutes for 1889.0 parts of 48% sodium hydrate aqueous solution which functions as neutralizing agent to finish dropping, so that aqueous solution of a polymer was obtained. The number average molecular weight, the polydispersity, the acid value, and the clay dispersion force of the polymer (polymer compound) in the aqueous solution of a polymer that had been obtained in this manner were measured. As a result, The number average molecular weight was 2100, and the polydispersity was 2.93, and the acid value was 11.2mmol/g, and the clay dispersion force was 1.16.

Further, the obtained aqueous solution of a polymer was picked so as to be 21 parts as measured in the form of solids, and was diluted with the ion exchange water so as to be 5250 parts, so that a granulation treatment agent for iron and steel making (A1) according to the present invention was obtained.

Meanwhile, raw materials for sinter (raw materials for iron and steel making) having a composition shown in Table 1 were prepared.

70000 parts of the raw materials for sinter were put into a drum mixer, and was subjected to preliminary stir at a rotation speed of $24min^{-1}$ for a minute. Thereafter, stirring the composition at the same rotation speed, 5250 parts of the granulation treatment agent for iron and steel making (A1) were sprayed (added) to the raw material for sinter for approximately 1.5 minutes using a spray. A ratio of the polymer compound, namely the polymer compound contained in the granulation treatment agent for iron and steel making (A1) of the present invention, to the raw material for sinter was 0.03%. After being sprayed, the resultant was stirred for three minutes at the same rotation speed, so that the granulation treatment was performed.

After the obtained pseudo-particles had been dried at 80°C for one hour, they were classified using a sieve, so that GI index of the pseudo-particle whose particle diameter after the granulation was not more than 0.25mm was calculated. Not only the properties of the polymer compound but also a result of the calculation is shown in Table 5.

[Example 21]

805.5 parts ion exchange water were put into a separable flask (made by SUS316), having a stirring device and a condenser, whose capacity was 5L, and were heated to the boiling point (100°C) of the system while being stirred.

Next, 2126.1 parts of 80% acrylic acid aqueous solution which functions as carboxyl group containing monomer, 112.4 parts of 15% sodium persulfate aqueous solution which functioned as the polymerizing initiator, and 88.5 parts of 45% sodium hypophosphite monohydrate aqueous solution were dropped in the separable flask. The 80% acrylic acid aqueous solution, the 15% sodium persulfate aqueous solution, and the 45% sodium hypophosphite monohydrate aqueous solution were separately dropped through respective dropping holes. It took 180 minutes for the 80% acrylic acid aqueous solution to finish dropping. It took 185 minutes for the 15% sodium persulfate aqueous solution to finish dropping. It took 180 minutes for the 45% sodium hypophosphite monohydrate aqueous solution to finish dropping. While dropping, the reaction temperature was kept being the boiling point of the system. After dropping, the temperature was kept for five minutes. Thereafter, it took 60 minutes for 1889.0 parts of 48% sodium hydrate aqueous solution which functioned as neutralizing agent to finish dropping, so that aqueous solution of a polymer was obtained. The number average molecular weight, the polydispersity, the acid value, and the clay dispersion force of the polymer (polymer compound) in the aqueous solution of a polymer that had been obtained in this manner were measured. As a result, the number average molecular weight was 2900, and the polydispersity was 4.21, and the acid value was 11.1mmol/g, and the clay dispersion force was 1.30.

Further, the obtained aqueous solution of a polymer was picked so as to be 21 parts as measured in the form of solids, and was diluted with the ion exchange water so as to be 5250 parts, so that a granulation treatment agent for iron and steel making (A2) according to the present invention was obtained.

Thereafter, the granulation treatment agent for iron and steel making (A2) was used instead of the granulation treatment agent for iron and steel making (A1) used in Example 20. Other than this, the same operation as in Example 20 was performed so as to carry out the granulation. The obtained pseudo-particles were classified using a sieve, so that GI index of the pseudo-particle whose particle diameter after the granulation was not more than 0.25mm was calculated. Not only the properties of the polymer compound but also a result of the calculation is shown in Table 5.

[Example 22]

805.5 parts ion exchange water and 40.1 parts of 45% sodium hypophosphite monohydrate aqueous solution which functioned as chain transfer agent were put into a separable flask (made by SUS316), having a stirring device and a condenser, whose capacity was 5L, and were heated to the boiling point (100°C) of the system while being stirred.
Next, 2126.1 parts of 80% methacrylic acid aqueous solution which functioned as carboxyl group containing monomer, 112.4 parts of 15% sodium persulfate aqueous solution which functioned as the polymerizing initiator, and 88.5 parts of 45% sodium hypophosphite monohydrate aqueous solution were dropped in the separable flask. The 80% methacrylic acid aqueous solution, the 15% sodium persulfate aqueous solution, and the 45% sodium hypophosphite monohydrate aqueous solution were separately dropped through respective dropping holes. It took 180 minutes for the 80% methacrylic acid aqueous solution to finish dropping. It took 185 minutes for the 15% sodium persulfate aqueous solution to finish dropping. It took 180 minutes for the 45% sodium hypophosphite monohydrate aqueous solution to finish dropping. While dropping, the reaction temperature was kept being the boiling point of the system. After dropping, the temperature was kept for ten minutes. Thereafter, it took 60 minutes for 1595.1 parts of 48% sodium hydrate aqueous solution which functioned as neutralizing agent to finish dropping, so that aqueous solution of a polymer was obtained. The number average molecular weight, the polydispersity, the acid value, and the clay dispersion force of the polymer (polymer compound) in the aqueous solution of a polymer that had been obtained in this manner were measured. As a result, the number average molecular weight was 1900, and the polydispersity was 3.31, and the clay dispersion force was 1.11.
Further, the obtained aqueous solution of a polymer was picked so as to be 21 parts as measured in the form of solids, and was diluted with the ion exchange water so as to be 5250 parts, so that a granulation treatment agent for iron and steel making (A3) according to the present invention was obtained.
Thereafter, the granulation treatment agent for iron and steel making (A3) was used instead of the granulation treatment agent for iron and steel making (A1) used in Example 20. Other than this, the same operation as in Example 20 was performed so as to perform the granulation. The obtained pseudo-particles were classified using a sieve, so that GI index of the pseudo-particle whose particle diameter after the granulation was not more than 0.25mm was calculated. Not. only the properties of the polymer compound but also a result of the calculation is shown in Table 5.

[Example 23]

355 parts ion exchange water, 98 parts maleic anhydride which functioned as carboxyl group containing monomer, and 80 parts of 48% sodium hydrate aqueous solution which functioned as neutralizing agent were put into a separable flask (made by SUS316), having a stirring device and a condenser, whose capacity was 5L, and were neutralized so as to be heated to the boiling point (100°C) of the system while being stirred.
Next, 180 parts of 40% acrylic acid aqueous solution which functions as carboxil group containing monomer, 100 parts of 10% sodium persulfate aqueous solution which functioned as the polymerizing initiator, and 100 parts of 14% hydrogen peroxide were dropped in the separable flask. The 40% acrylic acid aqueous solution, 100 parts of the 10% sodium persulfate aqueous solution, and the 14% hydrogen peroxide were separately dropped through respective dropping holes. After dropping, the temperature was kept for 60 minutes. Thereafter, it took 60 minutes for 57 parts of 49% sodium hydrate aqueous solution which functioned as neutralizing agent to finish dropping, so that aqueous solution of a polymer was obtained. The number average molecular weight, the polydispersity, the acid value, and the clay dispersion force of the polymer (polymer compound) in the aqueous solution of a polymer that had been obtained in this manner were measured. As a result, the number average molecular weight was 1200, and the polydispersity was 4.94, and the clay dispersion force was 0.98.
Further, the obtained aqueous solution of a polymer was picked so as to be 21 parts as measured in the form of solids, and was diluted with the ion exchange water so as to be 5250 parts, so that a granulation treatment agent for iron and steel making (A4) according to the present invention was obtained.
Thereafter, the granulation treatment agent for iron and steel making (A4) was used instead of the granulation treatment agent for iron and steel making (A1) used in Example 20. Other than this, the same operation as in Example 20 was performed so as to perform the granulation. The obtained pseudo-particles were classified by using a sieve, so that GI index of the pseudo-particle whose particle diameter after the granulation was not more than 0.25mm was calculated. Not only the properties of the polymer compound but also a result of the calculation is shown in Table 5.

[Example 24]

1400 parts ion exchange water were put into a separable flask (made by SUS316), having a stirring device and a condenser, whose capacity was 5L, and were heated to the boiling point (100°C) of the system while being stirred.
Next, 578.5 parts of 80% acrylic acid aqueous solution which functions as carboxyl group containing monomer

and 62.5 parts of 15% ammonium persulfate aqueous solution which functioned as the polymerizing initiator were separately dropped in the separable flask through respective dropping holes. While dropping, the reaction temperature was kept being the boiling point of the system. After dropping, the temperature was kept for 120 minutes. Thereafter, it took 60 minutes for 353 parts of 48% sodium hydrate aqueous solution which functioned as neutralizing agent to finish dropping, so that aqueous solution of a polymer was obtained. The number average molecular weight, the polydispersity, the acid value, and the clay dispersion force of the polymer (polymer compound) in the aqueous solution of a polymer that had been obtained in this manner were measured. As a result, the number average molecular weight was 4900, and the polydispersity was 9.84, the acid value was 10.7mmol/g. and the clay dispersion force was 0.65.

Further, the obtained aqueous solution of a polymer was picked so as to be 21 parts as measured in the form of solids, and was diluted with the ion exchange water so as to be 5250 parts, so that a granulation treatment agent for iron and steel making (A5) according to the present invention was obtained.

Thereafter, the granulation treatment agent for iron and steel making (A5) was used instead of the granulation treatment agent for iron and steel making (A1) used in Example 20. Other than this, the same operation as in Example 20 was performed so as to perform the granulation. The obtained pseudo-particles were classified by using a sieve, so that GI index of the pseudo-particle whose particle diameter after the granulation was not more than 0.25mm was calculated. Not only the properties of the polymer compound but also a result of the calculation is shown in Table 5.

[Example 25]

300 parts ion exchange water were put into a separable flask (made by SUS316), having a stirring device and a condenser, whose capacity was 5L, and were heated to the boiling point (100°C) of the system while being stirred.

Next, 720 parts of 80% acrylic acid aqueous solution which functioned as carboxyl group containing monomer, 106.7 parts of 15% sodium persulfate aqueous solution which functioned as the polymerizing initiator, 182.9 parts sodium hydrogensulfite, 126.5 parts ion exchange water, and 600 parts of 48% sodium hydrate aqueous solution which functioned as neutralizing agent were separately dropped in the separable flask through respective dropping holes taking 120 minutes. While dropping, the reaction temperature was kept being the boiling point of the system. After dropping, the temperature was kept for 30 minutes. The number average molecular weight, the polydispersity, the acid number, and the clay dispersion force of the polymer (polymer compound) in the aqueous solution of a polymer that had been obtained in this manner were measured. As a result, the number average molecular weight was 5200, and the polydispersity was 11.8, the acid value was 8.7, and the clay dispersion force was 0.51.

Further, the obtained aqueous solution of a polymer was picked so as to be 21 parts as measured in the form of solids, and was diluted with the ion exchange water so as to be 5250 parts, so that a granulation treatment agent for iron and steel making (A6) according to the present invention was obtained.

Thereafter, the granulation treatment agent for iron and steel making (A6) was used instead of the granulation treatment agent for iron and steel making (A1) used in Example 20. Other than this, the same operation as in Example 20 was performed so as to perform the granulation. The obtained pseudo-particles were classified using a sieve, so that GI index of the pseudo-particle whose particle diameter after the granulation was not more than 0.25mm was calculated. Not only the properties of the polymer compound but also a result of the calculation is shown in Table 5.

[Comparative Example 5]

Granulation was carried out as in Example 24, but, instead of the granulation treatment agent for iron and steel making (A5) of Example 24 utilized for comparison was a granulation treatment agent for iron and steel making (I) adjusted such that sodium polyacrylate having a number average molecular weight of 21000, and a polydispersity of 7.57 was obtained so as to be 21 parts as measured in the form of solids, and the obtained sodium polyacrylate was diluted by ion exchange water so as to be 5250 parts. The obtained pseudo-particles were classified using a sieve as in Example 20 to find GI index of pseudo-particles having a particle diameter of not more than 0.25mm after granulation. The GI index was 87.2. The clay dispersion force and acid value of the sodium polyacrylate was 0.32 and 10.8mmol/g, respectively. This result is shown in Table 5 with the properties of the sodium polyacrylate.

[Comparative Example 6]

Granulation was carried out as in Example 24, but, instead of the granulation treatment agent for iron and steel making (A5) of Example 24 utilized for comparison was a granulation treatment agent for iron and steel making (II) adjusted such that sodium salt of acrylic acid-maleic acid copolymer (a mixing rate of raw materials of acrylic acid to maleic acid; 50:50) was obtained so as to be 21 parts as measured in the form of solids, and the obtained sodium salt was diluted by ion exchange water so as to be 5250 parts. The obtained pseudo-particles were classified using a sieve as in Example 20 to find GI index of pseudo-particles having a particle diameter of not more than 0.25mm after

granulation. The GI index was 88.1. The utilized sodium salt of an acrylic acid-maleic acid copolymer had a number average molecular weight of 7400, a polydispersity of 13.5, and a clay dispersion force of 0.29. This result is shown in Table 5.

[Comparative Example 7 (Conventional Example)]

Granulation was carried out as in Example 24, but, instead of 5250 parts of the granulation treatment agent for iron and steel making (A5) of Example 24 utilized for comparison was a granulation treatment agent for iron and steel making (III) obtained from combined 1400 parts of burnt lime and 5250 parts of water. The obtained pseudo-particles were classified using a sieve as in Example 20 to measure GI index of pseudo-particles having a particle diameter of not more than 0.25mm after granulation. The GI index was 76.2. This result is shown in Table 5.

[Comparative Example 8]

Granulation was carried out as in Example 24, but, instead of the granulation treatment agent for iron and steel making (A5) of Example 24 utilized for comparison was a granulation treatment agent for iron and steel making (IV) adjusted such that sodium salt of acrylic acid-maleic acid copolymer (a mixing rate of raw materials of acrylic acid to maleic acid; 70:30) was obtained so as to be 21 parts as measured in the form of solids, and the obtained sodium salt was diluted by ion exchange water so as to be 5250 parts. The obtained pseudo-particles were classified using a sieve as in Example 20 to find GI index of pseudo-particles having a particle diameter of not more than 0.25mm after granulation. The GI index was 88.4. The utilized sodium salt of acrylic acid-maleic acid copolymer had a number average molecular weight of 3000, a polydispersity of 16.5, and a clay dispersion force of 0.44. This result is shown in Table 5.

TABLE 5

| | NUMBER AVERAGE MOLECULAR WEIGHT | POLYDISPERSITY | CLAY DISPERSION FORCE | ACID VALUE (mmol/g) | GI INDEX |
|---|---|---|---|---|---|
| EXAMPLE 20 | 2100 | 2.93 | 1.16 | 11.2 | 95.9 |
| EXAMPLE 21 | 2900 | 4.21 | 1.30 | 11.1 | 95.2 |
| EXAMPLE 22 | 1900 | 3.31 | 1.11 | ----- | 94.7 |
| EXAMPLE 23 | 1200 | 4.94 | 0.98 | ----- | 93.8 |
| EXAMPLE 24 | 4900 | 9.84 | 0.65 | 10.7 | 92.5 |
| EXAMPLE 25 | 5200 | 11.8 | 0.51 | 8.7 | 90.6 |
| COMPARATIVE EXAMPLE 5 | 21000 | 7.57 | 0.32 | 10.8 | 87.2 |
| COMPARATIVE EXAMPLE 6 | 7400 | 13.5 | 0.29 | ----- | 88.1 |
| COMPARATIVE EXAMPLE 7 (COMVENTIONAL EXAMPLE) | ----- | ----- | ----- | ----- | 76.2 |
| COMPARATIVE EXAMPLE 8 | 3000 | 16.5 | 0.44 | ----- | 88.4 |

As apparent from the result shown in Table 5, it is seen that the use of a small quantity of granulation treatment agent for iron and steel making including a polymer compound according to Embodiment 2 of the present invention can significantly increase GI index, i.e. a pseudo-granulating property of iron ore.

Also, it is estimated from this result that the use of a small quantity of granulation treatment agent for iron and steel making including a polymer compound according to Embodiment 2 of the present invention can increase a productivity, product yield, and a sinter strength of sinter made from sintered pseudo-particles. The sinter of a low sinter strength is likely to cause fine particles, so that the return fine of the ore is high and hence the product yield and the

productivity are decreased.

[Example 26]

1698 parts of ion exchange water added in a glass reaction vessel including a thermometer, a stirring device, a dropping funnel, a nitrogen conduit, and a reflux condenser was purged with nitrogen inside the reaction vessel while stirring and heated up to 80°C under a nitrogenous atmosphere. Meanwhile, methoxypolyethylene glycol monomethacrylic ester (average number of addition moles of ethylene oxide = 25) as a monomer containing a polyalkylene glycol chain, 332 parts of methacrylic acid as a monomer containing acid groups, and 500 parts of ion exchange water were blended. Further, 16.7 parts of mercaptopropionic acid as a chain transfer agent was blended uniformly in the mixture to prepare a monomer-mixture-aqueous solution.

Next, the monomer-mixture-aqueous solution and 10% ammonium persulfate aqueous solution as a polymerization initiator were added to the dropping funnel, and the monomer-mixture-aqueous solution and 184 parts of 10% ammonium persulfate aqueous solution were dropped to the ion exchange water inside the reaction vessel for four hours. After dropping, 46 parts of 10% ammonium persulfate aqueous solution was further dropped to the reaction mixture inside the reaction vessel for one hour. Thereafter, the reaction mixture inside the reaction vessel was continuously maintained at 80°C for one hour to complete a polymerization reaction.

Then, the reaction mixture was neutralized by 30% sodium hydroxide aqueous solution to obtain aqueous solution of a polymer (a1) including a polymer compound (a) described in Embodiment 3 and having a weight average molecular weight of 23800 and 43.2% concentration of nonvolatile solids. Then, 5415 parts of water was added to the obtained 85 parts of aqueous solution of a polymer (a1). The mixture was stirred well to obtain 5500 parts of aqueous solution of a polymer (a2) as a treatment agent. Meanwhile, a raw material for sinter (material for iron and steel making) having a composition shown in Table 1 was prepared.

7000 parts of the above raw material for sinter was put into a drum mixer so as to be subjected to preliminary stir performed for one minute at a speed of $24min^{-1}$ for a minute. Thereafter, 5250 parts of the aqueous solution of a polymer (a2) that previously had been prepared was sprayed on the raw material for sinter using an atomizer for approximately 1.5 minutes. A ratio of polymer compound in the raw material for sinter, i.e. a ratio of polymer compound (a) shown in Embodiment 3 in the raw material for sinter was 0.05%. After spraying, granulating operation was carried out by stirring for three minutes at the same rotation speed. Further, separately from this, the same operation was carried out in the aqueous solution of a polymer (a2) added to the raw material for sinter and further addition of 350 parts of burnt lime (0.5%) to the mixture to conduct a granulating operation with burnt lime combined.

Moisture contained in each of the obtained pseudo-particles was measured. In addition, granulated product was dried for one hour in an over of 80°C, and each of the pseudo-particles was classified using a sieve to find its average particle diameter and GI index. The result is shown in Table 6.

[Example 27]

To a glass reaction vessel including a thermometer, a stirring device, a dropping funnel, a nitrogen conduit, and a reflux condenser, added were 1291 parts of ion exchange water, 1812 parts of polyalkylene glycol monoalkenyl ether monomer in which an average of 50 mols of ethylene oxide was added to 3-methyl-3-butene-1-ol as a monomer containing a polyalkylene glycol chain, and 188 parts of maleic anhydride as an acid group-containing monomer to make a reaction mixture. Then, this reaction mixture was heated to 60°C.

Next, 50 parts of 15% aqueous solution of "NC-32W" (trade name; made by Nippoh Chemicals Co., Ltd, 87% concentration of 2,2'-Azobis-2methylpropioneamidine hydrochrolide) was added to the reaction mixture as polymerizing initiator, and was stirred for 7 hours. After being further heated to 80°C, the resultant was stirred for one hour so as to complete the polymerization reaction.

Thereafter, the reaction mixture was neutralized with 30% sodium hydrate aqueous solution. This brought about aqueous solution of a polymer (a3), in which weight average molecular weight was 26200 and concentration of nonvolatile solids was 55.1%, including a polymer compound (a) described in Embodiment 3. Next, 5433.5 parts water was added to 66.5 parts of the obtained aqueous solution of a polymer (a3) and was sufficiently stirred. This brought about 5500 part aqueous solution of a polymer (a4) as the dispersant.

Thereafter, granulation was carried out in Example 26 by operations similar to Example 26, but the aqueous solution of a polymer (a4) was utilized instead of the aqueous solution of a polymer (a2). Then, moisture contained in each of the obtained pseudo-particles was measured, and its average particle diameter and GI index were calculated. The result is shown in Table 6.

**[Example 28]**

5408.6 parts of water was added to 91.4 parts of "MIGHTY 150" (trade name; made by Kao Corporation, 40.1% concentration of nonvolatile solids), which is a formalin β-naphthalene sulfonic acid as a polymer compound (b) shown in Embodiment 3 and was stirred well. This brought about 5500 parts of aqueous solution of a polymer (b1) as a treatment agent.
Thereafter, granulation was carried out in Example 1 by the same operation as that in Example 26, but the aqueous solution of a polymer (b1) was utilized instead of the aqueous solution of a polymer (a2). Then, moisture contained in each of the obtained pseudo-particles was measured, and its average particle diameter and GI index were calculated. The result is shown in Table 6.

[Example 29]

36.7 parts of "Melment F10" (trade name; made by SKW Inc, powdered product), which is a melamine sulfonate formalin condensate as a polymer compound (c) shown in Embodiment 3, was dissolved in 5463.3 parts of water to obtain 5500 parts of aqueous solution of a polymer (c1) as a treatment agent.
Thereafter, granulation was carried out in Example 1 by the same operation as that in Example 26, but the aqueous solution of a polymer (c1) was utilized instead of the aqueous solution of a polymer (a2). Then, moisture contained in each of the obtained pseudo-particles was measured, and its average particle diameter and GI index were calculated. The result is shown in Table 6.

[Comparative Example 9 (Conventional Example)]

Granulation was carried out in Example 26 by the same operation as that in Example 26, but 5250 parts of water was utilized instead of the aqueous solution of a polymer (a2). More specifically, granulating operation was carried out by adding 5250 parts of water to 70000 parts of the same raw material for sinter as that of Example 26. Then, by the same operation as that in Example 26, moisture contained in the obtained pseudo-particle was measured, and its average particle diameter and GI index were calculated. The result is shown in Table 6.

[Comparative Example 10 (Conventional Example)]

7000 parts of the same raw material for sinter as that in Example 26 was put into a drum mixer with 840 parts of burnt lime so as to be subjected to preliminary stir performed for one minute at a speed of $24min^{-1}$ for a minute. Thereafter, 5600 parts of water was sprayed on the raw material for sinter using a spray for approximately 1.5 minutes while stirring at the same rotation speed. After spraying, granulating operation was carried out by stirring for three minutes at the same rotation speed. Then, by the same operation as that in Example 26, moisture contained in the obtained pseudo-particles was measured, and its average particle diameter and GI index were calculated. The result is shown in Table 6.

[Comparative Example 11]

36.7 parts of carboxymethyl cellulose (etherification degree of 0.9, molecular weight of 22000, powdered product, brand name "CMC-2260") was dissolved in 5463.3 parts of water to obtain 5500 parts of aqueous solution of a polymer (x1 as a treatment agent.
Thereafter, the same operation as that in Example 26 was carried out to conduct a granulating operation with burnt lime combined, but the aqueous solution of a polymer (x1) was utilized instead of the aqueous solution of a polymer (a2) in Example 1, and the aqueous solution of a polymer (x1) and burnt lime were utilized with the raw material for sinter. Then, moisture contained in the obtained pseudo-particles was measured, and its average particle diameter and GI index were calculated. The result is shown in Table 6.

TABLE 6

| | POLYMER COMPOUND | LIMESTONE (%) | MOISTURE CONTENT (%) | AVERAGE PARTICLE DIAMETER (mm) | GI INDEX |
|---|---|---|---|---|---|
| EXAMPLE 26 | POLYMER AQUEOUS SOLUTION (a) | 0.0 | 7.0 | 3.34 | 70.0 |
| | | 0.5 | 6.9 | 3.08 | 62.3 |
| EXAMPLE 27 | POLYMER AQUEOUS SOLUTION (a) | 0.0 | 6.9 | 3.18 | 65.4 |
| | | 0.5 | 6.9 | 3.10 | 63.6 |
| EXAMPLE 28 | MIGHTY 150 | 0.0 | 7.1 | 3.51 | 81.3 |
| | | 0.5 | 6.9 | 3.14 | 61.2 |
| EXAMPLE 29 | MELMENT F10 | 0.0 | 7.1 | 3.60 | 82.1 |
| | | 0.5 | 7.0 | 3.22 | 63.3 |
| COMPARATIVE EXAMPLE 9 (CONVENTIONAL EXAMPLE) | ----- | 0.0 | 7.0 | 2.67 | 39.8 |
| COMPARATIVE EXAMPLE 10 (CONVENTIONAL EXAMPLE) | ----- | 1.2 | 6.7 | 2.85 | 57.8 |
| COMPARATIVE EXAMPLE 11 | CMC-2260 | 0.5 | 7.0 | 2.60 | 37.1 |

As apparent from the result shown in Table 6, the use of a small quantity of granulation treatment agent for iron and steel making according to Embodiment 3 of the present invention can significantly increase an average particle diameter of pseudo-particles and GI index. Further, even in case of combining burnt lime, it showed a stable pseudo-granulating property in which small affect was caused by the burnt lime. Therefore, it was seen that the granulation treatment agent for iron and steel making exerts excellent effects in pseudo-granulation of the raw material for sinter.

Also, it is estimated from this result that the use of a small quantity of granulation treatment agent for iron and steel making including a polymer compound according to Embodiment 3 of the present invention can increase a productivity, product yield, and a sinter strength of sinter made from sintered pseudo-particles. The sinter of a low sinter strength is likely to cause fine particles, so that the return fine of the ore is high and hence the product yield and the productivity are decreased.

[Example 30]

805.5 parts of ion exchange water, in a separable flask (SUS316 product) with a mixer and a capacitor, was heated up to the boiling point of the system while stirring the water. Then, 2126.1 parts of 80% acrylic acid aqueous solution as a carboxyl group containing monomer, 112.4 parts of 15% sodium persulfate aqueous solution as a polymerization initiator, and 88.5 parts of 45% sodium hypophosphite monohydrate aqueous solution were dropped into the separable flask. The 80% acrylic acid aqueous solution, 15% sodium persulfate aqueous solution, and 45% sodium hypophosphite monohydrate aqueous solution were respectively dropped into the flask from separate taps. The dropping of the 80% acrylic acid aqueous solution was performed for 180 minutes. The dropping of the 15% sodium persulfate aqueous solution was performed for 185 minutes. The dropping of the 45% sodium hypophosphite monohydrate aqueous solution was performed for 180 minutes. In the period of the dropping, the reaction temperature was held at the boiling point of the system. After the dropping, the aqueous solution was kept in the temperature above for another

five minutes, then 1889.0 parts of 48% sodium hydroxide aqueous solution as a neutralizing agent was dropped for 60 minutes so as to obtain an aqueous solution of a polymer (i). The obtained aqueous solution of a polymer (i) was measured for the number average molecular weight of the polymer (polymer compound (i)) and the polydispersity. The measurement results in 2900 for the number average molecular weight, and 12200 for the weight average molecular weight, and 4.21 for the polydispersity.

Next, 21 parts as measured in the form of solids of the aqueous solution of a polymer (i) was taken to obtain a fine particle adjuvant (i) by diluting the aqueous solution with distilled water to be 5250 parts. Meanwhile, a raw material for sinter (a raw material for iron and steel making) having the composition shown in Table 1 was prepared.

70000 parts of the raw material for sinter above and 1400 parts of "WHITONP - 10" (trade name; heavy calcium carbonate provided by SHIRAISHI KOGYO CO. LTD.) as fine particles were put in a drum mixer so as to be subjected to preliminary stir for a minute with a rotational speed of $24min^{-1}$ for a minute. Thereafter, while stirring with the same rotational speed, 5250 parts of the prepared fine particle adjuvant (i) was sprayed to the raw material for sinter for approximately 1.5 minutes using an atomizer. The proportion of the polymer compound (i) to the raw material for sinter was 0.03%, and the proportion of the fine particles to the raw material for sinter was 2%. After the spraying, the stirring was carried on for another 2.5 minutes with the same rotational speed for performing granulation treatment.

The obtained pseudo-particles were measured for the moisture content. Further, after drying the pseudo-particles at 80°C for an hour, the average particle diameter and the GI index were found for the obtained pseudo-particles by classifying using a sieve. Also, ζ potential of the fine particles in the case of simultaneously using the fine particle adjuvant (i) was measured. The results of these measurements are shown in Table 7.

[Example 31]

The granulation treatment was performed with the same operation as that described in Example 30 except for the fine particles. The present example uses 1400 parts of "KAOFINE" (trade name; kaolin clay provided by Thiele Kaolin Company) instead of the 1400 parts of "WHITONP-10". The proportion of the polymer compound (i) to the raw material for sinter was 0.03%, and the proportion of the fine particles to the raw material for sinter was 2% also in the present example.

The obtained pseudo-particles were measured for the moisture content. Further, the average particle diameter and the GI index were found for the obtained pseudo-particles by classifying using a sieve as with Example 30. The results are shown in Table 7. Also, ζ potential of the fine particles in the case of simultaneously using the fine particle adjuvant (i) was measured. The result of the measurement is shown in Table 7.

[Example 32]

The granulation treatment was performed with the same operation as that described in Example 30 except for the fine particles. The present example uses 1400 parts of chemilite iron powder (analytical value; iron oxide 99.6weight%, manganese oxide 0.4weight%) instead of the 1400 parts of "WHITONP - 10". The proportion of the polymer compound (i) to the raw material for sinter was 0.03%, and the proportion of the fine particles to the raw material for sinter was 2% also in the present example.

The obtained pseudo-particles were measured for the moisture content. Further, the average particle diameter and the GI index were found for the obtained pseudo-particles by classifying using a sieve as with Example 30. Also, ζ potential of the fine particles in the case of simultaneously using the fine particle adjuvant (i) was measured. The results of these measurements are shown in Table 7.

[Example 33]

1400 parts of ion exchange water, in a separable flask (SUS316 product) with a mixer and a capacitor, was heated up to the boiling point of the system while stirring the water. Then, 578.5 parts of 80% acrylic acid aqueous solution as a carboxyl group containing monomer, and 62.5 parts of 15% ammonium persulfate aqueous solution as a polymerization initiator were respectively dropped into the separable flask from separate taps for 2 hours. In the period of the dropping, the reaction temperature was held at the boiling point of the system. After the dropping, the aqueous solution was kept in the temperature above for another 120 minutes, then 353 parts of 48% sodium hydroxide aqueous solution as a neutralizing agent was dropped for 60 minutes so as to obtain an aqueous solution of a polymer (ii). The obtained aqueous solution of a polymer (ii) was measured/calculated for the number average molecular weight of the polymer (polymer compound (ii)) and the polydispersity. The measurement results in 4900 for the number average molecular weight, and 48200 for the weight average molecular weight, and 9.84 for the polydispersity.

Next, 21 parts as measured in the form of solids of the aqueous solution of a polymer (ii) was taken to prepare a fine particle adjuvant (ii) by diluting the aqueous solution with distilled water to be 5250 parts. Next, granulation

treatment was performed with the same operation as that described in Example 30 except for the 5250 parts of fine particle adjuvant (ii) which was used instead of the 5250 parts of fine particle adjuvant (i). The proportion of the polymer compound (ii) to the raw material for sinter was 0.03%, and the proportion of the fine particles to the raw material for sinter was 2%.

The obtained pseudo-particles were measured for the moisture content. Further, the average particle diameter and the GI index were found for the obtained pseudo-particles by classifying using a sieve as with Example 30. Also, ζ potential of the fine particles in the case of simultaneously using the fine particle adjuvant (ii) was measured. The results of these measurements are shown in Table 7.

[Example 34]

The granulation treatment was performed with the same operation as that described in Example 33 except for the fine particles. The present example uses 1400 parts of "WHITONP - 50" (trade name; heavy calcium carbonate provided by SHIRAISHI KOGYO CO. LTD.) instead of the 1400 parts of "WHITONP - 10". The proportion of the polymer compound (ii) to the raw material for sinter was 0.03%, and the proportion of the fine particles to the raw material for sinter was 2% also in the present example.

The obtained pseudo-particles were measured for the moisture content. Further, the average particle diameter and the GI index were found for the obtained pseudo-particles after dried by classifying using a sieve as with Example 30. Also, ζ potential of the fine particles in the case of simultaneously using the fine particle adjuvant (ii) was measured. The results of these measurements are shown in Table 7.

[Example 35]

196 parts of maleic anhydride, 110.7 parts of ion exchange water and 333.3 parts of 48% sodium hydroxide aqueous solution, in a separable flask (SUS316 product) with a mixer and a capacitor, were heated up to the boiling point of the system while stirring the water. Then, 560.78 parts of 60% acrylic acid aqueous solution as a carboxyl group containing monomer, 200 parts of 10% sodium persulfate aqueous solution as a polymerization initiator, and 6.65 parts of 35% hydrogen peroxide aqueous solution were dropped into the separable flask. The 60% acrylic acid aqueous solution, the 10% sodium persulfate aqueous solution, and the 35% hydrogen peroxide aqueous solution were respectively dropped into the flask from separate taps The dropping of the 60% acrylic acid aqueous solution and the 10% sodium persulfate aqueous solution was performed for 150 minutes. The dropping of the 35% hydrogen peroxide aqueous solution was performed for 120 minutes. Thereafter, 48% sodium hydroxide aqueous solution was added to be mixed with the reaction mixture so that pH of the reaction mixture was 8.0 so as to obtain an aqueous solution of a polymer (iii). The obtained aqueous solution of a polymer (iii) was measured for the number average molecular weight of the polymer (polymer compound (iii)) and the polydispersity. The measurement results in 4000 for the number average molecular weight, and 46400 for the weight average molecular weight, and 11.6 for the polydispersity.

Next, 21 parts as measured in the form of solids of the aqueous solution of a polymer (iii) was taken to prepare a fine particle adjuvant (iii) by diluting the aqueous solution with distilled water to be 5250 parts. Next, granulation treatment was performed with the same operation as that described in Example 30 except for the 5250 parts of fine particle adjuvant (iii) which was used instead of the 5250 parts of fine particle adjuvant (i). The proportion of the polymer compound (iii) to the raw material for sinter was 0.03%, and the proportion of the fine particles to the raw material for sinter was 2%.

The obtained pseudo-particles were measured for the moisture content. Further, the average particle diameter and the GI index were found for the obtained pseudo-particles after dried by classifying using a sieve as with Example 30. Also, ζ potential of the fine particles in the case of simultaneously using the fine particle adjuvant (iii) was measured. The results of these measurements are shown in Table 7.

[Example 36]

920 parts of ion exchange water, in a separable flask (SUS316 product) with a mixer and a capacitor, was heated up to the boiling point of the system while stirring the water. Then, 630.3 parts of 80% acrylic acid aqueous solution as a carboxyl group containing monomer, and 27.3 parts of 15% ammonium persulfate aqueous solution as a polymerization initiator were respectively dropped into the separable flask from separate taps for 80 minutes. In the period of the dropping, the reaction temperature was held at the boiling point of the system. After the dropping, the aqueous solution was kept in the temperature above for another 60 minutes, then 565.5 parts of 48% sodium hydroxide aqueous solution as a neutralizing agent was dropped for 60 minutes so as to obtain an aqueous solution of a polymer (iv). The obtained aqueous solution of a polymer (iv) was measured/calculated for the number average molecular

weight of the polymer (polymer compound (iv)) and the polydispersity. The measurement results in 11000 for the number average molecular weight, and 179300 for the weight average molecular weight, and 16.3 for the polydispersity.

Next, 21 parts as measured in the form of solids of the aqueous solution of a polymer (iv) was taken to prepare a fine particle adjuvant (iv) by diluting the aqueous solution with distilled water to be 5250 parts. Next, granulation treatment was performed with the same operation as that described in Example 30 except for the 5250 parts of fine particle adjuvant (iv) which was used instead of the 5250 parts of fine particle adjuvant (i). The proportion of the polymer compound (iv) to the raw material for sinter was 0.03%, and the proportion of the fine particles to the raw material for sinter was 2%.

The obtained pseudo-particles were measured for the moisture content. Further, the average particle diameter and the GI index were found for the obtained pseudo-particles after dried by classifying using a sieve as with Example 30. Also, ζ potential of the fine particles in the case of simultaneously using the fine particle adjuvant (iv) was measured. The results of these measurements are shown in Table 7.

[Example 37]

Granulation treatment was performed with the same operation as that described in Example 31 except for the 5250 parts of distilled water which was used instead of the 5250 parts of fine particle adjuvant (i). Namely, in the present example, the granulation treatment was performed by using only fine particles ("KAOFINE") as the granulation treatment agent for iron and steel making instead of simultaneously using fine particles ("KAOFINE") and the fine particle adjuvant (i).

The obtained pseudo-particles were measured for the moisture content. Further, the average particle diameter and the GI index were found for the obtained pseudo-particles after dried by classifying using a sieve as with Example 30. Also, ζ potential of the fine particles was measured. The results of these measurements are shown in Table 7.

[Comparative Example 12 (Conventional Example)]

Granulation treatment was performed with the same operation as that described in Example 30 except for the 5250 parts of distilled water which was singly used instead of the simultaneous use of the 5250 parts of fine particle adjuvant (i) and the 1400 parts of "WHITONP - 10".

The obtained pseudo-particles were measured for the moisture content. Further, the average particle diameter and the GI index were found for the obtained pseudo-particles after dried by classifying using a sieve as with Example 30. Also, ζ potential of the fine particles was measured. The results of these measurements are shown in Table 7.

[Comparative Example 13]

Granulation treatment was performed with the same operation as that described in Example 32 except for the 5250 parts of distilled water which was used instead of the 5250 parts of fine particle adjuvant (i). Namely, in the present example, the granulation treatment was performed by using only fine particles ("WHITONP - 10") as the granulation treatment agent for iron and steel making instead of simultaneously using fine particles ("WHITONP-10") and the fine particle adjuvant (i).

The obtained pseudo-particles were measured for the moisture content. Further, the average particle diameter and the GI index were found for the obtained pseudo-particles after dried by classifying using a sieve as with Example 30. Also, ζ potential of the fine particles was measured. The results of these measurements are shown in Table 7.

[Comparative Example 14]

Granulation treatment was performed with the same operation as that described in Example 32 except for the 5250 parts of distilled water which was used instead of the 5250 parts of fine particle adjuvant (i). Namely, in the present example, the granulation treatment was performed by using only fine particles ("chemilite iron powder") as the granulation treatment agent for iron and steel making instead of simultaneously using fine particles ("chemilite iron powder" described in Example 32) and the fine particle adjuvant (i).

The obtained pseudo-particles were measured for the moisture content. Further, the average particle diameter and the GI index were found for the obtained pseudo-particles after dried by classifying using a sieve as with Example 30. Also, ζ potential of the fine particles was measured. The results of these measurements are shown in Table 7.

[Comparative Example 15]

21 parts of sodium acrylate was diluted with distilled water to be 5250 parts so as to prepare a comparative

fine particle adjuvant (i). Next, granulation treatment was performed with the same operation as that described in Example 30 except for the 5250 parts of the comparative fine particle adjuvant (i) which was used instead of the 5250 parts of fine particle adjuvant (i). The proportion of the polymer compound to the raw material for sinter was 0%, and the proportion of the fine particles to the raw material for sinter was 2%.

The obtained pseudo-particles were measured for the moisture content. Further, the average particle diameter and the GI index were found for the obtained pseudo-particles by classifying using a sieve as with Example 30. Also, ζ potential of the fine particles in the case of simultaneously using the comparative fine particle adjuvant (i) was measured. The results of these measurements are shown in Table 7.

**TABLE 7**

| | GI INDEX | MOISTURE (%) | FINE PARTICLE ADJUVANT | FINE PARTICLES | AVERAGE FINE PARTICLE DIAMETER (μm) | ζ POTENTIAL (mV) | pH of TESTING MIXTURE |
|---|---|---|---|---|---|---|---|
| EXAMPLE 30 | 97.5 | 6.8 | FINE PARTICLE ADJUVANT(1) | WHITON P-10 | 3.0 | -82 | 8.64 |
| EXAMPLE 31 | 97.0 | 6.8 | FINE PARTICLE ADJUVANT(1) | KAOFINE | 2.7 | -80 | 8.64 |
| EXAMPLE 32 | 97.6 | 6.9 | FINE PARTICLE ADJUVANT(1) | CHEMILITE IRON POWDER | 2.5 | -78 | 8.64 |
| EXAMPLE 33 | 96.3 | 6.8 | FINE PARTICLE ADJUVANT(2) | WHITON P-10 | 3.0 | -74 | 9.09 |
| EXAMPLE 34 | 95.7 | 6.9 | FINE PARTICLE ADJUVANT(2) | WHITON P-50 | 15 | -71 | 9.09 |
| EXAMPLE 35 | 95.9 | 6.9 | FINE PARTICLE ADJUVANT(3) | WHITON P-10 | 3.0 | -73 | 9.29 |
| EXAMPLE 36 | 95.3 | 6.9 | FINE PARTICLE ADJUVANT(4) | WHITON P-10 | 3.0 | -66 | 9.31 |
| EXAMPLE 37 | 88.1 | 7.0 | NOT USED | KAOFINE | 2.7 | -59 | 9.18 |
| COMPARATIVE EXAMPLE 12 (CONVENTIONAL EXAMPLE) | 75.7 | 7.0 | NOT USED | NOT ADDED (EXCEPT FOR FINE PARTICLES IN THE RAW MATERIAL FOR SINTER) | --- | -37 | 9.18 |
| COMPARATIVE EXAMPLE 13 | 84.5 | 7.1 | NOT USED | WHITON P-10 | 3.0 | -42 | 9.18 |
| COMPARATIVE EXAMPLE 14 | 80.1 | 6.9 | NOT USED | CHEMILITE IRON POWDER | 2.7 | -49 | 9.18 |
| COMPARATIVE EXAMPLE 15 | 82.2 | 6.9 | COMPARATIVE FINE PARTICLE ADJUVANT(1) | WHITON P-10 | 3.0 | -48 | 8.33. |

The results shown in Table 7 revealed that, in the present invention, the use of fine particles having ζ potential of not more than -55mV in the foregoing ζ potential measurement as a binder can greatly increase the GI index, i.e., the granulation property (pseudo-granulation property) of the iron ore. Further, in the present invention, it is possible to easily adjust ζ potential of the fine particles to be not more than - 55mV in the foregoing ζ potential measurement by simultaneously using fine particles and a fine particle adjuvant including a polymer compound, thereby greatly increasing the granulation property (pseudo-granulation property) of the raw materials for iron and steel making (raw materials for sinter).

Also, it is estimated from this result that, in the present invention, it is possible to increase productivity, product yield, and sinter strength of sinter made from sintered pseudo-particles. The sinter in low sinter strength is likely to cause fine particles, so that the return fine of the ore is high and hence the product yield and the productivity are decreased.

[Example 38]

A raw material for sinter (raw material for iron and steel making) having the constitution shown in Table 1 was prepared.

1400 parts of heavy calcium carbonate (fine particles (1)) having average particle diameter of 30 μm (fine particles of the present invention) was added to 70000 parts of the raw material for sinter above, and then they were put into a drum mixer for preliminary stir for a minute with a rotational speed of $24min^{-1}$ for a minute so as to obtain a granulation treatment composition including the raw material for sinter. Thereafter, while stirring the composition with the same rotational speed, 5250 parts of the aqueous solution of a polymer (I) (polymer compound of the present invention) was sprayed (added) to the composition (raw material for sinter) for approximately 1.5 minutes using an atomizer. The aqueous solution of a polymer included sodium polyacrylate of 10000 weight average molecular weight as a nonvolatile content, which was previously adjusted to be 0.4%. The proportion of the sodium polyacrylate to the raw material for sinter was 0.03%. After the spraying of the sodium polyacrylate aqueous solution, the stirring for the composition including the sodium polyacrylate aqueous solution was carried on for another 3 minutes with the same rotational speed for performing granulation treatment (pseudo-granulation).

The obtained pseudo-particles were measured for the moisture content. Further, after drying the pseudo-particles at 80°C for an hour, the GI index were found for the obtained pseudo-particles by classifying using a sieve. Also, the cohesive force evaluated value was found according to the cohesive force test. The results of these measurement/test are shown in Table 8.

[Comparative Example 16 (Conventional Example)]

Granulation treatment was performed with the same operation as that described in Example 38 except for 840 parts of burnt lime having average particle diameter of 45μm which was used instead of the 1400 parts of heavy calcium carbonate as fine particles. Also, 5600 parts of water was used instead of the 5250 parts of aqueous solution of a polymer (I), which was previously adjusted to be 0.4% for the nonvolatile content. The obtained pseudo-particles were measured for the moisture content. Further, the GI index was found for the obtained pseudo-particles by classifying using a sieve as with Example 38. Also, the cohesive force evaluated value was found according to the cohesive force test. The results of these measurement/test are shown in Table 8.

TABLE 8

| | | EXAMPLE 38 | COMPARATIVE EXAMPLE 16 (CONVENTIONAL EXAMPLE) |
|---|---|---|---|
| GRANULATION TREATMENT AGENT FOR IRON AND STEEL MAKING | POLYMER COMPOUND | POLYMER AQUEOUS SOLUTION(1) | --- |
| | FINE PARTICLES | HEAVY CALCIUM CARBONATE | BURNT LIME |
| AVERAGE PARTICLE DIAMETER OF FINE PARTICLES (μm) | | 30 | 45 |
| COHESIVE FORCE EVALUATED VALUE | | 1.51 | 1.16 |
| MOISTURE CONTENT(%) | | 6.9 | 7.0 |

TABLE 8 (continued)

| | EXAMPLE 38 | COMPARATIVE EXAMPLE 16 (CONVENTIONAL EXAMPLE) |
|---|---|---|
| GI INDEX | 95.8 | 73.7 |

[Example 39]

The pseudo-particles obtained in Example 38 were sintered by performing a pot test of 50kg scale so as to obtain the sinter. A condition of the test was such that: the sintering pot was 300mm in diameter, 600mm in height, and 550mm in a layer thickness, and its suctioning negative pressure was 9.8Pa (constant). The rate of output, the yield, and the sinter strength of the obtained sinter were measured. The results were shown in Table 9.

[Comparative Example 17 (Conventional Example)]

The pseudo-particles obtained in Example 16 were sintered by performing a pot test of 50kg scale so as to obtain the sinter. A condition of the test was such that: the sintering pot was 300mm in diameter, 600mm in height, and 550mm in a layer thickness, and its suctioning negative pressure was 9.8Pa (constant). The rate of output, the yield, and the sinter strength of the obtained sinter were measured. The results were shown in Table 9.

TABLE 9

| | EXAMPLE 39 | COMPARATIVE EXAMPLE 17 (CONVENTIONAL EXAMPLE) |
|---|---|---|
| GRANULATION TREATMENT AGENT FOR IRON AND STEEL MAKING | POLYMER AQUEOUS SOLUTION (1)/ HEAVY CALCIUM CARBONATE | BURNT LIME |
| SINTERING TIME (min) | 31.5 | 32.8 |
| PRODUCTIVITY (t/day/$m^2$) | 29.7 | 26.7 |
| PRODUCT YIELD (%) | 80.5 | 76.4 |
| SHATTER INDEX (%) | 84.0 | 81.8 |

The results shown in Table 9 revealed that, in the present invention, it is possible to increase productivity, product yield, and sinter strength of sinter made from sintered pseudo-particles. The sinter in low sinter strength is likely to cause fine particles, so that the return fine of the ore is high and hence the product yield and the productivity are decreased. However, the results above have shown that the present invention can solve the problems.

Note that, the embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

INDUSTRIAL APPLICATION OF THE PRESENT INVENTION

With the method of carrying out the granulation treatment on raw materials for iron and steel making and the granulation treatment agent for iron and steel making according to the present invention, on the occasion of a granulation treatment (pseudo-granulation or pelletization) on the raw materials for iron and steel making (sintered materials or pellet materials) including iron ore in a form of fine particles, it is possible to obtain excellent effects of adhering fine particles around nuclear particles so as to facilitate the formation of pseudo-particles having good permeability, and to increase the strength of granulated product so as to reduce the disintegration of the pseudo-particles in a sintering bed. This improves the permeability of the sintering layer on the occasion of sintering, and increases the productivity of a sintering machine. The above-mentioned polymer compounds have excellent effects of adhering fine particles around nuclear particles on the occasion of a granulation treatment (pseudo-granulation or pelletization) on the raw materials for iron and steel making (sintered materials or pellet materials) including iron ore in a form of fine particles,

thereby increasing the productivity of a sintering machine. The method of carrying out the granulation treatment on raw materials for iron and steel making and the granulation treatment agent for iron and steel making according to the present invention are suitably used on the occasion of a granulation treatment for pseudo-granulation or pelletization on the raw materials for iron and steel making at low cost.

## Claims

1. A method of carrying out a granulation treatment on raw materials for iron and steel making, **characterized by** comprising the steps of:

    compounding a composition for granulation treatment containing the raw materials for iron and steel making so that when the composition for granulation treatment is dispersed in water at a predetermined proportion, an amount of fine particles floating in water after a predetermined period of time has elapsed is not less than 2weight% of the solids of the composition used for granulation treatment; and
    carrying out a granulation treatment on the composition for granulation treatment.

2. A method of carrying out a granulation treatment on raw materials for iron and steel making, **characterized by** comprising the steps of:

    adding a dispersant to a composition for granulation treatment containing the raw materials for iron and steel making so that when the composition for granulation treatment is dispersed in water at a predetermined proportion, an amount of fine particles floating in water after a predetermined period of time has elapsed is not less than 2weight% of the solids of the composition used for granulation treatment; and
    carrying out a granulation treatment on the composition for granulation treatment.

3. The method of carrying out the granulation treatment on raw materials as set forth in claim 2, **characterized in that** the dispersant is a polymer compound including an acid group and/or its salts.

4. A method of carrying out a granulation treatment on raw materials for iron and steel making, **characterized by** comprising the steps of:

    adding fine particles not more than 200µm in average diameter to a composition for granulation treatment containing the raw materials for iron and steel making so that when the composition for granulation treatment is dispersed in water at a predetermined proportion, an amount of fine particles floating in water after a predetermined period of time has elapsed is not less than 2weight% of the solids of the composition used for granulation treatment; and
    carrying out a granulation treatment on the composition for granulation treatment.

5. The method of carrying out the granulation treatment on raw materials as set forth in claim 4, **characterized in that** the fine particles are at least one type of fine particles selected from the group consisting of iron ore, Flux for steel, limestone, kaolin clay, bentonite, dust produced in a steel-making plant, fly ash, fumed silica, and anhydrite.

6. A method of carrying out a granulation treatment on raw materials for iron and steel making, **characterized by** comprising the steps of:

    adding fine particles not more than 200µm in average diameter and a dispersant to a composition for granulation treatment containing the raw materials for iron and steel making so that when the composition for granulation treatment is dispersed in water at a predetermined proportion, an amount of fine particles floating in water after a predetermined period of time has elapsed is not less than 2weight% of the solids of the composition used for granulation treatment; and
    carrying out a granulation treatment on the composition for granulation treatment.

7. The method of carrying out the granulation treatment on raw materials as set forth in claim 6, **characterized in that** the dispersant is a polymer compound including an acid group and/or its salts.

8. The method of carrying out the granulation treatment on raw materials as set forth in claim 6, **characterized in that** the fine particles are at least one type of fine particles selected from the group consisting of iron ore, Flux for

steel, limestone, kaolin clay, bentonite, dust produced in a steel-making plant, fly ash, fumed silica, and anhydrite.

**9.** A granulation treatment agent for iron and steel making, which is used for subjecting raw materials for iron and steel making to a granulation treatment, the raw materials including iron ore in a form of fine particles, **characterized by** including a water-soluble polymer compound having clay dispersion force not less than 0.5.

**10.** The granulation treatment agent for iron and steel making as set forth in claim 9, **characterized in that** the polymer compound is at least one type of a compound selected from the group consisting of (i) a polyacrylic acid and (ii) a polyacrylic salt which is a part of or whole of a carboxyl group, which is included in the polyacrylic acid, being neutralized by one of substances selected from the group consisting of sodium, potassium, calcium, and ammonia.

**11.** A method of carrying out a granulation treatment on raw materials for iron and steel making, the raw materials including iron ore in a form of fine particles, **characterized in that** the granulation treatment agent as set forth in claim 9 is added to the raw materials.

**12.** A granulation treatment agent for iron and steel making, which is used for subjecting raw materials for iron and steel making to a granulation treatment, the raw materials including iron ore in a form of fine particles, **characterized by** comprising a polymer compound (I) including a carboxyl group and/or its salts, (II) whose number average molecular weight is within a range of not less than 500 to not more than 20000, and (III) whose polydispersity indicated by an weight average molecular weight/the number average molecular weight is within a range of not less than 1.2 to not more than 12.0.

**13.** The granulation treatment agent for iron and steel making as set forth in claim 12, **characterized in that** the polymer compound is at least one type of a compound selected from the group consisting of (i) a polyacrylic acid and (ii) a polyacrylic salt which is a part of or whole of a carboxyl group, which is included in the polyacrylic acid, being neutralized by one of substances selected from the group consisting of sodium, potassium, calcium, and ammonia.

**14.** A method of carrying out a granulation treatment on raw materials for iron and steel making, the raw materials including iron ore in a form of fine particles, **characterized in that** the granulation treatment agent as set forth in claim 12 is added to the raw materials.

**15.** A granulation treatment agent for iron and steel making, which is used for subjecting raw materials for iron and steel making to a granulation treatment, the raw materials including iron ore in a form of fine particles, **characterized by** comprising a polymer compound selected from at least one type of a compound selected from the group consisting of: a polymer compound including an acid group and a polyalkylene glycol chain; a β-naphthalene sulfonate formalin condensate; a melamine sulfonate formalin condensate; a poly-aromatic amino sulfonic acid; and denatured lignin sulfonate.

**16.** A method of carrying out a granulation treatment on raw materials for iron and steel making, **characterized in that** the granulation treatment agent as set forth in claim 15 is added to the raw materials.

**17.** A granulation treatment agent for iron and steel making, which is used for subjecting raw materials for iron and steel making to a granulation treatment, the raw materials including iron ore in a form of fine particles, **characterized by** comprising a polymer compound including an acid group and a polyalkylene glycol chain.

**18.** The granulation treatment agent for iron and steel making as set forth in claim 17, **characterized in that** the acid group included in the polymer compound is a carboxyl group and/or its salts.

**19.** The granulation treatment agent for iron and steel making as set forth in claim 17, **characterized in that** the polyalkylene glycol chain included in the polymer compound includes a structural unit derived from polyethylene glycol.

**20.** A method of carrying out a granulation treatment on raw materials for iron and steel making, **characterized in that** the granulation treatment agent as set forth in claim 17 is added to the raw materials.

**21.** A method of carrying out a granulation treatment on raw materials for iron and steel making, **characterized in that** fine particles, whose ζ potential is not more than -55mV according to ζ potential test by an electrophoresis light

scattering method, is added to the raw materials.

**22.** The method of carrying out the granulation treatment on raw materials as set forth in claim 21, **characterized in that** an amount of the fine particles added to the raw materials is within a range of not less than 0.01weight% to not more than 30weight%.

**23.** A method of carrying out a granulation treatment on raw materials for iron and steel making, **characterized in that** fine particles and a fine particle adjuvant for adjusting a ζ potential of the fine particles are selected so as to be added to the raw materials, so that the ζ potential is not more than -55mV according to ζ potential test by an electrophoresis light scattering method.

**24.** The method of carrying out the granulation treatment on raw materials as set forth in claim 23, **characterized in that** the fine particle adjuvant includes a polymer compound including an acid group and/or its salts.

**25.** The method of carrying out the granulation treatment on raw materials as set forth in claim 23, **characterized in that** an amount of the fine particles added to the raw materials is within a range of not less than 0.01weight% to not more than 30weight%.

**26.** A method of carrying out a granulation treatment on raw materials for iron and steel making, **characterized in that** a granulation agent for iron and steel making, which includes a polymer compound and whose cohesive force evaluated value acquired by cohesive force test is not less than 1.2, is added to the raw materials.

**27.** The method of carrying out the granulation treatment on raw materials as set forth in claim 26, **characterized in that** the polymer compound is a polymer compound including an acid group and/or its salts.

**28.** A method of carrying out a granulation treatment on raw materials for iron and steel making, the raw materials including iron ore in a form of fine particles, **characterized in that** a polymer compound and fine particles not more than 200μm in average diameter are selected so as to be added to the raw materials, so that a cohesive force evaluated value acquired by a cohesive force test is not less than 1.2.

**29.** The method of carrying out the granulation treatment on raw materials as set forth in claim 28, **characterized in that** the polymer compound is a polymer compound including an acid group and/or its salts.

## INTERNATIONAL SEARCH REPORT

International application No.
PCT/JP02/01507

**A. CLASSIFICATION OF SUBJECT MATTER**
Int.Cl[7] C22B1/16

According to International Patent Classification (IPC) or to both national classification and IPC

**B. FIELDS SEARCHED**

Minimum documentation searched (classification system followed by classification symbols)
Int.Cl[7] C22B1/16

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| E,A | JP 2002-88418 A (Nippon Steel Corp.), 27 March, 2002 (27.03.02), (Family: none) | 1-29 |
| A | JP 2000-178662 A (Daicel Chemical Industries, Ltd.), 27 June, 2000 (27.06.00), (Family: none) | 1-29 |
| A | JP 59-50129 A (Nippon Steel Corp.), 23 March, 1984 (23.03.84), (Family: none) | 1-29 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 June, 2002 (03.06.02) | 18 June, 2002 (18.06.02) |
| Name and mailing address of the ISA/ Japanese Patent Office | Authorized officer |
| Facsimile No. | Telephone No. |

Form PCT/ISA/210 (second sheet) (July 1998)